(19) **Europäisches Patentamt / European Patent Office / Office européen des brevets**

(11) **EP 4 216 644 A1**

(12) **EUROPEAN PATENT APPLICATION**
published in accordance with Art. 153(4) EPC

(43) Date of publication:
**26.07.2023 Bulletin 2023/30**

(21) Application number: **21883358.0**

(22) Date of filing: **22.10.2021**

(51) International Patent Classification (IPC):
*H04W 72/12* (2023.01)   *H04L 5/00* (2006.01)
*H04L 1/18* (2023.01)   *H04B 7/06* (2006.01)
*H04B 7/024* (2017.01)

(52) Cooperative Patent Classification (CPC):
**H04B 7/024; H04B 7/06; H04L 1/18; H04L 5/00; H04W 72/12**

(86) International application number:
**PCT/KR2021/014965**

(87) International publication number:
**WO 2022/086291 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.10.2020  KR 20200137834**

(71) Applicant: Samsung Electronics Co., Ltd.
**Suwon-si, Gyeonggi-do 16677 (KR)**

(72) Inventors:
• **JUNG, Euichang**
  Suwon-si, Gyeonggi-do 16677 (KR)
• **YOON, Suha**
  Suwon-si, Gyeonggi-do 16677 (KR)
• **PARK, Jinhyun**
  Suwon-si, Gyeonggi-do 16677 (KR)
• **JANG, Youngrok**
  Suwon-si, Gyeonggi-do 16677 (KR)

(74) Representative: **Nederlandsch Octrooibureau P.O. Box 29720 2502 LS The Hague (NL)**

(54) **CONTROL INFORMATION TRANSMISSION METHOD AND DEVICE FOR NETWORK COOPERATIVE COMMUNICATION OF WIRELESS COMMUNICATION SYSTEM**

(57)   The present disclosure provides: a method by which a terminal transmits control information to multiple transmission points/panels/nodes/beams for cooperative communication among the multiple transmission points/panels/beams/nodes; and a device. Particularly, the present disclosure relates to a method for transmitting/receiving an uplink channel in a wireless communication system, comprising: receiving configuration information related to PUCCH power control; confirming, on the basis of the configuration information, first information for PUCCH power control associated with a first node, and second information for PUCCH power control associated with a second node; receiving DCI, which is associated with a TPC command, including a first bit field that corresponds to the first information and a second bit field that corresponds to the second information; and determining the transmission power of a PUCCH on the basis of the first information, the second information, and the DCI.

FIG. 20

EP 4 216 644 A1

## Description

### Technical Field

The disclosure relates to a wireless communication system, and more specifically, to a method and apparatus for a terminal to transmit control information to multiple transmission points/panels/beams for cooperative communication between multiple transmission points/panels/beams.

### Background Art

To meet the demand for wireless data traffic having increased since deployment of 4th-Generation (4G) communication systems, efforts have been made to develop an improved 5th-Generation (5G) or pre-5G communication system. Therefore, the 5G or pre-5G communication system is also called a 'Beyond 4G Network' or a 'Post Long-Term Evolution (LTE) System.' The 5G communication system is considered to be implemented in higher frequency (millimeter (mm) Wave) bands, e.g., 60 gigahertz (GHz) bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid frequency shift keying (FSK) and quadrature amplitude modulation (QAM) Modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology," "wired/wireless communication and network infrastructure," "service interface technology," and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

Meanwhile, a method for a terminal to transmit control information to a plurality of transmission points/panels/beams and an apparatus are required for network coordination in a wireless communication system.

### Disclosure of Invention

### Technical Problem

The disclosure provides a method for a terminal to transmit control information to multiple transmission points/panels/nodes/beams for network coordination communication in a wireless communication system.

In addition, the disclosure provides a method for configuring parameters related to power control and determining transmission power of PUCCH so that a terminal can control the transmission power of the PUCCH for each transmission point/panel/beam/node.

In addition, the disclosure provides a method for repeatedly transmitting PDCCHs for each transmission point/panel/beam/node.

The technical problems to be solved in various embodiments of the disclosure are not limited to the above-mentioned technical problems, and other technical problems not mentioned herein will be clearly understood from the following description by those skilled in the art to which the disclosure belongs.

**Solution to Problem**

In order to solve the above problems, in a method for a terminal to transmit an uplink channel in a wireless communication system according to an embodiment of the disclosure, the method includes receiving configuration information related to a physical uplink control channel (PUCCH) power control through a radio resource control (RRC) signaling; identifying first information for the PUCCH power control associated with a first node, and second information for the PUCCH power control associated with a second node, based on the configuration information; receiving downlink control information (DCI), which is associated with a transmit power control (TPC) command and includes a first bit field corresponding to the first information and a second bit field corresponding to the second information; determining transmission power of the PUCCH based on the first information, the second information, and the DCI; and transmitting the PUCCH based on the determined transmission power.

In addition, the method according to an embodiment of the disclosure may further include receiving activation information for activating the configuration information for a PUCCH resource through medium access control-control element (MAC-CE) signaling, and an identifier of the PUCCH resource and a plurality of configuration information identifiers corresponding to the PUCCH resource may be indicated based on the activation information.

In addition, in the method according to an embodiment of the disclosure, the configuration information may include the first information associated with the first node and the second information associated with the second node, each of the first information and the second information may include an identifier of each information and a closed loop index, and a first closed loop index included in the first information and a second closed loop index included in the second information may be configured to different values.

In addition, in the method according to an embodiment of the disclosure, transmitting the PUCCH based on the determined transmission power may include transmitting the PUCCH in a first resource through the first node using the transmission power determined based on the first information and the DCI; transmitting the PUCCH in a second resource through the second node using the transmission power determined based on the second information and the DCI; and locating the first resource and the second resource in different slots or non-overlapping time intervals within one slot.

In addition, the method according to an embodiment of the disclosure may further include receiving information on a number of repetition transmissions of the PUCCH, and the PUCCH may be repeatedly transmitted in a non-overlapping time resource as many times as the number of repetition transmissions, and the transmission power determined based on the first information and the DCI may be applied to odd-numbered PUCCH transmission, and the transmission power determined based on the second information and the DCI is applied to even-numbered PUCCH transmission.

In a method for a base station to receive an uplink channel in a wireless communication system according to an embodiment of the disclosure, the method includes transmitting configuration information related to power control of a physical uplink control channel (PUCCH) through a radio resource control (RRC) signaling; configuring first information for the PUCCH power control associated with a first node and second information for the PUCCH power control associated with a second node, based on the configuration information; transmitting downlink control information (DCI), which is associated with a transmit power control (TPC) command and includes a first bit field corresponding to the first information and a second bit field corresponding to the second information; and receiving the PUCCH to which transmission power determined based on the first information, the second information, and the DCI is applied.

**[Advantageous Effects of Invention]**

According to the disclosure, in the case that network coordination communication is used in a wireless communication network, a terminal transmits control information for each transmission point/panel/beam/node, so that reliability can be improved as compared to transmission of control information to a single transmission/point/panel/node/beam.

In addition, according to the disclosure, a terminal may transmit PUCCH by controlling transmission power for each transmission point/panel/beam/node.

The effects obtainable in the disclosure are not limited to the above-mentioned effects, and other effects not mentioned herein will be clearly understood from the following description by those skilled in the art to which the disclosure belongs.

**[Brief Description of Drawings]**

FIG. 1 illustrates a view of a basic structure of time-frequency domain of a mobile communication system according to an embodiment of the disclosure.

FIG. 2 illustrates a view for explaining a frame, subframe and slot structure of a mobile communication system according to an embodiment of the disclosure.

FIG. 3 illustrates a view of an example of a configuration of a bandwidth part (BWP) in a wireless communication system according to an embodiment of the disclosure.

FIG. 4 illustrates a view of an example of configuring a control area of a downlink control channel in a wireless communication system according to an embodiment of the disclosure.

FIG. 5 illustrates a view for explaining the structure of a downlink control channel of a mobile communication system according to an embodiment of the disclosure.

FIG. 6 illustrates a view of an example of physical downlink shared channel (PDSCH) frequency axis resource allocation in a wireless communication system according to an embodiment of the disclosure.

FIG. 7 illustrates a view of an example of PDSCH time axis resource allocation in a wireless communication system according to an embodiment of the disclosure.

FIG. 8 illustrates a view of an example of time axis resource allocation according to a subcarrier spacing of a data channel and a control channel in a wireless communication system according to an embodiment of the disclosure.

FIG. 9 is a view illustrating a case of overlapping a plurality of PUCCH resources for HARQ-ACK transmission for PDSCH in the case that multi-slot repetition is not configured according to an embodiment of the disclosure.

FIG. 10 is a view illustrating a case in which a PUCCH resource overlaps in the case that multi-slot repetition is configured according to an embodiment of the disclosure.

FIG. 11 is a view illustrating a switching time required for switching between a transmit OFF state and a transmit ON state during uplink transmission of a terminal according to an embodiment the disclosure.

FIG. 12a is a view illustrating a switching time required for transmission power change, transmission RB change, or hopping in frequency range 1 (FR1) according to an embodiment of the disclosure.

FIG. 12b is a view illustrating a switching time required for transmission power change, or transmission RB change, or hopping in frequency range 1 (FR1) according to an embodiment of the disclosure.

FIG. 13a is a view illustrating a switching time required for transmission power change, or transmission RB change, or hopping in frequency range 2 (FR2) according to an embodiment of the disclosure.

FIG. 13b is a view illustrating a switching time required for transmission power change, or transmission RB change, or hopping in frequency range 2 (FR2) according to an embodiment of the disclosure.

FIG. 14 is a view illustrating a structure of a base station and a terminal radio protocol when performing single cell, carrier aggregation, and dual connectivity according to an embodiment of the disclosure.

FIG. 15 is a view illustrating an example of an antenna port structure and resource allocation for cooperative communication in a wireless communication system according to an embodiment of the disclosure.

FIG. 16 is a view illustrating an example of downlink control information (DCI) structure for cooperative communication in a wireless communication system according to an embodiment of the disclosure.

FIG. 17a is a view illustrating a method of transmitting HARQ-ACK information in the case that a single PDCCH is used for NC-JT transmission in a wireless communication system according to an embodiment of the disclosure.

FIG. 17b is a view illustrating a method of transmitting joint HARQ-ACK information in the case that multi-PDCCH is used for NC-JT transmission in a wireless communication system according to an embodiment of the disclosure.

FIG. 17c is a view illustrating a method of transmitting inter-slot time division multiplexed HARQ-ACK information in the case that multi-PDCCH is used for NC-JT transmission in a wireless communication system according to an embodiment of the disclosure.

FIG. 17d is a view illustrating a method of transmitting intra-slot time division multiplexed HARQ-ACK information in the case that multi-PDCCH is used for NC-JT transmission in a wireless communication system according to an embodiment of the disclosure.

FIG. 17e is a view illustrating an example of a method for a terminal to transmit HARQ-ACK information for NC-JT transmission to a base station in a wireless communication system according to an embodiment of the disclosure.

FIG. 17f is a view illustrating an example of a method for a base station to receive HARQ-ACK information for NC-JT transmission from a terminal in a wireless communication system according to an embodiment of the disclosure.

FIG. 18a is a view illustrating repetitive PUCCH transmission in sub-slot units in a wireless communication system according to an embodiment of the disclosure.

FIG. 18b is a view illustrating repetitive PUCCH transmission in a slot or sub-slot in a wireless communication system according to an embodiment of the disclosure.

FIG. 18c is another view illustrating repetitive PUCCH transmission in a slot or sub-slot in a wireless communication system according to an embodiment of the disclosure.

FIG. 19 is a view illustrating an example of a mapping rule between repetitive PUCCH transmission and transmission and reception point (TRP) according to some embodiments of the disclosure.

FIG. 20 is a view illustrating a resource allocation method for repetitive transmission of an inter-slot-based PUCCH and a power adjustment application method according to a mapping rule between TRPs according to an embodiment of the disclosure.

FIG. 21 is a view illustrating a resource allocation method for repetitive transmission of an intra-slot-based PUCCH and a power adjustment application method according to a mapping rule between TRPs according to an embodiment of the disclosure.

FIG. 22 is a view illustrating a format of an Enhanced PUCCH Spatial Relation Activation/Deactivation MAC CE message according to an embodiment of the disclosure.

FIG. 23 illustrates an example of a signaling procedure between a terminal 23-00 and a base station 23-05 in a wireless communication system according to an embodiment of the disclosure.

FIG. 24 illustrates a structure of a terminal in a wireless communication system according to an embodiment of the disclosure.

FIG. 25 illustrates a structure of a base station in a wireless communication system according to an embodiment of the disclosure.

## [Mode for the Invention]

Various embodiments of the disclosure are described in detail below with reference to the accompanying drawings.

Detailed descriptions of technical specifications well-known in the art and unrelated directly to the disclosure may be omitted to avoid obscuring the subject matter of the disclosure. Basically, unnecessary description is omitted in order to make the subject matter of the disclosure clearer.

Similarly, some elements are exaggerated, omitted, or simplified in the drawings and, in practice, the elements may have sizes and/or shapes different from those shown in the drawings. Throughout the drawings, the same or equivalent parts are indicated by the same reference numbers.

Advantages and features of the disclosure and methods of accomplishing the same may be understood more readily by reference to the following detailed descriptions of embodiments and the accompanying drawings. The disclosure may, however, be embodied in many different forms and should not be construed as being limited to the specific embodiments set forth herein, Instead, these embodiments are provided so that this disclosure will be thorough and complete and will fully convey the concept of the disclosure to those skilled in the art.

Each block of the flowcharts and/or block diagrams, and combinations of blocks in the flowcharts and/or block diagrams, can be implemented by computer program instructions. These computer program instructions may be provided to a processor of a general-purpose computer, special purpose computer, or other programmable data processing apparatus, such that the instructions that are executed via the processor of the computer or other programmable data processing apparatus implement the functions/acts specified in the flowcharts and/or block diagrams. These computer program instructions may also be stored in a non-transitory computer-readable memory that can direct a computer or other programmable data processing apparatus to function in a particular manner, such that the instructions stored in the non-transitory computer-readable memory produce articles of manufacture embedding instructions that implement the function/act specified in the flowcharts and/or block diagrams. The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions/acts specified in the flowcharts and/or block diagrams.

Further, the respective block diagrams may illustrate parts of modules, segments, or codes including at least one or more executable instructions for performing specific logic function(s). The functions of the blocks may be performed in a different order in several modifications. For example, two successive blocks may be performed substantially at the same time, or they may be performed in reverse order according to their functions.

According to an embodiment of the disclosure, the term "module" means, but is not limited to, a software or hardware component, such as a field programmable gate array (FPGA) or application specific integrated circuit (ASIC), which performs certain tasks. A module may advantageously be configured to reside on the addressable storage medium and configured to be executed on one or more processors. Thus, a module may include components, such as software components, object-oriented software components, class components and task components, processes, functions, attributes, procedures, subroutines, segments of program code, drivers, firmware, microcode, circuitry, data, databases, data structures, tables, arrays, and variables. The functionalities of the components and modules may be combined into fewer components and modules or further separated into more components and modules. In addition, the components and modules may be implemented such that they execute one or more central processing units (CPUs) in a device or a secure multimedia card.

Operation principles of the disclosure are described in detail with reference to the accompanying drawings. Terms are defined herein in consideration of the functionality in the disclosure, and may vary according to the intention of a user or an operator, usage, etc. Therefore, definition should be made based on the overall content of the disclosure. In the description, the term "base station (BS)" denotes an entity for allocating resources to terminals and is intended to include at least one of a Node B, an evolved Node B (eNB), a radio access unit, a base station controller, and a network node. The term "terminal" is intended to include a user equipment (UE), a mobile station (MS), a cellular phone, a smartphone, a computer, and a multimedia system with a communication function. However, the disclosure is not limited by such terms. The present disclosure is a communication technique that converges a 5G (5th generation) communication system with IoT (Internet of Things) technology to support a higher data transmission rate after the 4G (4th generation) system and its system. The disclosure provides a technology for a terminal to receive broadcast information from a base station in a wireless communication system. The disclosure is applicable to intelligent services (e.g., smart homes, smart buildings, smart cities, smart cars or connected car, health care, digital education, retail, and security and safety-related services) based on the 5G communication technology and the IoT-related technology.

The terms used in the following description for indicating broadcast information, network entities, communication coverage, state transition (e.g., an event), network entities, messages, and components of a device are provided, for convenience of explanation. Accordingly, the disclosure is not limited by the terms used in the following description and may be replaced by other terms that have equivalent meanings.

In the following description, the terms and definitions given in the 3rd generation partnership project LTE (3GPP LTE) standard are used. However, the disclosure is not limited by the terms and definitions and can be applied to other standard communication systems

Mobile communication systems have evolved into high-speed, high-quality packet data communication systems (such as high speed packet access (HSPA), LTE (or evolved universal terrestrial radio access (E-UTRA)), and LTE-Advanced (LTE-A) defined in the 3GPP, high rate packet data (HRPD) defined in the 3rd generation partnership project-2 (3GPP2), ultra mobile broadband (UMB), and 802.16e defined by the Institute of Electrical and Electronics Engineers (IEEE)) capable of providing data and multimedia services beyond the early voice-oriented services.

As a representative broadband wireless communication system, an LTE system uses orthogonal frequency division multiplexing (OFDM) in the downlink and single carrier frequency division multiple access (SC-FDMA) in the uplink. The term "uplink (UL)" denotes a radio transmission path from a terminal (or UE or MS) to a base station (gNB), and the term "downlink (DL)" denotes a radio transmission path from the base station to the terminal. Such multiple access schemes are characterized by allocating the time-frequency resources for transmitting user-specific data and control information without overlapping each other, i.e., maintaining orthogonality, in order to distinguish among user-specific data and control information.

As a next generation communication system after LTE, the 5G communication system should meet various requirements of services demanded by users and service providers. The services to be supported by 5G systems may be categorized into three categories: enhanced mobile broadband (eMBB), massive machine type communications (mMTC), and ultra-reliable and low-latency communications (URLLC).

eMBB is intended to provide exceptionally high data rate in comparison with those supported by the legacy LTE, LTE-A, and LTE-A Pro. For example, the eMBB should increase the peak data rate up to 20 Gbps in DL and 10 Gbps in UL per base station. Simultaneously, eMBB should improve the user-perceived data rate. In order to meet such requirements, signal transmission/reception technologies including a MIMO technique should be improved. The data rate requirements for 5G communication systems may be met by use of a frequency bandwidth broader than 20 MHz in the frequency band of 3 to 6 GHz or above 6 GHz instead of the current LTE band of 2 GHz.

mMTC is intended to support application services for IoT. In order to provide mMTC-based IoT application services effectively, massive access resources should be secured for terminals within a cell, terminal coverage and battery life span should be improved, and device manufacturing cost should be reduced. The IoT services should be designed to support a large number of terminals (e.g., 1,000,000 terminals/km2) within a cell in consideration of the nature of the IoT terminals that are attached to various sensors and devices for providing a communication function. By the nature of the IoT services, the mMTC terminals will likely be located in coverage holes such as a basement of a building, which requires broader coverage in comparison with other services being supported in the 5G communication system. The mMTC terminals that are characterized by their low prices and battery replacement difficulty should be designed to have very long battery lifetime.

URLLC is targeted for mission-critical cellular-based communication services such as remote robots and machinery control, industrial automation, unmanned aerial vehicles, remote health care, and emergency alert services that require ultra-low latency and ultra-high reliability. Accordingly, a URLLC service requires an ultra-low latency and ultra-high reliability. For example, a URLLC service should meet the requirements of air-interface latency lower than 0.5 ms and a packet error rate less than or equal to 10-5. In order to support the URLLC services, the 5G system should support transmit time intervals (TTI) shorter than those of other services and assign broad resources in the frequency band. Accordingly, the 5G system should support a short TTI for the URLLC, which is shorter than that for other services, and allocate broad resources in a frequency band to secure reliability of the communication link. Although the services may categorized into mMTC, URLLC, and eMBB, the disclosure is not limited by such categorization.

The above-described services to be supported by 5G systems should be provided within one framework in a mixed manner. For resource management and control efficiency, the services may be provided and controlled in a systematic manner instead of a service-specific manner.

Although the disclosed embodiments are directed to specific systems such as LTE, LTE-A, LTE Pro, or NR, those skilled in the art will understand that the embodiments can be applied to other communication systems having similar technical backgrounds and channel formats, with slight modifications, without departing from the spirit and scope of the disclosure.

The disclosure relates to a method and apparatus for reporting channel state information to increase power saving efficiency of a terminal in a wireless communication system.

According to the disclosure, when a terminal operates in a power saving mode in a wireless communication system, the power saving effect can be further improved by optimizing a method for reporting channel state information accordingly.

Hereinafter, the frame structure of the 5G system will be described in more detail with reference to the drawings.

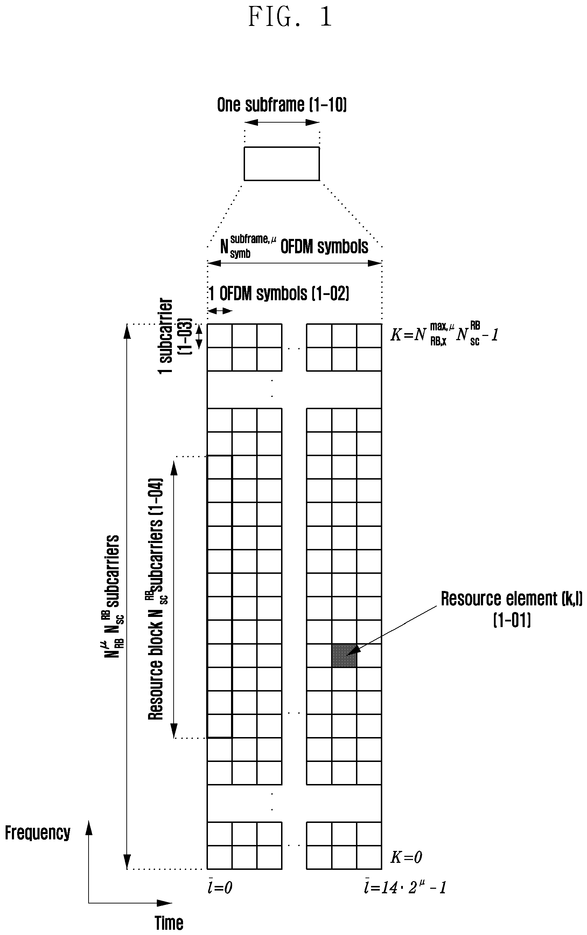

FIG. 1 is a diagram illustrating a basic structure of a time-frequency domain in a mobile communication system, according to an embodiment of the disclosure.

Referring to FIG. 1, a horizontal axis represents a time domain, and a vertical axis represents a frequency domain. A basic unit of resources in the time-frequency domain is a resource element (RE) 1-01, which may be defined as one orthogonal frequency division multiplexing (OFDM) symbol 1-02 on the time axis and one subcarrier 1-03 on the frequency axis. In the frequency domain, $N_{sc}^{RB}$ (e.g., twelve) consecutive REs may constitute one resource block (RB) 1-04. In one embodiment, a plurality of OFDM symbols may constitute one subframe 1-10.

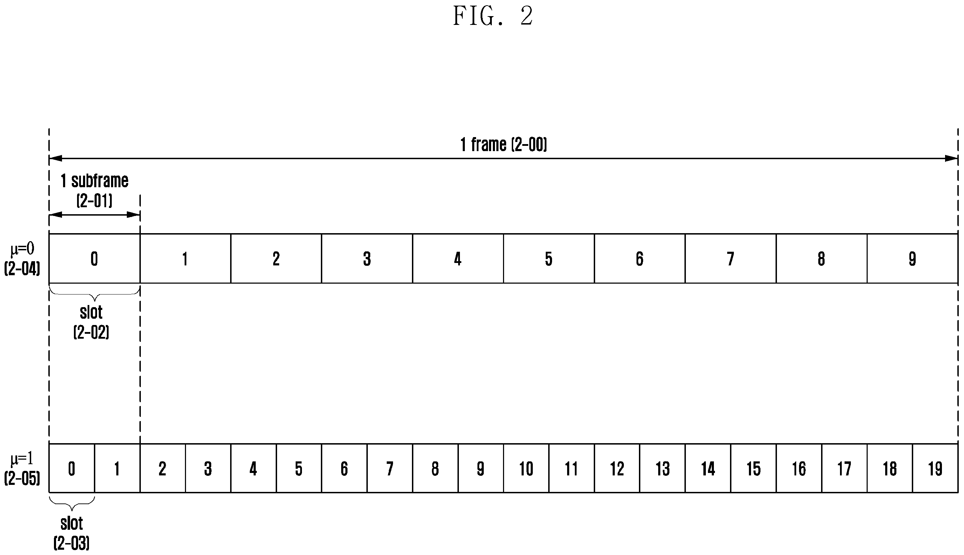

FIG. 2 illustrates a diagram for explaining a frame, subframe and slot structure of a next generation mobile communication system according to an embodiment of the disclosure.

Referring to FIG. 2, one frame 2-00 may composed of one or more subframes 2-01, and one subframe may be composed of one or more slots 2-02. As an example, one frame 2-00 may be defined as 10 ms. One subframe 2-01 may be defined as 1 ms, and thus one frame 2-00 may be composed of a total of 10 subframes 2-01. One slot 2-02 or 2-03 may be defined as 14 OFDM symbols (i.e., the number of symbols per slot ( $N_{symb}^{slot}$ ) is 14). One subframe 2-01 may consist of one or a plurality of slots 2-02 or 2-03, and the number of slots 2-02 or 2-03 per one subframe 2-01 may vary depending on a setting value $\mu$ 2-04 or 2-05 for a subcarrier spacing.

In an example of FIG. 2, a case 2-04 of $\mu$=0 and a case 2-05 of $\mu$=1 are illustrated as subcarrier spacing setting values. In the case 2-04 of $\mu$=0, one subframe 2-01 may consist of one slot 2-02, and in the case 2-05 of $\mu$=1, one subframe 2-01 may consist of two slots 2-03. That is, the number of slots per subframe ( $N_{slot}^{subframe,\mu}$ ) may vary depending on the setting value $\mu$ for the subcarrier interval, and thus the number of slots per frame ( $N_{slot}^{frame,\mu}$ ) may vary. $N_{slot}^{subframe,\mu}$ and $N_{slot}^{frame,\mu}$ according to each subcarrier spacing setting $\mu$ may be defined as Table 1 below.

[Table 1]

| $\mu$ | $N_{\text{symb}}^{\text{slot}}$ | $N_{\text{slot}}^{\text{frame},\mu}$ | $N_{\text{slot}}^{\text{subframe}}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

In NR, one component carrier (CC) or serving cell may be configured with up to 250 or more RBs. Therefore, when the terminal always receives the entire serving cell bandwidth, such as in LTE, power consumption of the terminal may be extreme, and to solve this problem, the base station configures one or more bandwidth parts (BWP) for the terminal. Thus, it is possible to support a terminal to change a reception area within a cell. In NR, the base station may set 'initial BWP', which is the bandwidth of CORESET #0 (or common search space, CSS), to the terminal through the MIB. Thereafter, the base station may configure an initial BWP (first BWP) of the terminal through RRC signaling and notify at least one or more pieces of BWP configuration information that may be indicated through future downlink control information (DCI). After that, the base station may indicate which band the terminal will use by notifying the BWP ID through DCI. If the terminal does not receive DCI from the currently allocated BWP for more than a specific time, the terminal returns to 'default BWP' and attempts DCI reception.

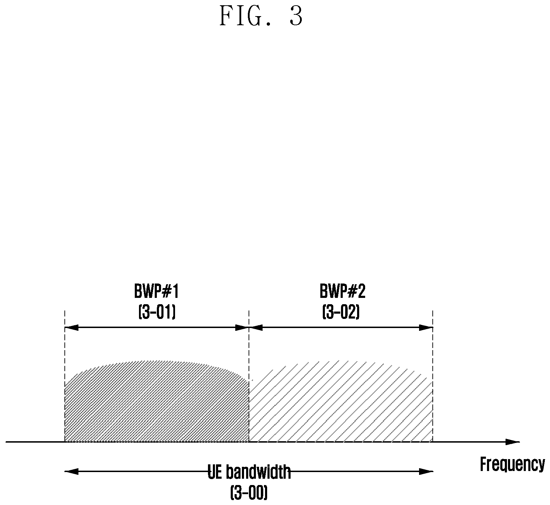

FIG. 3 illustrates an example of bandwidth part configuration in a wireless communication system, according to an embodiment of the disclosure.

Referring to FIG. 3, FIG 3 illustrates an example that a UE bandwidth 3-00 is configured as two bandwidth parts, that is, a bandwidth part #1 (BWP#1) 3-05 and a bandwidth part #2 (BWP#2) 3-10. A base station may configure one or a plurality of bandwidth parts to a UE and configure the following information as [Table 2] for each bandwidth part.

[Table 2]

```
BWP ::= SEQUENCE {
bwp-Id BWP-Id,
(bandwidth part identifier)
locationAndBandwidth INTEGER(1..65536),
(bandwidth part location)
subcarrierSpacing ENUMERATED {n0, n1, n2, n3, n4, n5},
(subcarrier spacing)
cyclicPrefix ENUMERATED { extended }
(cyclic prefix)
}
```

Of course, the above example is not considered as limitation, and in addition to the above configuration information, various parameters related to the bandwidth part may be configured in the UE. The above information may be delivered by the base station to the UE through higher layer signaling, for example, radio resource control (RRC) signaling. The configured one or at least one among the plurality of configured bandwidth parts may be activated. Whether to activate the configured bandwidth part may be semi-statically delivered from the base station to the UE through RRC signaling or dynamically delivered through MAC CE (control element) or downlink control information (DCI).

According to an embodiment, the UE before RRC connection may receive configuration of an initial bandwidth part (initial BWP) for initial access from the base station through a master information block (MIB). Specifically, through the MIB in the initial access stage, the UE may receive configuration information about a search space and a control resource set (CORESET) through which a physical downlink control channel (PDCCH) (or downlink control information (DCI)) for receiving system information (which may correspond to remaining system information (RMSI) or system information block 1 (SIB1)) required for initial access can be transmitted. Each of the control resource set and the search space configured by the MIB may be regarded as identity (ID) 0.

The base station may notify, to the UE through the MIB, configuration information such as frequency allocation information, time allocation information, and numerology for the control resource set #0. In addition, the base station may notify, to the UE through the MIB, configuration information about a monitoring period and occurrence for the control resource set #0, that is, configuration information about the search space #0. The UE may regard, as an initial bandwidth part for initial access, a frequency range configured with the control resource set #0 acquired from the MIB. In this case, the identity (ID) of the initial bandwidth part may be regarded as 0.

The configuration of the bandwidth part supported by the next generation mobile communication system (5G or NR system) may be used for various purposes.

In an embodiment, in case that a bandwidth supported by the UE is smaller than the system bandwidth, this may be supported through the bandwidth part configuration. For example, in table 2, the base station may configure a frequency location (configuration information 2) of the bandwidth part to the UE, so that the UE can transmit and receive data at a specific frequency location within the system bandwidth.

In another example, the base station may configure a plurality of bandwidth parts to the UE for the purpose of supporting different numerologies. For example, in order to support both data transmission and reception using a subcarrier spacing of 15 kHz and a subcarrier spacing of 30 kHz to a certain UE, two bandwidth parts may be configured with the subcarrier spacings of 15 kHz and 30 kHz, respectively. Different bandwidth parts may be subjected to frequency division multiplexing (FDMA), and in order to transmit/receive data at a specific subcarrier spacing, a bandwidth part configured with the corresponding subcarrier spacing may be activated.

In another example, for the purpose of reducing power consumption of the UE, the base station may configure bandwidth parts having bandwidths of different sizes to the UE. For example, if the UE supports a very large bandwidth, for example, a bandwidth of 100 MHz, and always transmits and receives data using that bandwidth, very large power consumption may occur. In particular, monitoring an unnecessary downlink control channel with a large bandwidth of 100 MHz in a situation that there is no traffic may be very inefficient in terms of power consumption. For the purpose of reducing the power consumption of the UE, the base station may configure a bandwidth part of a relatively small bandwidth, for example, a bandwidth part of 20 MHz, to the UE. In the absence of traffic, the UE may perform a monitoring operation in the 20 MHz bandwidth part, and when data occurs, the UE may transmit/receive data in the 100 MHz bandwidth part under the instruction of the base station.

In the method for configuring the above-described bandwidth part, terminals before RRC connection (Connected) may receive configuration information on the initial bandwidth part through a master information block (MIB) in an initial access step. More specifically, the terminal may receive a control region (Control Resource Set, CORESET) for a downlink control channel in which a DCI scheduling a System Information Block (SIB) can be transmitted from the MIB of a Physical Broadcast Channel (PBCH). The bandwidth of the control region set as the MIB may be regarded as an initial bandwidth part, and the terminal may receive the PDSCH through which the SIB is transmitted through the set initial bandwidth part. The initial bandwidth part may be used for other system information (Other System Information, OSI), paging, and random access in addition to the purpose of receiving the SIB.

Hereinafter, a synchronization signal (SS)/PBCH block in a next-generation mobile communication system (5G or NR system) will be described.

The SS/PBCH block (SSB) may refer to a physical layer channel block composed of a primary SS (PSS), a secondary SS (SSS), and a PBCH. Specifically, it is as follows.

- PSS: This is a signal serving as a reference for downlink time/frequency synchronization and provides some information on cell ID.
- SSS: This serves as a reference for downlink time/frequency synchronization and provides remaining cell ID information not provided by the PSS. Additionally, it may serve as a reference signal for demodulation of the PBCH.
- PBCH: This provides essential system information necessary for the UE to transmit and receive a data channel and a control channel. The essential system information may include search space related control information indicating radio resource mapping information of a control channel, scheduling control information on a separate data channel for transmitting system information, and the like.
- SS/PBCH block: The SS/PBCH block is formed of a combination of the PSS, the SSS, and the PBCH. One or a plurality of SS/PBCH blocks may be transmitted within 5 ms, and the respective transmitted SS/PBCH blocks may be distinguished by an index.

The UE may detect the PSS and the SSS in the initial access stage and decode the PBCH. The UE may acquire the MIB from the PBCH, and a control resource set #0 (which may correspond to a control resource set having a control resource set index of 0) may be configured therefrom. The UE may perform monitoring on the control resource set #0, assuming that a selected SS/PBCH block and a demodulation reference signal (DMRS) transmitted in the control resource set #0 are in quasi co-location (QCL). The UE may receive system information via downlink control information transmitted in the control resource set #0. From the received system information, the UE may acquire configuration information related to a random access channel (RACH) required for the initial access. The UE may transmit a physical RACH (PRACH) to the base station in consideration of the selected SS/PBCH index, and the base station that receives the PRACH may acquire information on the SS/PBCH block index selected by the UE. The base station can know that the UE has selected a certain block from among the SS/PBCH blocks and is monitoring the control resource set #0 related thereto.

Hereinafter, downlink control information (hereinafter referred to as DCI) in a next-generation mobile communication system (5G or NR system) will be described in detail.

Scheduling information for uplink data (or physical uplink shared channel (PUSCH)) or downlink data (or physical downlink shared channel (PDSCH)) in a next-generation mobile communication system (5G or NR system) may be transmitted from the base station to the terminal through DCI. The UE may monitor the DCI format for fallback and the DCI format for non-fallback with respect to PUSCH or PDSCH. The fallback DCI format may be composed of a fixed field predefined between the base station and the terminal, and the DCI format for non-fallback may include a configurable field.

DCI may be transmitted through a physical downlink control channel (PDCCH) through channel coding and modulation processes. A Cyclic Redundancy Check (CRC) may be attached to the DCI message payload, and the CRC may be scrambled with a Radio Network Temporary Identifier (RNTI) corresponding to the identity of the terminal. Depending on the purpose of the DCI message, for example, UE-specific data transmission, power control command, or random access response, different RNTIs may be used for scrambling the CRC attached to the payload of the DCI message. That is, the RNTI may be included in the CRC calculation process and transmitted without being explicitly transmitted. When a DCI message transmitted on the PDCCH is received, the UE may check the CRC using the allocated RNTI. If the CRC check result is correct, the terminal can know that the corresponding message has been transmitted to the terminal.

For example, DCI scheduling a PDSCH for system information (SI) may be scrambled with SI-RNTI. A DCI scheduling a PDSCH for a Random Access Response (RAR) message may be scrambled with RA-RNTI. A DCI scheduling a PDSCH for a paging message may be scrambled with a P-RNTI. DCI notifying SFI (Slot Format Indicator) may be scrambled with SFI-RNTI. DCI notifying TPC (Transmit Power Control) can be scrambled with TPC-RNTI. DCI scheduling UE-specific PDSCH or PUSCH may be scrambled with C-RNTI (Cell RNTI).

A DCI format 0_0 may be used as a fallback DCI for scheduling the PUSCH, and in this case the CRC may be scrambled with the C-RNTI. The DCI format 0_0 in which the CRC is scrambled with the C-RNTI may include, for example, information in Table 3 below.

[Table 3]

- Identifier for DCI formats - [1] bit
- Frequency domain resource assignment -

$$\left\lceil \log_2 (N_{RB}^{UL,BWP} (N_{RB}^{UL,BWP} + 1)/2) \right\rceil \text{ bits}$$

- Time domain resource assignment - X bits
- Frequency hopping flag - 1 bit
- Modulation and coding scheme - 5 bits
- New data indicator - 1 bit
- Redundancy version - 2 bits
- HARQ process number - 4 bits
- TPC (transmit power control) command for scheduled PUSCH - [2] bits
- UL/SUL (supplementary UL) indicator - 0 or 1 bit

A DCI format 0_1 may be used as a non-fallback DCI for scheduling the PUSCH, and in this case the CRC may be scrambled with the C-RNTI. The DCI format 0_1 in which the CRC is scrambled with the C-RNTI may include, for example, information in Table 4 below.

[Table 4]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment
• For resource allocation type 0,

$$\left\lceil N_{RB}^{UL,BWP} / P \right\rceil \text{ bits}$$

• For resource allocation type 1,

$$\left\lceil \log_2 (N_{RB}^{UL,BWP} (N_{RB}^{UL,BWP} + 1)/2) \right\rceil \text{ bits}$$

- Time domain resource assignment - 1, 2, 3, or 4 bits
- VRB (virtual resource block)-to-PRB (physical resource block) mapping - 0 or 1 bit, only for resource allocation type 1.
• 0 bit if only resource allocation type 0 is configured;
• 1 bit otherwise.
- Frequency hopping flag - 0 or 1 bit, only for resource allocation type 1.
• 0 bit if only resource allocation type 0 is configured;
• 1 bit otherwise.
- Modulation and coding scheme - 5 bits
- New data indicator - 1 bit
- Redundancy version - 2 bits
- HARQ process number - 4 bits

(continued)

| |
|---|
| - 1st downlink assignment index - 1 or 2 bits<br>• 1 bit for semi-static HARQ-ACK codebook;<br>• 2 bits for dynamic HARQ-ACK codebook with single HARQ-ACK codebook.<br>- 2nd downlink assignment index - 0 or 2 bits<br>• 2 bits for dynamic HARQ-ACK codebook with two HARQ-ACK sub-codebooks;<br>• 0 bit otherwise.<br>- TPC command for scheduled PUSCH - 2 bits<br><br>$$\left\lceil \log_2\left(\sum_{k=1}^{L_{max}}\binom{N_{SRS}}{k}\right)\right\rceil \quad \text{or} \quad \left\lceil \log_2(N_{SRS})\right\rceil$$<br><br>- SRS resource indicator - $\quad$ bits<br>• $\left\lceil \log_2\left(\sum_{k=1}^{L_{max}}\binom{N_{SRS}}{k}\right)\right\rceil$ $\quad$ bits for non-codebook based PUSCH transmission<br>- $\left\lceil \log_2(N_{SRS})\right\rceil$ $\quad$ bits for codebook based PUSCH transmission<br>- Precoding information an number of layers - up to 6 bits |
| - Antenna ports - up to 5 bits<br>- SRS request - 2 bits<br>- CSI request - 0, 1, 2, 3, 4, 5, or 6 bits<br>- CBG (code block group) transmission information - 0, 2, 4, 6, or 8 bits<br>- PTRS-DMRS association - 0 or 2 bits<br>- beta_offset indicator - 0 or 2 bits<br>- DMRS sequence initialization - 0 or 1 bit |

A DCI format 1_0 may be used as a fallback DCI for scheduling the PDSCH, and in this case the CRC may be scrambled with the C-RNTI. The DCI format 1_0 in which the CRC is scrambled with the C-RNTI may include, for example, information in Table 5 below.

[Table 5]

| |
|---|
| - Identifier for DCI formats - [1] bit<br>- Frequency domain resource assignment - $\left\lceil \log_2(N_{RB}^{DL,BWP}(N_{RB}^{DL,BWP}+1)/2)\right\rceil$ bits<br>- Time domain resource assignment - X bits<br>- VRB-to-PRB mapping - 1 bit<br>- Modulation and coding scheme - 5 bits<br>- New data indicator - 1 bit<br>- Redundancy version - 2 bits<br>- HARQ process number - 4 bits<br>- Downlink assignment index - 2 bits |

(continued)

| |
|---|
| - TPC command for scheduled PUCCH - [2] bits |
| - PUCCH (physical uplink control channel) resource indicator - 3 bits |
| - PDSCH-to-HARQ feedback timing indicator - [3] bits |

Alternatively, DCI format 1_0 may be used as a DCI for scheduling a PDSCH for a RAR message, and in this case, the CRC may be scrambled with RA-RNTI. DCI format 1_0 in which the CRC is scrambled with the C-RNTI may include information as shown in [Table 6] below.

[Table 6]

| | |
|---|---|
| - Frequency domain resource assignment - bits | $\left\lceil \log_2 (N_{RB}^{DL,BWP} (N_{RB}^{DL,BWP} + 1)/2) \right\rceil$ |
| - Time domain resource assignment - 4 bits | |
| - VRB-to-PRB mapping - 1 bit | |
| - Modulation and coding scheme - 5 bits | |
| - TB scaling - 2 bits | |
| - Reserved bits - 16 bits | |

A DCI format 1_1 may be used as a non-fallback DCI for scheduling the PDSCH, and in this case the CRC may be scrambled with the C-RNTI. The DCI format 1_1 in which the CRC is scrambled with the C-RNTI may include, for example, information in Table 7 below.

[Table 7]

| | |
|---|---|
| | - Carrier indicator - 0 or 3 bits |
| | - Identifier for DCI formats - [1] bits |
| | - Bandwidth part indicator - 0, 1 or 2 bits |
| | - Frequency domain resource assignment |
| • For resource allocation type 0, | $\left\lceil N_{RB}^{DL,BWP} / P \right\rceil$ bits |
| • For resource allocation type 1, | $\left\lceil \log_2 (N_{RB}^{DL,BWP} (N_{RB}^{DL,BWP} + 1)/2) \right\rceil$ bits |
| | - Time domain resource assignment - 1, 2, 3, or 4 bits |
| | - VRB-to-PRB mapping - 0 or 1 bit, only for resource allocation type 1. |
| | • 0 bit if only resource allocation type 0 is configured; |
| | • 1 bit otherwise. |
| | - PRB bundling size indicator - 0 or 1 bit |
| | - Rate matching indicator - 0, 1, 0r 2 bits |
| | - ZP SCI-RS trigger - 0, 1, or 2 bits |
| | For transport block 1: |
| | - Modulation and coding scheme - 5 bits |
| | - New data indicator - 1 bit |
| | - Redundancy version - 2 bits |
| | For transport block 2: |
| | - Modulation and coding scheme - 5 bits |
| - New data indicator - 1 bit | |
| - Redundancy version - 2 bits | |
| - HARQ process number - 4 bits | |
| - Downlink assignment index - 0 or 2 or 4 bits | |
| - TPC command for scheduled PUCCH - 2 bits | |
| - PUCCH resource indicator - 3 bits | |

(continued)

| |
|---|
| - PDSCH-to-HARQ feedback timing indicator - 3 bits<br>- Antenna ports - 4, 5 or 6 bits<br>- Transmission configuration indication - 0 or 3 bits<br>- SRS request - 2 bits<br>- CBG transmission information - 0, 2, 4, 6, or 8 bits<br>- CBG flushing out information - 0 or 1 bit<br>- DMRS sequence initialization - 1 bit |

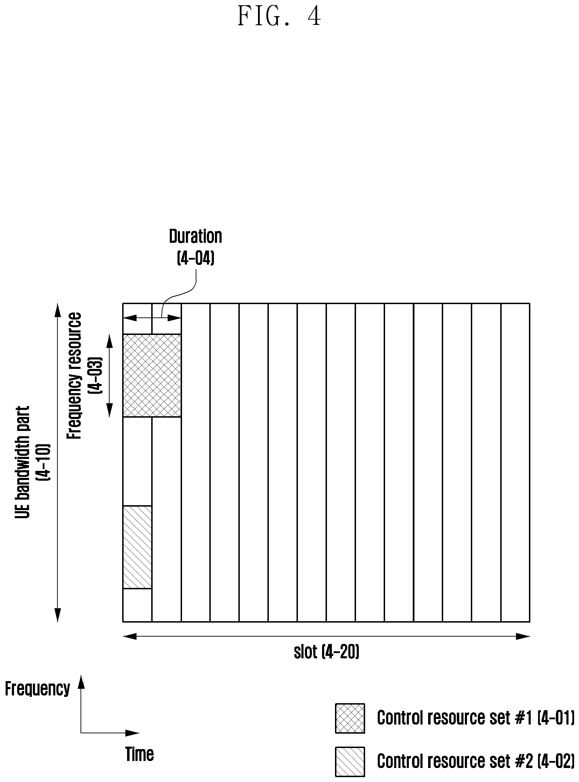

FIG. 4 illustrates a view of an example of configuring a control region of a downlink control channel in a next generation wireless communication system according to an embodiment of the disclosure. That is, FIG. 4 illustrates an example of a control resource set (CORESET) in which a downlink control channel is transmitted in 5G wireless communication systems.

Referring to FIG. 4, FIG. 4 illustrates an example in which a UE bandwidth part 4-10 is configured in the frequency axis and two control resource sets (control resource set #1 4-01 and control resource set #2 4-02) are configured within 1 slot 4-20 in the time axis. The control resource sets 4-01 and 4-02 may be configured in specific frequency resources 4-03 within a total UE BWP 4-10 in the frequency axis. The control resource set 4-01 and 4-02 may be configured as one or a plurality of OFDM symbols in the time axis, which may be defined as a control resource set duration 4-04. Referring to FIG. 4, control resource set #1 4-01 may be configured as a control resource set duration of 2 symbols, and control resource set #2 4-02 may be configured as a control resource set duration of 1 symbol.

The control resource sets in the next generation mobile communication system (5G or NR system) may be configured through higher-layer signaling (for example, system information, a master information block (MIB), or radio resource control (RRC) signaling) in the UE by the BS. Configuring the control resource set in the UE may mean providing information such as a control resource set identity, a frequency location of the control resource set, and a symbol length of the control resource set. For example, the following information as [Table 8] may be included.

[Table 8]

| | |
|---|---|
| ControlResourceSet ::= | SEQUENCE { |
| -- Corresponds to L1 parameter 'CORESET-ID' | |
| controlResourceSetId | ControlResourceSetId, |
| (control resource set identity) | |
| frequencyDomainResources | BIT STRING (SIZE (45)), |
| (frequency axis resource allocation information) | |
| duration | INTEGER |
| (1..maxCoReSetDuration), | |
| (time axis resource allocation information) | |
| cce-REG-MappingType | CHOICE { |
| (CCE-to-REG mapping scheme) | |
| interleaved | |
| SEQUENCE { | |
| reg-BundleSize | |
| ENUMERATED {n2, n3, n6}, | |
| (REG bundle size) | |
| precoderGranularity | |
| ENUMERATED {sameAsREG-bundle, allContiguousRBs}, | |
| interleaverSize | |
| ENUMERATED {n2, n3, n6} | |
| (interleaver size) | |
| shiftIndex | |
| INTEGER(0..maxNrofPhysicalResourceBlocks-1) | |
| OPTIONAL | |
| (interleaver shift) | |
| }, | |
| nonInterleaved | NULL |
| }, | |
| tci-StatesPDCCH | SEQUENCE(SIZE |
| (1..maxNrofTCI-StatesPDCCH)) OF TCI-StateId | OPTIONAL, |
| (QCL configuration information) | |
| tci-PresentInDCI | ENUMERATED {enabled} |
| OPTIONAL, -- Need S | |
| } | |

In [Table 8], tci-StatesPDCCH (referred to as a transmission configuration indication (TCI) state) configuration information may include information on one or a plurality of synchronization signal (SS)/physical broadcast channel (PBCH) block indexes or channel state information reference signal (CSI-RS) indexes having the Quasi Co-Located (QCL) relationship with a DMRS transmitted in the corresponding CORESET.

In a wireless communication system, one or more different antenna ports (or one or more channels, signals, and combinations thereof may be substituted, but in the future description of the present disclosure, for convenience, different antenna ports are collectively referred to) may be associated with each other by the QCL settings shown in [Table 9] below.

[Table 9]

```
QCL-Info ::=                              SEQUENCE {
     cell                                 ServCellIndex  (an index
of a serving cell where QCL reference RS is transmitted)
OPTIONAL,    -- Need R
     bwp-Id                         BWP-Id (an index of a BWP
where      QCL      reference      RX      is      transmitted)
OPTIONAL, -- Cond CSI-RS-Indicated
     referenceSignal                     CHOICE { (an indicator
indicating QCL reference RS as one of CSI-RS or SS/PBCH block)
          csi-rs
NZP-CSI-RS-ResourceId,
          ssb                          SSB-Index
     },
     qcl-Type                         ENUMERATED {typeA, typeB,
typeC, typeD},
     ...
     }
```

Specifically, the QCL configuration may link two different antenna ports in a relationship between a (QCL) target antenna port and a (QCL) reference antenna port, and the terminal may apply or assume all or some of the statistical characteristics of the channel measured at the reference antenna port (e.g., the channel's large scale parameters, such as Doppler shift, Doppler spread, average delay, delay spread, average gain, spatial Rx (or Tx) parameters, or reception spatial filter coefficients or transmission spatial filter coefficients of the terminal) to receiving target antenna ports. Above, the target antenna port means an antenna port for transmitting a channel or signal configured by higher layer configuration including the QCL configuration or an antenna port for transmitting a channel or signal to which a TCI state indicating the QCL configuration is applied. In the above, the reference antenna port means an antenna port that transmits a channel or signal indicated (specified) by the referenceSignal parameter in the QCL configuration.

Specifically, statistical characteristics of channels limited by the QCL configuration (indicated by the parameter qcl-Type within the QCL configuration) may be classified as follows according to the QCL type.

○ 'QCL-TypeA': {Doppler shift, Doppler spread, average delay, delay spread}
○ 'QCL-TypeB': {Doppler shift, Doppler spread}
○ 'QCL-TypeC': {Doppler shift, average delay}
○ 'QCL-TypeD': {Spatial Rx parameter}

At this time, the types of QCL types are not limited to the above four types, but all possible combinations are not listed in order not to obscure the point of explanation. Above, QCL-TypeA is a QCL type used when all measurable statistical characteristics in the frequency and time axes can be referenced, because the bandwidth and transmission period of the target antenna port are sufficient compared to the reference antenna port (i.e., the number of samples and transmission band/time of the target antenna port are more than the number of samples and transmission band/time of the reference antenna port in both the frequency axis and the time axis). QCL-TypeB is a QCL type used when the bandwidth of a target antenna port is sufficient to measure measurable statistical characteristics in the frequency axis, that is, Doppler shift and Doppler spreads. QCL-TypeC is a QCL type used when the bandwidth and transmission period of the target antenna port are insufficient to measure second-order statistics, that is, Doppler spread and delay spread, and only first-order statistics, that is, Doppler shift and average delay, can be referred. QCL-TypeD is a QCL type that is set when the spatial reception filter values used when receiving the reference antenna port can be used when receiving the target antenna port.

Meanwhile, the base station can set or indicate a maximum of two QCL configurations to one target antenna port through the following TCI state setting.

```
    TCI-State ::=                          SEQUENCE {
        tci-StateId                           TCI-StateId, (TCI
state indicator)
        qcl-Type1                             QCL-Info, (first QCL
configuraiton for target antenna port to which the corresponding
TCI state is applied)
        qcl-Type2                             QCL-Info (second QCL
configuraiton for target antenna port to which the corresponding
TCI              state             is              applied)
OPTIONAL,    -- Need R
        ...,
    }
```

Among the two QCL configurations included in one TCI state setting, the first QCL configuration may be set to one of QCL-TypeA, QCL-TypeB, and QCL-TypeC. At this time, the configurable QCL type is specified according to the type of target antenna port and reference antenna port, and will be described in detail below. In addition, among the two QCL configuraitons included in the one TCI state setting, the second QCL configuration may be set to QCL-TypeD and may be omitted in some cases.

[Table 9-1] to [Table 9-5] below show valid TCI state configurations according to the target antenna port type.

[Table 9-1] shows valid TCI state configurations when the target antenna port is a CSI-RS for tracking (TRS). The TRS is an NZP CSI-RS for which a repetition parameter is not configured and trs-Info is configured as true among CSI-RSs. The third configuration in [Table 9-1] may be used for an aperiodic TRS.

[Table 9-1]

| Valid TCI state configurations when the target antenna port is a CSI-RS for tracking (TRS) | | | | |
|---|---|---|---|---|
| Valid TCI state Configuration | DL RS 1 | qcl-Type 1 | DL RS 2 (if configured) | qcl-Type 2 (if configured) |
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

[Table 9-2] shows valid TCI state configurations when the target antenna port is a CSI-RS for CSI. The CSI-RS for CSI is an NZP CSI-RS for which a parameter (for example, a repetition parameter) indicating repetition is not configured and trs-Info is not configured as true among the CSI-RSs.

[Table 9-2]

| Valid TCI state configurations when the target antenna port is a CSI-RS for CSI | | | | |
|---|---|---|---|---|
| Valid TCI state Configuration | DL RS 1 | qcl-Type 1 | DL RS 2 (if configured) | qcl-Type 2 (if configured) |
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

[Table 9-3] shows valid TCI state configurations when the target antenna port is a CSI-RS for beam management (BM) (that is, the same meaning as a CSI-RS for L1 RSRP reporting). The CSI-RS for BM is an NZP CSI-RS for which a repetition parameter is configured to have a value of on or off and trs-Info is not configured as true.

[Table 9-3]

| Valid TCI state configurations when the target antenna port is a CSI-RS for BM (for L1 RSRP reporting). | | | | |
|---|---|---|---|---|
| Valid TCI state Configuration | DL RS 1 | qcl-Type 1 | DL RS 2 (if configured) | qcl-Type 2 (if configured) |
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH | QCL-TypeC | SS/PBCH block | QCL-TypeD |

[Table 9-4] shows valid TCI state configurations when the target antenna port is a PDCCH DMRS.

[Table 9-4]

| Valid TCI state configurations when the target antenna port is a PDCCH DMRS | | | | |
|---|---|---|---|---|
| Valid TCI state Configuration | DL RS 1 | qcl-Type 1 | DL RS 2 (if configured) | qcl-Type 2 (if configured) |
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

[Table 9-5] shows valid TCI state configurations when the target antenna port is a PDSCH DMRS.

[Table 9-5]

| Valid TCI state configurations when the target antenna port is a PDSCH DMRS | | | | |
|---|---|---|---|---|
| Valid TCI state Configuration | DL RS 1 | qcl-Type 1 | DL RS 2 (if configured) | qcl-Type 2 (if configured) |
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

In a representative QCL configuration method by [Table 9-1] to [Table 9-5], the target antenna port and the reference antenna port for each step are configured and operated as "SSB" -> "TRS" -> "CSI-RS for CSI, CSI-RS for BM, PDCCH DMRS, or PDSCH DMRS". In a representative QCL configuration method by [Table 20] to [Table 24], the target antenna port and the reference antenna port for each step are configured and operated as "SSB" -> "TRS" -> "CSI-RS for CSI, CSI-RS for BM, PDCCH DMRS, or PDSCH DMRS".

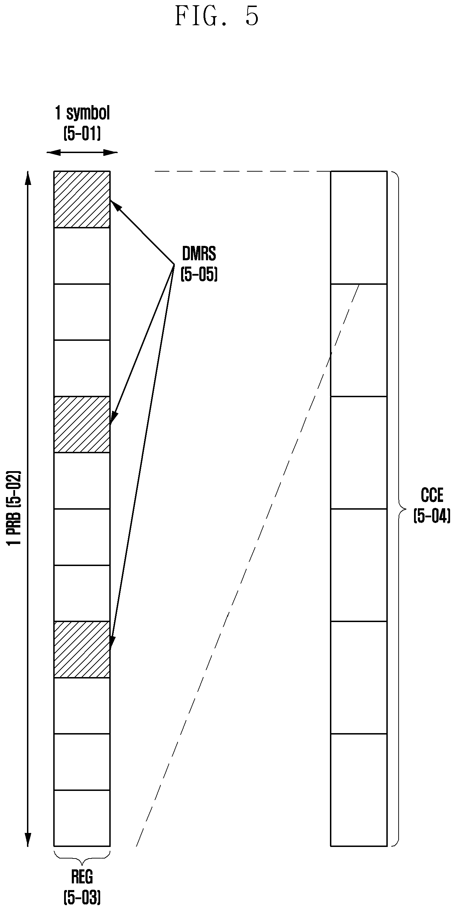

FIG. 5 illustrates a view for explaining the structure of a downlink control channel of a mobile communication system according to an embodiment of the disclosure. That is, FIG. 5 is a diagram illustrating an example of a base unit of time and frequency resources constituting a downlink control channel that can be used in a 5G system.

Referring to FIG. 5, the basic unit of time and frequency resources constituting the control channel may be referred to as a resource element group (REG) 5-03, and the REG 5-03 may be defined as one OFDM symbol 5-01 on the time axis and one physical resource block (PRB) 5-02, that is, twelve subcarriers, on the frequency axis. The base station may compose a downlink control channel allocation unit by concatenating the REGs 5-03.

As shown in FIG. 5, when a basic unit for downlink control channel allocation in the 5G system is referred to as a control channel element (CCE) 5-04, one CCE 5-04 may be composed of a plurality of REGs 5-03. In the FIG. 5 example, the REG 5-03 may be composed of twelve REs, and if one CCE 5-04 is composed of six REGs 5-03, one CCE 5-04 may be composed of seventy-two REs. When a downlink control resource set is configured, it may be composed of a plurality of CCEs 5-04, and a specific downlink control channel may be transmitted through mapping with one or a plurality of CCEs 5-04 depending on an aggregation level (AL) in the control resource set. The CCEs 5-04 in the control resource set are distinguished by means of numbers, and the numbers of the CCEs 5-04 may be assigned according to a logical mapping scheme.

The basic unit of the downlink control channel shown in FIG. 5, that is, the REG 5-03, may include both REs to which DCI is mapped and a region to which a DMRS 5-05, which is a reference signal for decoding them, is mapped. As in FIG. 5, three DMRSs 5-05 may be transmitted within one REG 5-03. The number of CCEs required to transmit the PDCCH may be 1, 2, 4, 8, or 16 depending on the aggregation level (AL), and different CCE numbers may be used to implement link adaptation of the downlink control channel. For example, in case of AL=L, one downlink control channel may be transmitted through L CCEs.

The UE needs to detect a signal without knowing information about the downlink control channel. For blind decoding, a search space indicating a set of CCEs is defined. The search space is a set of downlink control channel candidates consisting of CCEs that the UE should attempt to decode on a given aggregation level. Because there are various aggregation levels that make one bundle with 1, 2, 4, 8, or 16 CCEs, the UE may have a plurality of search spaces. A search space set may be defined as a set of search spaces in all the configured aggregation levels.

The search spaces may be classified into a common search space and a UE-specific search space. According to an embodiment of the disclosure, a certain group of UEs or all UEs may search the common search space of the PDCCH to receive cell-common control information such as dynamic scheduling for system information or a paging message.

For example, UE may receive PDSCH scheduling assignment information for SIB transmission including cell operator information by searching the common search space of the PDCCH. Because a certain group of UEs or all UEs should receive the PDCCH, the common search space may be defined as a set of promised CCEs. The UE may receive the scheduling assignment information for the UE-specific PDSCH or PUSCH by searching the UE-specific search space of the PDCCH. The UE-specific search space may be defined UE-specifically as a function of the UE identity and various system parameters.

In the 5G, parameters for the search space for the PDCCH may be configured from the base station to the UE through higher layer signaling (e.g., SIB, MIB, RRC signaling). For example, the base station may configured, to the UE, the number of PDCCH candidates in each aggregation level L, a monitoring period for the search space, a monitoring occasion in units of symbols in a slot for the search space, a search space type (a common search space or a UE-specific search space), a combination of a DCI format to be monitored in the corresponding search space and an RNTI, a control resource set index to be monitored in the search space, and the like. For example, the configuration may be include the following information in Table 10.

[Table 10]

```
    SearchSpace ::= SEQUENCE {
      -- Identity of the search space. SearchSpaceId = 0 identifies the SearchSpace configured via
  PBCH(MIB) or ServingCellConfigCommon.
      searchSpaceId SearchSpaceId,
      (search space identifier)
      controlResourceSetId ControlResourceSetld,
      (control resource set identifier)
      monitoringSlotPeriodicityAndOffset CHOICE {
      (monitoring slot level period)
      sl1 NULL,
      sl2 INTEGER(0..1),
      sl4 INTEGER(0..3),
      sl5 INTEGER(0..4),
      sl8 INTEGER(0..7),
      sl10 INTEGER(0..9),
      sl16 INTEGER(0..15),
      sl20 INTEGER(0..19)
      } OPTIONAL,
      duration (monitoring length) INTEGER(2..2559)
      monitoringSymbolsWithinSlot BIT STRING(SIZE(14)) OPTIONAL,
      (monitoring symbol in slot)
      nrofCandidates SEQUENCE {
      (number of PDCCH candidates per aggregation level)
      aggregationLevel1 ENUMERATED {n0, n1, n2, n3, n4, n5, n6, n8},
      aggregationLevel2 ENUMERATED {n0, n1, n2, n3, n4, n5, n6, n8},
      aggregationLevel4 ENUMERATED {n0, n1, n2, n3, n4, n5, n6, n8},
      aggregationLevel8 ENUMERATED {n0, n1, n2, n3, n4, n5, n6, n8},
      aggregationLevel16 ENUMERATED {n0, n1, n2, n3, n4, n5, n6, n8}
      },
      searchSpaceType CHOICE {
      (search space type)
      -- Configures this search space as common
  search space (CSS) and DCI formats to monitor.
      common SEQUENCE {
      (common search space)
      }
      ue-Specific SEQUENCE {
      (UE-specific search space)
      - Indicates whether the UE monitors in this USS
  for DCI formats 0-0 and 1-0 or for formats 0-1 and
   1-1.
      formats ENUMERATED {formats0-0-And-1-0, formats0-1-And-1-1},
```

}The base station may configure one or a plurality of search space sets to the UE based on configuration information. According to an embodiment of the disclosure, the base station may configure a search space set 1 and a search space set 2 to the UE, configure a DCI format A scrambled with X-RNTI in the search space set 1 to be monitored in the common search space, and configured a DCI format B scrambled with Y-RNTI in the search space set 2 to be monitored in the UE-specific search space.

According to the configuration information, one or a plurality of search space sets may exist in the common search space or the UE-specific search space. For example, a search space set #1 and a search space set #2 may be configured as the common search space, and a search space set #3 and a search space set #4 may be configured as the UE-specific search space.

The common search space may be classified into a search space set of a specific type according to a purpose. RNTIs to be monitored may be different for each type of the search space set. For example, the common search space type, purpose, and RNTI to be monitored may be classified as follows.

| Search space type | Purpose | RNTI |
|---|---|---|
| Type0 CSS | PDCCH transmission for scheduling SIB | SI-RNTI |

(continued)

| Search space type | Purpose | RNTI |
|---|---|---|
| Type0A CSS | PDCCH transmission for scheduling other SI (SIB2 etc.) other than SIB1 | SI-RNTI |
| Type1 CSS | PDCCH transmission for scheduling RAR, scheduling Msg3 retransmission, or scheduling Msg4 | RA-RNTI, TC-RNTI |
| Type2 CSS | Paging | P-RNTI |
| Type3 CSS | Transmission of group control information | INT-RNTI, SFI-RNTI, TPC-PUSCH-RNTI, TPC-PUCCH-RNTI, TPC-SRS-RNTI |
| | In a case of PCell, PDCCH transmission for scheduling data | C-RNTI, MCS-C-RNTI, CS-RNTI |

Meanwhile, in the common search space, the following combination of a DCI format and an RNTI may be monitored. Of course, the following examples are not considered as a limitation.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the following combination of a DCI format and an RNTI may be monitored. Of course, the following examples are not considered as a limitation.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the following definitions and purposes.

C-RNTI (cell RNTI): The purpose of UE-specific PDSCH scheduling
TC-RNTI (temporary cell RNTI): UE-specific PDSCH scheduling purpose
CS-RNTI (configured scheduling RNTI): The purpose of semi-statically configured UE-specific PDSCH scheduling
RA-RNTI (random access RNTI): The purpose of PDSCH scheduling in the random access step
P-RNTI (paging RNTI): The purpose of PDSCH scheduling in which paging is transmitted
SI-RNTI (system information RNTI): The purpose of PDSCH scheduling in which system information is transmitted
INT-RNTI (interruption RNTI): The purpose of informing whether puncturing for PDSCH
TPC-PUSCH-RNTI (transmit power control for PUSCH RNTI): The purpose of indicating power control command for PUSCH
TPC-PUCCH-RNTI (transmit power control for PUCCH RNTI): The purpose of indicating power control command for PUCCH
TPC-SRS-RNTI (transmit power control for SRS RNTI): The purpose of indicating power control command for SRS

In one embodiment, the aforementioned specified DCI formats may follow the definition of Table 11 below.

[Table 11]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |

(continued)

| DCI format | Usage |
|---|---|
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

According to an embodiment of the disclosure, in the 5G system, a plurality of search space sets may be configured with different parameters (e.g., parameters in Table 10), so the set of search space monitored by the UE at every time point may vary. For example, if a search space set #1 is configured with a X-slot period, a search space set #2 is configured with a Y-slot period, and X and Y are different, the UE may monitor both the search space set #1 and the search space set #2 in a specific slot, and monitor one of the search space set #1 and the search space set #2 in a specific slot.

When a plurality of search space sets are configured for the UE, the following conditions may be considered in a method for determining a search space set to be monitored by the UE.

[Condition 1: Limitation of the maximum number of PDCCH candidates]

The number of PDCCH candidates that can be monitored per slot does not exceed $M^\mu$. The $M^\mu$ may be defined as the maximum number of PDCCH candidates per slot in a cell configured with a subcarrier spacing of $15 \cdot 2^\mu$ kHz, and may be defined as shown in Table 12 below.

[Table 12]

| $\mu$ | Maximum number of monitored PDCCH candidates per slot and per serving cell $M^\mu$ |
|---|---|
| 0 | 44 |
| 1 | 36 |
| 2 | 22 |
| 3 | 20 |

[Condition 2: Limitation of the maximum number of CCEs]

The number of CCEs constituting the entire search space per slot (here, the entire search space refers to the entire CCE set corresponding to the union area of a plurality of search space sets) does not exceed $C^\mu$. The $C^\mu$ may be defined as the maximum number of CCEs per slot in a cell configured with a subcarrier spacing of $15 \cdot 2^\mu$ kHz, and may be defined as shown in Table 13 below.

[Table 13]

| $\mu$ | Maximum number of non-overlapped CCEs per slot and per serving cell $C^\mu$ |
|---|---|
| 0 | 56 |
| 1 | 56 |
| 2 | 48 |
| 3 | 32 |

For convenience of description, a situation satisfying both conditions 1 and 2 at a specific time point is defined as "condition A". Accordingly, not satisfying condition A may mean that at least one of conditions 1 and 2 is not satisfied.

Condition A may not be satisfied at a specific time point according to a configuration of search space sets by the BS. If condition A is not satisfied at a specific time point, the UE may select and monitor only some of the search space sets configured to satisfy condition A at the corresponding time point, and the BS may transmit the PDCCH through the selected search space sets.

According to an embodiment of the disclosure, the following method may be applied as a method of selecting some of all the configured search space sets.

[Method 1]

If condition A for the PDCCH is not satisfied at a specific time point (slot),
the UE (or the BS) may select a search space set of which a search space type is configured as a common-search space among search space sets existing at the corresponding time point in preference to a search space set of which a search space type is configured as a UE-specific search space.

If search space sets configured as the common-search space are all selected (that is, if condition A is satisfied even after all search spaces configured as the common-search space are selected), the UE (or BS) may select search space sets configured as the UE-specific search space. At this time, if the number of search space sets of configured as the UE-specific search space is plural, a search space set having a lower search space set index may have a higher priority. UE-specific search space sets may be selected within a range in which condition A is satisfied in consideration of the priority.

Below, time and frequency resource allocation methods for data transmission in NR are described.

In NR, in addition to frequency domain resource candidate allocation through BWP indication, the following detailed frequency domain resource allocation (FD-RA) may be provided.

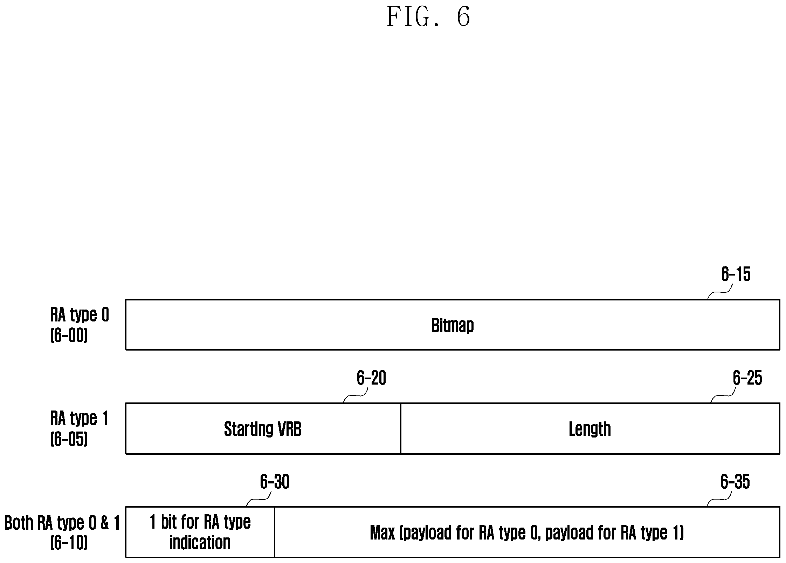

FIG. 6 illustrates an example of frequency axis resource allocation of a physical downlink shared channel (PDSCH) in a wireless communication system according to an embodiment of the disclosure.

FIG. 6 illustrates three frequency axis resource allocation methods of type 0 6-00, type 1 6-05, and dynamic switch 6-10 which can be configured through a higher layer in the wireless communication system (for example, 5G system or NR system) according to an embodiment of the disclosure.

Referring to FIG. 6, when the UE is configured to use only resource type 0 through higher-layer signaling as indicated by reference numeral 6-00, some pieces of downlink control information (DCI) for allocating the PDSCH to the corresponding UE includes a bitmap of NRBG bits. A condition therefor is described later again. At this time, NRBG is the number of resource block groups (RBGs) determined as shown in [Table 14] below according to a BWP size allocated by a BWP indicator and a higher-layer parameter rbg-Size, and data is transmitted in an RBG indicated as 1 by the bitmap.

[Table 14]

| Bandwidth Part Size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

When the UE is configured to use only resource type 1 through higher-layer signaling as indicated by reference numeral 6-05, some pieces of DCI for allocating the PDSCH to the corresponding UE includes frequency axis resource allocation information of $\lceil \log_2 (N_{RB}^{DL,BWP} (N_{RB}^{DL,BWP} +1)/2) \rceil$ bits. A condition therefor is described later again. The BS may configure a starting VRB 6-20 and a length 6-25 of frequency axis resources allocated successively therefrom.

When the UE is configured to use both resource type 0 and resource type 1 through higher-layer signaling as indicated by reference numeral 6-10, some pieces of DCI for allocating the PDSCH to the corresponding UE includes frequency axis resource allocation information of bits of a larger value 6-35 among payload 6-15 for configuring resource type 0 and payload 6-20 and 6-25 for configuring resource type 1. A condition therefor is described later again. At this time, one bit may be added to the first part (MSB) of the frequency axis resource allocation information within the DCI, and the use of resource type 0 may be indicated when the corresponding bit is "0" and the use of resource type 1 may be indicated when the corresponding bit is "1".

Hereinafter, a method of allocating time domain resources for a data channel in a wireless communication system (for example, 5G or NR system) according to an embodiment of the disclosure is described.

The BS may configure a table for time domain resource allocation information for a downlink data channel (physical downlink shared channel (PDSCH)) and an uplink data channel (physical uplink shared channel (PUSCH)) in the UE through higher-layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (corresponding to a time interval in units of slots between a time point at which a PDCCH is received and a time point at which a PDSCH scheduled by the received PDCCH is transmitted, and indicated by K0) or PDCCH-to-PUSCH slot timing (corresponding to a time interval in units of slots between a time point at which a PDCCH is received and a time point at which a PUSCH scheduled by the received PDCCH is transmitted, and indicated by K2), a location and a length of a start symbol in which a PDSCH or a PUSCH is scheduled within the slot, a mapping type of a PDSCH or a PUSCH, and the like. For example, information shown in [Table 15] or [Table 16] below may be transmitted from the BS to the UE.

[Table 15]

| *PDSCH-TimeDomainResourceAllocationList information element* |
|---|
| PDSCH-TimeDomainResourceAllocationList ::= SEQUENCE (SIZE(1.. maxNrofDL-Allocations)) OF PDSCH-TimeDomainResourceAllocation<br><br>PDSCH-TimeDomainResourceAllocation ::= SEQUENCE {<br>k0 INTEGER (0..32)<br>OPTIONAL, --Need S<br>(PDCCH-to-PDSCH timing, slot units)<br>mapping type ENUMERATED {typeA, typeB},<br>(PDSCH mapping type)<br>startSymbolAndLength INTEGER (0..127)<br>(Start symbol and length of PDSCH)<br>} |

[Table 16]

| *PUSCH-TimeDomainResourceAllocationList information element* |
|---|
| PUSCH-TimeDomainResourceAllocationList ::= SEQUENCE (SIZE(1.. maxNrofUL-Allocations)) OF PUSCH-TimeDomainResourceAllocation<br><br>PUSCH-TimeDomainResourceAllocation ::= SEQUENCE {<br>k2 INTEGER (0..32)<br>OPTIONAL, --Need S<br>(PDCCH-to-PUSCH timing, slot units)<br>mapping type ENUMERATED {typeA, typeB},<br>(PUSCH mapping type)<br>startSymbolAndLength INTEGER (0..127)<br>(Start symbol and length of PUSCH)<br>} |

The BS may inform the UE of one of the entries in the table for the time domain resource allocation information through L1 signaling (for example, DCI) (for example, indicated through a 'time domain resource allocation field within DCI). The UE may acquire time domain resource allocation information for a PDSCH or a PUSCH on the basis of the DCI received from the BS.

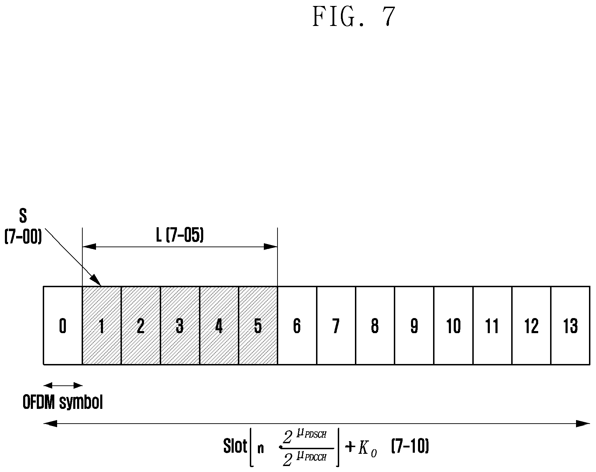

FIG. 7 illustrates an example of allocation of time axis resources of a PDSCH in a wireless communication system according to an embodiment of the disclosure.

Referring to FIG. 7, the BS may indicate a time axis location of PDSCH resources according to subcarrier spacing (SCS) ($\mu_{PDSCH}$, $\mu_{PDCCH}$) of a data channel and a control channel configured using a higher layer, a scheduling offset ($K_0$) value, and an OFDM symbol start location 7-00 and length 7-05 within one slot dynamically indicated through DCI.

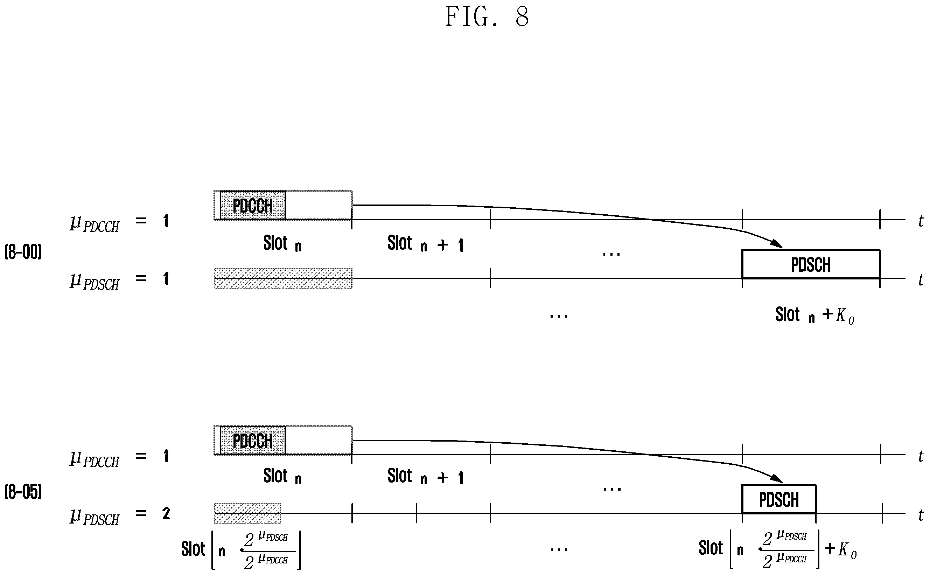

FIG. 8 illustrates an example of allocation of time-axis resources according to subcarrier spacing of a data channel and a control channel in a wireless communication system according to an embodiment of the disclosure.

Referring to FIG. 8, when subcarrier spacings of a data channel and a control channel are the same as each other ($\mu_{PDSCH} = \mu_{PDCCH}$) as indicated by reference numeral 8-00, slot numbers for the data and the control are the same as each other, and thus the BS and the UE may generate a scheduling offset according to a predetermined slot offset K0. On the other hand, when subcarrier spacings of a data channel and a control channel are different from each other ($\mu_{PDSCH} \neq \mu_{PDCCH}$) as indicated by reference numeral 8-05, slot numbers for the data and the control are different from each other, and thus the BS and the UE may generate a scheduling offset according to a predetermined slot offset K0 on the basis of subcarrier spacing of the PDCCH.

In the NR, the terminal transmits uplink control information (UCI) to the base station through physical uplink control channel (PUCCH). The control information may include at least one of HARQ-ACK indicating success or failure of demodulation/decoding for a transport block (TB) received by the UE through the PDSCH, scheduling request (SR) for requesting resource allocation from the UE to the PUSCH base station for uplink data transmission, and channel state information (CSI), which is information for reporting the channel state of the terminal.

The PUCCH resource may be largely divided into a long PUCCH and a short PUCCH according to the length of the allocated symbol. In the NR, the long PUCCH has a length of 4 symbols or more in a slot, and the short PUCCH has a length of 2 symbols or less in a slot.

In more detail about the long PUCCH, the long PUCCH may be used for the purpose of improving uplink cell coverage, and thus may be transmitted in a DFT-S-OFDM scheme, which is a single carrier transmission rather than an OFDM transmission. The long PUCCH supports transmission formats such as PUCCH format 1, PUCCH format 3, and PUCCH format 4 depending on the number of supportable control information bits and whether terminal multiplexing through Pre-DFT OCC support at the front end of the IFFT is supported.

First, the PUCCH format 1 is a DFT-S-OFDM-based long PUCCH format capable of supporting up to 2 bits of control information, and uses as much frequency resources as 1RB. The control information may be constituted with each of or a combination of HARQ-ACK and SR. In PUCCH format 1, an OFDM symbol including a demodulation reference signal (DMRS) that is a demodulation reference signal (or a reference signal) and an OFDM symbol including UCI are repeatedly constituted.

For example, in the case that the number of transmission symbols of PUCCH format 1 is 8 symbols, the first start symbol of 8 symbols is sequentially constituted with DMRS symbol, UCI symbol, DMRS symbol, UCI symbol, DMRS symbol, UCI symbol, DMRS symbol, UCI symbol. The DMRS symbol is spread using an orthogonal code (or orthogonal sequence or spreading code, w_i(m)) on the time axis to a sequence corresponding to the length of 1RB on the frequency axis within one OFDM symbol, and is transmitted after performing IFFT.

The UCI symbol is generated as follows. The UE has a structure to generate d(0) by BPSK modulating 1-bit control information and QPSK modulating 2-bit control information, multiply the generated d(0) by a sequence corresponding to the length of 1 RB on the frequency axis to scramble, spread the scrambled sequence using an orthogonal code (or an orthogonal sequence or spreading code, $w_{i(m)}$) on the time axis, and transmit the same after performing the IFFT.

The UE generates the sequence, based on the group hopping or sequence hopping configuration and the configured ID configured as a higher signal from the base station, and generates a sequence corresponding to a length of 1 RB by cyclic shifting the generated sequence with an initial cyclic shift (CS) value configured as a higher signal.

The $w_{i(m)}$ is determined as $w_i(m) = e^{\frac{j2\pi\phi(m)}{N_{SF}}}$ when the length of the spreading code ($N_{SF}$) is given, and specifically illustrated in Table 16-1 below. In the above, i means the index of the spreading code itself, and m means the index of the elements of the spreading code. Here, the numbers in [ ] in Table 16-1 mean, for example, $\phi(m)$. If the length of the spreading code is 2, and in the case that the index of the configured spreading code is i=0, the spreading code $w_{i(m)}$ becomes $w_i(0) = e^{j2\pi \cdot 0/N_{SF}} = 1$, $w_i(1) = e^{j2\pi \cdot 0/N_{SF}} = 1$, and $w_{i(m)} = [1\ 1]$.

[Table 16-1]

| | Spreading code for PUCCH format 1 | | | | $w_i(m) = e^{\frac{j2\pi\phi(m)}{N_{SF}}}$ | | |
|---|---|---|---|---|---|---|---|
| $N_{SF}$ | $\varphi$ (m) | | | | | | |
| | $i = 0$ | $i = 1$ | $i = 2$ | $i = 3$ | $i = 4$ | $i = 5$ | $i = 6$ |
| 1 | [0] | - | - | - | - | - | - |
| 2 | [0 0] | [0 1] | - | - | - | - | - |
| 3 | [0 0 0] | [0 12] | [0 2 1] | - | - | - | - |
| 4 | [0 0 0 0] | [0 2 0 2] | [0 0 2 2] | [0 2 2 0] | - | - | - |
| 5 | [0 0 0 0 0] | [01234] | [02413] | [0 3 1 42] | [04321] | - | - |
| 6 | [0 0 0 0 0 0] | [01 2 3 4 5] | [024024] | [0 3 0 3 0 3] | [042042] | [0 5 4 3 2 1] | - |
| 7 | [0 0 0 0 0 0 0] | [0 1 2 3 4 5 6] | [0246135] | [03625 1 4] | [04 1 5263] | [0531642] | [0 6 5 4 3 2 1] |

Next, the PUCCH format 3 is a DFT-S-OFDM-based long PUCCH format capable of supporting more than 2 bits of control information, and the number of RBs used can be configured through an higher layer. The control information may be constituted with each of or a combination of HARQ-ACK, SR, and CSI. In the PUCCH format 3, the location of the DMRS symbol is presented according to whether frequency hopping in the slot and whether additional DMRS symbols are configured as illustrated in [Table 17] below.

[Table 17]

| PUCCH format 3/4 transmission length | DRMS location in PUCCH format 3/4 transmission | | | |
|---|---|---|---|---|
| | Additional DRMS is not configured | | Additional DRMS is configured | |
| | Frequency hopping is not configured | Frequency hopping is configured | Frequency hopping is not configured | Frequency hopping is configured |
| 4 | 1 | 0, 2 | 1 | 0, 2 |
| 5 | 0, 3 | | 0, 3 | |
| 6 | 1, 4 | | 1, 4 | |
| 7 | 1, 4 | | 1, 4 | |
| 8 | 1, 5 | | 1, 5 | |
| 9 | 1,6 | | 1,6 | |
| 10 | 2, 7 | | 1, 3, 6, 8 | |
| 11 | 2, 7 | | 1, 3, 6, 9 | |
| 12 | 2, 8 | | 1, 4, 7, 10 | |
| 13 | 2, 9 | | 1, 4, 7, 11 | |
| 14 | 3, 10 | | 1, 5, 8, 12 | |

For example, in the case that the number of transmission symbols of the PUCCH format 3 is 8 symbols, the first start symbol of the 8 symbols starts with 0, and the DMRS is transmitted in the first symbol and the fifth symbol. The above table is applied in the same way to the DMRS symbol location of the PUCCH format 4.

Next, the PUCCH format 4 is a DFT-S-OFDM-based long PUCCH format capable of supporting more than 2 bits of control information, and uses as much frequency resources as 1RB. The control information may be constituted with each of or a combination of HARQ-ACK, SR, and CSI. The difference between the PUCCH format 4 and the PUCCH format 3 is that in the case of the PUCCH format 4, the PUCCH format 4 of a plurality of terminals can be multiplexed within one RB. It is possible to multiplex PUCCH format 4 of a plurality of terminals through application of Pre-DFT OCC to control information in the front of the IFFT. However, the number of transmittable control information symbols of one terminal decreases according to the number of multiplexed terminals. The number of multiplexable terminals, that is, the number of different OCCs that can be used, may be 2 or 4, and the number of OCCs and the OCC index to be applied may be configured through a higher layer.

Next, the short PUCCH will be described. The short PUCCH may be transmitted in both a downlink centric slot and an uplink centric slot. In general, the short PUCCH may be transmitted at the last symbol of the slot or an OFDM symbol at the end (e.g., the last OFDM symbol, the second OFDM symbol from the end, or the last 2 OFDM symbols). Of course, it is also possible to transmit the short PUCCH at any location in the slot. In addition, the short PUCCH may be transmitted using one OFDM symbol or two OFDM symbols. The short PUCCH may be used to shorten a delay time compared to the long PUCCH in a situation where uplink cell coverage is good, and is transmitted in a CP-OFDM scheme.

The short PUCCH supports transmission formats such as PUCCH format 0 and PUCCH format 2 according to the number of supportable control information bits. First, the PUCCH format 0 is a short PUCCH format capable of supporting up to 2 bits of control information, and uses frequency resources of 1 RB. The control information may be constituted with each of or a combination of HARQ-ACK and SR. The PUCCH format 0 does not transmit DMRS, but has a structure of transmitting only sequences mapped to 12 subcarriers in the frequency axis within one OFDM symbol. The terminal generates a sequence, based on the group hopping or sequence hopping configuration and configured ID configured as a higher signal from the base station, cyclic shifts the generated sequence to the final cyclic shift (CS) value obtained by adding another CS value according to whether it is ACK or NACK to the indicated initial CS value, maps it to 12 subcarriers, and transmits the same.

For example, in the case that HARQ-ACK is 1 bit, as in the following Table 18, if it is ACK, 6 is added to the initial CS value to generate the final CS, and if it is NACK, 0 is added to the initial CS to generate the final CS. The CS value 0 for NACK and 6 for ACK are defined in the standard, and the terminal always generates PUCCH format 0 according to the value to transmit 1-bit HARQ-ACK.

[Table 18]

| 1 Bit HARQ-ACK | NACK | ACK |
|---|---|---|
| Final CS | (Initial CS + O) mod 12 = initial CS | (Initial CS + 6) mod 12 |

For example, in the case that HARQ-ACK is 2 bits, 0 is added to the initial CS value if (NACK, NACK) as in the following Table 19, and 3 is added to the initial CS value if (NACK, ACK), and if (ACK, ACK)), 6 is added to the initial CS value, and 9 is added to the initial CS value if (ACK, NACK). The CS value 0 for (NACK, NACK), the CS value 3 for (NACK, ACK), the CS value 6 for (ACK, ACK), and the CS value 9 for (ACK, NACK) are defined in the standard. The terminal always transmits a 2-bit HARQ-ACK by generating PUCCH format 0 according to the above values.

In the case that the final CS value exceeds 12 by the CS value added according to ACK or NACK to the initial CS value, since the sequence length is 12, modulo 12 is applied to the final CS value.

[Table 19]

| 2 Bit HARQ-ACK | NACK, NACK | NACK, ACK | ACK, ACK | ACK, NACK |
|---|---|---|---|---|
| Final CS | (Initial CS + O) mod 12= initial CS | (Initial CS + 3) mod 12 | (Initial CS + 6) mod 12 | (Initial CS + 9) mod 12 |

Next, the PUCCH format 2 is a short PUCCH format that supports more than 2 bits of control information, and the number of RBs used can be configured through a higher layer. The control information may be constituted with each of or a combination of HARQ-ACK, SR, and CSI. In the PUCCH format 2, the location of the subcarrier through which the DMRS is transmitted within one OFDM symbol is fixed to the subcarrier having indexes of #1, #4, #7, and #10, when the index of the first subcarrier is #0, as shown in FIG. 414. The control information is mapped to the remaining subcarriers through a modulation process after channel coding except for the subcarrier where the DMRS is located.

In summary, values that may be configured for each of the above-described PUCCH formats and their ranges may be arranged as illustrated in Table 20 below. In the case that the value does not need to be configured in the Table 20, it is indicated as N.A.

[Table 20]

| | | PUCCH Format 0 | PUCCH Format 1 | PUCCH Format 2 | PUCCH Format 3 | PUCCH Format 4 |
|---|---|---|---|---|---|---|
| Starting symbol | Configur ability | √ | √ | √ | √ | √ |
| | Value range | 0-13 | 0 - 10 | 0-13 | 0 - 10 | 0 - 10 |
| Number of symbols in a slot | Configur ability | √ | √ | √ | √ | √ |
| | Value range | 1, 2 | 4 - 14 | 1, 2 | 4 - 14 | 4 - 14 |
| Index for identifyin g starting PRB | Configur ability | √ | √ | √ | √ | √ |
| | Value range | 0 - 274 | 0 - 274 | 0 - 274 | 0 - 274 | 0 - 274 |
| Number of PRBs | Configur ability | N.A. | N.A. | √ | √ | N.A. |
| | Value range | N.A.(Default is 1) | N.A. (Default is 1) | 1 - 16 | 1 - 6, 8 - 10, 12, 15, 16 | N.A. (Default is 1) |
| Enabling a FH | Configur ability | √ | √ | √ | √ | √ |
| | Value range | On/Off (only for 2 symbol) | On/Off | On/Off (only for 2 symbol) | On/Off | On/Off |
| Freq.cy resource of 2nd hop if FH is enabled | Configur ability | √ | √ | √ | √ | √ |
| | Value range | 0 - 274 | 0 - 274 | 0 - 274 | 0 - 274 | 0 - 274 |
| Index of initial cyclic shift | Configur ability | √ | √ | N.A. | N.A. | N.A. |
| | Value range | 0 - 11 | 0 - 11 | N.A. | 0 - 11 | 0 - 11 |
| Index of time-dom ain OCC | Configur ability | N.A. | √ | N.A. | N.A. | N.A. |
| | Value range | N.A. | 0 - 6 | N.A. | N.A. | N.A. |
| Length of Pre-DFT OCC | Configur ability | N.A. | N.A. | N.A. | N.A. | √ |
| | Value range | N.A. | N.A. | N.A. | N.A. | 2, 4 |
| Index of Pre-DFT OCC | Configur ability | N.A. | N.A. | N.A. | N.A. | √ |
| | Value range | N.A. | N.A. | N.A. | N.A. | 0, 1, 2, 3 |

Meanwhile, in order to improve uplink coverage, multi-slot repetition may be supported for PUCCH formats 1, 3, and 4, PUCCH repetition can be configured for each PUCCH format.

The terminal repeatedly transmits the PUCCH including UCI as many as the number of slots configured through nrofSlots, which is higher layer signaling. For the repetitive PUCCH transmission, the PUCCH transmission in each slot may be performed using the same number of consecutive symbols, and the corresponding consecutive symbols may be configured through a nrofSymbols in the PUCCH-format 1, the PUCCH-format 3, or the PUCCH-format 4, which is higher layer signaling. For the repetitive PUCCH transmission, the PUCCH transmission in each slot may be performed using the same start symbol, and the corresponding start symbol may be configured through a startingSymbolIndex in the PUCCH-format 1, the PUCCH-format 3, or the PUCCH-format 4, which is higher layer signaling.

For the repetitive PUCCH transmission, if the terminal has been configured to perform frequency hopping in PUCCH transmission in different slots, the terminal performs frequency hopping in units of slots. In addition, if the terminal has been configured to perform frequency hopping in the PUCCH transmission in different slots, the terminal starts the PUCCH transmission from the first PRB index configured through startingPRB, which is higher layer signaling, in the even-numbered slot, and in the odd-numbered slot, the terminal starts the PUCCH transmission from the second PRB index configured through secondHopPRB, which is higher layer signaling.

Additionally, if the terminal is configured to perform frequency hopping in PUCCH transmission in different slots, the index of the slot in which the terminal is instructed to transmit the first PUCCH is 0, and during the configured total number of repetitive PUCCH transmissions, the value of the number of repetitive PUCCH transmissions is increased in each slot regardless of the PUCCH transmission performed. If the terminal is configured to perform frequency hopping in PUCCH transmission in different slots, the terminal does not expect that frequency hopping in the slot is configured when transmitting PUCCH. If the terminal is not configured to perform frequency hopping in PUCCH transmission in different slots but is configured for frequency hopping in a slot, the first and second PRB indexes are applied equally in the slot.

Next, the PUCCH resource configuration of the base station or terminal is described. The base station may configure PUCCH resources for each BWP through a higher layer for a specific terminal. The configuration may be as in Table 21.

[Table 21]

```
    PUCCH-Config ::=                              SEQUENCE {
        resourceSetToAddModList                        SEQUENCE (SIZE
(1..maxNrofPUCCH-ResourceSets)) OF PUCCH-ResourceSet    OPTIONAL,
-- Need N
        resourceSetToReleaseList                       SEQUENCE (SIZE
(1..maxNrofPUCCH-ResourceSets)) OF PUCCH-ResourceSetId OPTIONAL,
-- Need N
        resourceToAddModList                           SEQUENCE (SIZE
(1..maxNrofPUCCH-Resources)) OF PUCCH-Resource          OPTIONAL,
-- Need N
        resourceToReleaseList                          SEQUENCE (SIZE
(1..maxNrofPUCCH-Resources)) OF PUCCH-ResourceId        OPTIONAL,
-- Need N
        format1                                       SetupRelease {
PUCCH-FormatConfig }                                     OPTIONAL,
-- Need M
        format2                                       SetupRelease {
PUCCH-FormatConfig }                                     OPTIONAL,
-- Need M
        format3                                       SetupRelease {
PUCCH-FormatConfig }                                     OPTIONAL,
-- Need M
        format4                                       SetupRelease {
PUCCH-FormatConfig }                                     OPTIONAL,
-- Need M
        schedulingRequestResourceToAddModList      SEQUENCE   (SIZE
(1..maxNrofSR-Resources)) OF SchedulingRequestResourceConfig

OPTIONAL, -- Need N
        schedulingRequestResourceToReleaseList     SEQUENCE   (SIZE
(1..maxNrofSR-Resources)) OF SchedulingRequestResourceId

OPTIONAL, -- Need N
        multi-CSI-PUCCH-ResourceList                   SEQUENCE (SIZE
(1..2)) OF PUCCH-ResourceId                              OPTIONAL,
-- Need M
        dl-DataToUL-ACK                                SEQUENCE (SIZE
(1..8)) OF INTEGER (0..15)                               OPTIONAL,
-- Need M
        spatialRelationInfoToAddModList                SEQUENCE (SIZE
(1..maxNrofSpatialRelationInfos) OF PUCCH-SpatialRelationInfo

OPTIONAL, -- Need N
```

```
        spatialRelationInfoToReleaseList              SEQUENCE (SIZE
(1..maxNrofSpatialRelationInfos)) OF PUCCH-SpatialRelationInfoId

OPTIONAL, -- Need N
        pucch-PowerControl
PUCCH-PowerControl
OPTIONAL, -- Need M
        ...,
    }
```

According to the above table, one or a plurality of PUCCH resource sets in the PUCCH resource setting for a specific BWP may be configured, and a maximum payload value for UCI transmission may be configured in some of the PUCCH resource sets. Each PUCCH resource set may belong to one or more PUCCH resources, and each of the PUCCH resources may belong to one of the above-described PUCCH formats.

For the PUCCH resource set, the maximum payload value of the first PUCCH resource set may be fixed to 2 bits, and thus the corresponding value may not be separately configured through a higher layer. In the case that the remaining PUCCH resource sets are configured, the index of the corresponding PUCCH resource set may be configured in ascending order according to the maximum payload value, and the maximum payload value may not be configured in the last PUCCH resource set. The higher layer configuration for the PUCCH resource set may be as illustrated in Table 22 below.

[Table 22]

```
    -- A set with one or more PUCCH resources
    PUCCH-ResourceSet ::=                    SEQUENCE {
        pucch-ResourceSetId
PUCCH-ResourceSetId,
        resourceList                         SEQUENCE (SIZE
(1..maxNrofPUCCH-ResourcesPerSet)) OF PUCCH-ResourceId,
        maxPayloadMinus1                           INTEGER
(4..256)
OPTIONAL  -- Need R
    }
```

The resourceList parameter of the table may include IDs of PUCCH resources belonging to the PUCCH resource set.

If at the time of initial access or in the case that the PUCCH resource set is not configured, a PUCCH resource set as illustrated in Table 23, which is constituted with a plurality of cell-specific PUCCH resources in the initial BWP, may be used. The PUCCH resource to be used for initial access in this PUCCH resource set may be indicated through SIB 1.

[Table 23]

| In dex | PUCCH format | First symbol | Number of symbols | PRB offset $RB_{\mathrm{BWP}}^{\mathrm{offset}}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |

(continued)

| In dex | PUCCH format | First symbol | Number of symbols | PRB offset $RB_{BWP}^{offset}$ | Set of initial CS indexes |
|---|---|---|---|---|---|
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor N_{BWP}^{size}/4 \right\rfloor$ | {0, 3, 6, 9} |

The maximum payload of each PUCCH resource included in the PUCCH resource set may be 2 bits in case of PUCCH format 0 or 1, and may be determined by symbol length, number of PRBs, and maximum code rate in case of the remaining formats. The symbol length and number of PRBs may be configured for each PUCCH resource, and the maximum code rate may be configured for each PUCCH format.

Next, PUCCH resource selection for UCI transmission is described. In the case of SR transmission, a PUCCH resource for an SR corresponding to schedulingRequestID may be configured through a higher layer as shown in Table 24. The PUCCH resource may be a resource belonging to PUCCH format 0 or PUCCH format 1.

[Table 24]

```
    SchedulingRequestResourceConfig ::=      SEQUENCE {
        schedulingRequestResourceId
SchedulingRequestResourceId,
        schedulingRequestID                  SchedulingRequestId,
        periodicityAndOffset                 CHOICE {
            sym2                                 NULL,
            sym6or7                              NULL,
            sl1                                          NULL,
-- Recurs in every slot
            sl2                                  INTEGER (0..1),
            sl4                                  INTEGER (0..3),
            sl5                                  INTEGER (0..4),
            sl8                                  INTEGER (0..7),
            sl10                                 INTEGER (0..9),
            sl16                                 INTEGER (0..15),
            sl20                                 INTEGER (0..19),
            sl40                                 INTEGER (0..39),
            sl80                                 INTEGER (0..79),
            sl160                                INTEGER (0..159),
            sl320                                INTEGER (0..319),
            sl640                                INTEGER (0..639)
        }
OPTIONAL,   -- Need M
        resource                                 PUCCH-ResourceId
OPTIONAL    -- Need M
    }
```

For the configured PUCCH resource, a transmission period and an offset are configured through the periodicityAndOffset parameter of Table 24. In the case that there is uplink data to be transmitted by the terminal at a time corresponding to the configured period and offset, the corresponding PUCCH resource is transmitted, otherwise the corresponding PUCCH resource may not be transmitted.

In the case of CSI transmission, a PUCCH resource for transmitting a periodic or semi-persistent CSI report through PUCCH may be configured in the pucch-CSI-ResourceList parameter as shown in [Table 25] as higher signaling. The parameter includes a list of PUCCH resources for each BWP for the cell or CC to which the corresponding CSI report is to be transmitted. The PUCCH resource may be a resource belonging to PUCCH format 2 or PUCCH format 3 or PUCCH format 4.

[Table 25]

```
CSI-ReportConfig ::=                       SEQUENCE {
    reportConfigId                         CSI-ReportConfigId,
    carrier                                    ServCellIndex
OPTIONAL,    -- Need S
    …
    reportConfigType                       CHOICE {
        periodic                               SEQUENCE {
            reportSlotConfig
CSI-ReportPeriodicityAndOffset,
            pucch-CSI-ResourceList                 SEQUENCE (SIZE
(1..maxNrofBWPs)) OF PUCCH-CSI-Resource
        },
    …
    }
```

For the PUCCH resource, a transmission period and an offset are configured through reportSlotConfig of Table 25.

In the case of HARQ-ACK transmission, a resource set of PUCCH resources to be transmitted is first selected according to the payload of the UCI including the corresponding HARQ-ACK. That is, a PUCCH resource set having a minimum payload not smaller than the UCI payload is selected. Next, the PUCCH resource in the PUCCH resource set can be selected through the PUCCH resource indicator (PRI) in the DCI scheduling the TB corresponding to the corresponding HARQ-ACK, and the PRI may be the PUCCH resource indicator specified in Table 5 or Table 6. The relationship between the PRI configured as higher signaling and the PUCCH resource selected from the PUCCH resource set may be as shown in Table 26.

[Table 26]

| PUCCH resource indicator | PUCCH resource |
|---|---|
| '000' | 1st PUCCH resource provided by *pucch-ResourceId* obtained from the 1st value of *resourceList* |
| '001' | 2nd PUCCH resource provided by *pucch -ResourceId* obtained from the 2nd value of *resourceList* |
| '010' | 3rd PUCCH resource provided by *pucch-ResourceId* obtained from the 3rd value of *resourceList* |
| '011' | 4th PUCCH resource provided by *pucch-ResourceId* obtained from the 4th value of *resourceList* |
| '100' | 5th PUCCH resource provided by *pucch-ResourceId* obtained from the 5th value of *resourceList* |
| '101' | 6th PUCCH resource provided by *pucch-ResourceId* obtained from the 6th value of *resourceList* |
| '110' | 7th PUCCH resource provided by *pucch-ResourceId* obtained from the 7th value of *resourceList* |
| '111' | 8th PUCCH resource provided by *pucch -ResourceId* obtained from the 8th value of *resourceList* |

If the number of PUCCH resources in the selected PUCCH resource set is greater than 8, the PUCCH resource may be selected by the following equation 1.

[Equation 1]

$$r_{PUCCH} = \begin{cases} \left\lfloor \dfrac{n_{CCE,p} \cdot \left\lceil R_{PUCCH}/8 \right\rceil}{N_{CCE,p}} \right\rfloor + \Delta_{PRI} \cdot \left\lceil \dfrac{R_{PUCCH}}{8} \right\rceil & \text{if} \quad \Delta_{PRI} < R_{PUCCH} \bmod 8 \\[4ex] \left\lfloor \dfrac{n_{CCE,p} \cdot \left\lfloor R_{PUCCH}/8 \right\rfloor}{N_{CCE,p}} \right\rfloor + \Delta_{PRI} \cdot \left\lfloor \dfrac{R_{PUCCH}}{8} \right\rfloor + R_{PUCCH} \bmod 8 & \text{if} \quad \Delta_{PRI} \geq R_{PUCCH} \bmod 8 \end{cases}$$

In the above equation 1,

$r_{PUCCH}$ is the index of the selected PUCCH resource in the PUCCH resource set,
$R_{PUCCH}$ is the number of PUCCH resources belonging to the PUCCH resource set,
$\Delta_{PRI}$ is the PRI value,
$N_{CCE,p}$ is the total number of CCEs of the CORESET p to which the receiving DCI belongs, and
$n_{CCE,p}$ is the first CCE index for the receiving DCI.

The time point at which the corresponding PUCCH resource is transmitted is after the $K_1$ slot from the TB transmission corresponding to the corresponding HARQ-ACK. The $K_1$ value candidate is configured as a higher layer, and more specifically, is configured in the dl-DataToUL-ACK parameter in the PUCCH-Config specified in [Table 21]. The $K_1$ value of one of these candidates may be selected by the PDSCH-to-HARQ feedback timing indicator in the DCI scheduling the TB, and this value may be a value specified in Table 5 or Table 6. Meanwhile, the unit of the $K_1$ value may be a slot unit or a sub slot unit. Here, a sub slot is a unit of a length smaller than that of a slot, and one or a plurality of symbols may constitute one sub slot.

Next, a case where two or more PUCCH resources are located in one slot is described. The terminal can transmit UCI through one or two PUCCH resources in one slot or sub slot, and when UCI is transmitted through two PUCCH resources in one slot/sub slot, i) each PUCCH resource does not overlap in units of symbols, and ii) at least one PUCCH resource may be a short PUCCH. Meanwhile, the terminal may not expect to transmit a plurality of PUCCH resources for HARQ-ACK transmission within one slot.

Next, it is described for the PUCCH transmission procedure in the case that two or more PUCCH resources overlap. In the case that two or more PUCCH resources are overlapped, one of the overlapping PUCCH resources may selected or a new PUCCH resource may be selected according to the condition that the transmitted PUCCH resource should not overlap in symbol units. In addition, the UCI payload transmitted through the overlapping PUCCH resource may be multiplexed and transmitted or some may be dropped. First, the case where multi-slot repetition is not configured in PUCCH resource (case 1) and multi-slot repetition (case 2) is configured are described.

In the case that the PUCCH resource is overlapped for Case 1, Case 1 is divided into Case 1-1) a case where two or more PUCCH resources for HARQ-ACK transmission are overlapped, and Case 1-2) the remaining cases.

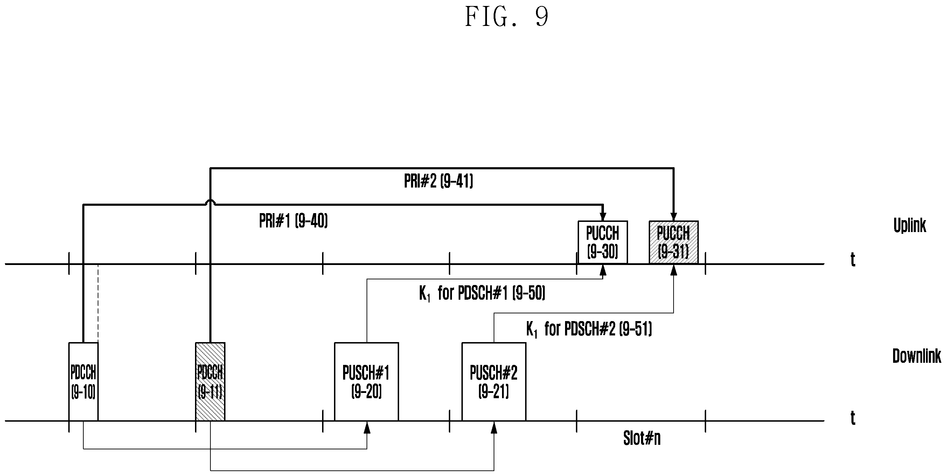

The case corresponding to Case 1-1) is illustrated in FIG. 9.

FIG. 9 is a view illustrating a case of overlapping a plurality of PUCCH resources for HARQ-ACK transmission for PDSCH in the case that multi-slot repetition is not configured according to an embodiment of the disclosure. With reference to FIG. 9, for two or more different PDCCHs 9-10 and 9-11 scheduling the PDSCH, in the case that the transmission slots of the PUCCH resources corresponding to each PDCCH are the same, the corresponding PUCCH resources may be considered to be overlapped with each other. That is, in the case that the uplink slots corresponding to the $K_1$ values 9-50 and 9-51 indicated by a plurality of PDCCHs are the same, the PUCCH resources corresponding to the corresponding PDCCHs may be considered as overlapping each other.

In this case, between the PUCCH resources indicated by the PRIs 9-40 and 9-41 in the PDCCH, only the PUCCH resource 9-31 selected based on the PM 9-41 corresponding to the PDCCH 9-11 transmitted at the last point is selected, and HARQ-ACK information is transmitted on the PUCCH resource. Therefore, HARQ-ACK information for PDSCH 9-21, and HARQ-ACK information for other PUCCH 9-30 overlapping with the PUCCH resource 9-31 are all transmitted after being encoded by the predefined HARQ-ACK codebook through the selected PUCCH resource 9-31.

Next, for the Case 1-2, a case in which the PUCCH resource for HARQ-ACK transmission and the PUCCH resource for SR and/or CSI transmission overlap, or a case where a plurality of PUCCH resources for SR and/or CSI transmission overlap is described. In the above case, when a plurality of PUCCH resources transmitted in the same slot overlap more than one symbol in the time axis, it is defined that the corresponding PUCCH resource overlaps, and whether or not multiplexing UCIs within these resources can be summarized as shown in Table 27 below.

[Table 27]

| PUCCH 1 PUCCH 2 | SR | HARQ-ACK | CSI |
|---|---|---|---|
| SR | - | Case 1-2-1 (Multiplex or not depending on PUCCH format) | Always multiplex |
| HARQ-ACK | | Always multiplex (HARQ-ACK codebook) | Case 1-2-2 (Multiplex or not by higher layer) |
| CSI | Always multiplex | Case 1-2-2 | Case 1-2-2 |

According to the above table, in the case that the PUCCH resources to which the HARQ-ACK transmitted overlap, or in the case that the PUCCHs through which SR and CSI are transmitted overlap, these UCIs are always multiplexed.

Meanwhile, in the case that each PUCCH resource to which SR and HARQ-ACK are transmitted overlap, that is, in the case of Case 1-2-1, whether or not UCI multiplexing is performed according to the format of the PUCCH resource is divided as follows.

SR on PUCCH format 0+HARQ-ACK on PUCCH format 1: SR is dropped and only HARQ-ACK is transmitted

The remaining cases: SR and HARQ-ACK are both multiplexed

In addition, the remaining cases corresponding to Case 1-2-2, that is, in the case that the HARQ-ACK and the CSI overlap between the PUCCH resource to be transmitted, or in the case of the overlap between a plurality of PUCCH resources in which CSI is transmitted, the multiplexing of these UCIs may follow the higher layer configuration. In addition, whether to multiplex between HARQ-ACK and CSI and whether to multiplex between multiple CSIs may be independently performed.

For example, whether HARQ-ACK and CSI are multiplexed may be configured through simultaneous HARQ-ACK-CSI parameters for each PUCCH format 2, 3, or 4, and the corresponding parameters may all be configured to the same value for the PUCCH format. In the case that it is configured not to perform multiplexing through the above parameter, only HARQ-ACK is transmitted and the overlapping CSI may be dropped. In addition, whether to multiplex a plurality of CSIs may be configured through a multi-CSI-PUCCH-ResourceList parameter in PUCCH-Config. That is, in the case that the multi-CSI-PUCCH-ResourceList parameter is configured, inter-CSI multiplexing may be performed. Otherwise, only a PUCCH corresponding to a CSI having a higher priority may be transmitted according to the inter-CSI priority.

In the case that the UCI multiplexing is performed as described above, the selection method of the PUCCH resource to transmit the corresponding UCI resource and the multiplexing method may differ according to the information of the overlapped UCI and the format of the PUCCH resource, which can be summarized as shown in Table 28 below.

[Table 28]

| PUCCH 1 PUCCH 2 | | SR (format 0/1) | HARQ-ACK | | CSI (format 2/3/4) |
|---|---|---|---|---|---|
| | | | Format 1 | Format 0/2/3/4 | |
| SR (format 0/1) | | - | Option 1 | Option 2 | Option 3 |
| HARQ-ACK | Format 1 | Option 1 | Option 4 | Option 4 | Option 5 (grant-based) Option 6 (SPS) |
| | Format 0/2/3/4 | Option 2 | Opt ion 4 | Option 4 | Option 5 (grant-based) Option 6 (SPS) |
| CSI (format 2/3/4) | | Option 3 | Option 5 (grant-based) Option 6 (SPS) | Option 5 (grant-based) Opt ion 6 (SPS) | Option 7 |

Each option in the above table is as follows.

- Option 1: The terminal makes different PUCCH resource selection according to the SR value of the HARQ-ACK PUCCH resource and the overlapped SR PUCCH resource. That is, if the SR value is positive, PUCCH resource for SR is selected, and if the SR value is negative, PUCCH resource for HARQ-ACK is selected. HARQ-ACK information is transmitted to the selected PUCCH resource.
- Option 2: The terminal transmits by multiplexing HARQ-ACK information and SR information to PUCCH resource for HARQ-ACK transmission.
- Option 3: The terminal transmits by multiplexing SR information and CSI to PUCCH resource for CSI transmission.
- Option 4: PUCCH resource transmission for overlapping between HARQ-ACK. Detailed operation has been described in case 1-1).
- Option 5: In the case that the PUCCH resource for HARQ-ACK corresponding to the PDSCH scheduled as PDCCH and the PUCCH resource for CSI transmission are overlapped and the multiplexing between HARQ-ACK and CSI is configured as the higher layer, the terminal multiplexes and transmits HARQ-ACK information and CSI information to a PUCCH resource for HARQ-ACK.
- Option 6: In the case that the PUCCH resource for HARQ-ACK corresponding to the semi-persistent scheduling (SPS) PDSCH and the PUCCH resource for CSI transmission are overlapped and the multiplexing between HARQ-ACK and CSI is configured as the higher layer, the terminal multiplexes and transmits HARQ-ACK information and CSI information to a PUCCH resource for CSI transmission.

In the case that the PUCCH resource list for multiplexing to the higher layer, that is, multi-CSI-PUCCH-ResourceList is configured, the terminal selects one of the resources in the list with the lowest index capable of transmitting all the multiplexed UCI payloads, and then transmits UCI payload. In the case that there is no resource capable of transmitting all of the multiplexed UCI payloads in the list, the terminal selects the resource with the largest index and then transmits HARQ-ACK and CSI reports as many as the number of transmittable to the resource.

- Option 7: In the case that a plurality of CSI transmission PUCCH resources is overlapped and multiplexing between multiple CSIs is configured as a higher layer, the terminal selects one resource having the lowest index capable of transmitting all of the multiplexed UCI payloads in the PUCCH resource list for CSI multiplexing configured as a higher layer, that is, multi-CSI-PUCCH-ResourceList, and then transmits the UCI payload. In the case that there is no resource capable of transmitting all of the multiplexed UCI payloads in the list, the terminal selects the resource with the largest index and then transmits as many CSI reports as possible to the corresponding resource.

In the above, for the convenience of description, the focus has dealt with the case where two PUCCH resources are overlapped, but the method may be similarly applied even the case where three or more PUCCH resources overlap. For example, in the case that SR+HARQ-ACK multiplexed PUCCH resource and CSI PUCCH resource overlap, the multiplexing method between HARQ-ACK and CSI can be followed.

In the case that it is configured not to perform multiplexing between specific UCIs, UCI with a higher priority is transmitted according to the priority in the order of HARQ-ACK>SR>CSI, and UCI with a lower priority may be dropped. In the case that a plurality of CSI PUCCH resources is configured not to perform multiplexing when overlapping, PUCCH corresponding to the high priority CSI is transmitted, and PUCCH corresponding to other CSI may be dropped.

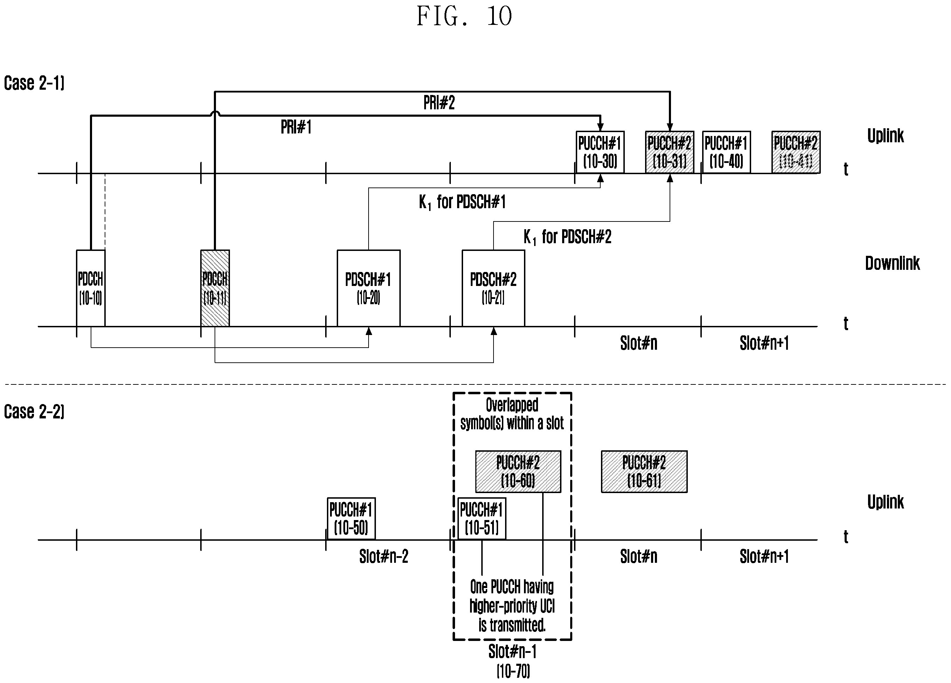

Next, Case 2, which is the case where multi-slot repetition is configured, is divided into cases where two or more PUCCH resources for HARQ-ACK transmission are located in the same start slot Case 2-1) and the other cases Case 2-2). Each case is illustrated in FIG. 10.

FIG. 10 is a view illustrating a case in which a PUCCH resource overlaps in the case of the configuration of multi-slot repetition according to an embodiment of the disclosure.

With reference to Case 2-1), in the case that multi-slot repetition is configured in the PUCCH resource for HARQ-ACK, that is, in the case that PUCCH #1 is repeatedly transmitted over a plurality of slots 10-30 and 10-40 and PUCCH #2 is also repeatedly transmitted over the plurality of slots 10-31 and 10-41, if the start slots of the two PUCCHs indicated by $K_1$ are the same, a single PUCCH resource (PUCCH transmitted at the latest time in one slot), that is, PUCCH #2, may be selected in the same manner as in Case 1-1). Accordingly, HARQ-ACK information corresponding to PDSCH #1 and PDSCH #2 is all multiplexed and transmitted to the PUCCH through the HARQ-ACK codebook.

For the convenience of description, a case in which a plurality of PUCCHs subjected to multi-slot repetition is overlapped is exemplified, but the same method may be applied in the case of overlapping between the multi-slot repetition PUCCH and the PUCCH transmitted in a single slot.

Case 2-2) corresponds to a case in which a symbol unit overlap occurs between PUCCH for HARQ-ACK transmission and PUCCH for SR or CSI transmission, or between PUCCHs for multiple SR or CSI transmission. That is, in the case that PUCCH #1 is repeatedly transmitted over a plurality of slots 10-50 and 10-51 and PUCCH #2 is also repeatedly transmitted over a plurality of slots 10-60 and 10-61, it corresponds to the case where more than one symbol overlap in one slot 10-70 occurs between PUCCH #1 and PUCCH #2.

Between PUCCHs in which more than one symbol overlap occurs in the corresponding slot 10-70, by comparing the priority between UCIs in the PUCCH, UCI with higher priority is transmitted, and other UCIs are dropped in the corresponding slot. In this case, the priority between the UCI follows HARQ-ACK>SR>CSI in the highest order.

In addition, in the case that a plurality of CSI PUCCH resources overlaps, the PUCCH corresponding to the high priority CSI may be transmitted, and the PUCCH corresponding to another CSI may be dropped in the corresponding slot. PUCCH transmission or drop according to the above-described priority is performed only in the slot where the overlap per symbol has occurred, and is not performed in other slots. That is, the PUCCH in which multi-slot repetition is configured may be dropped in the slot where the symbol unit overlap occurs, but may be transmitted as configured in the remaining slots.

In the above case, for the convenience of description, a case in which a plurality of PUCCHs subjected to multi-slot repetition are overlapped is exemplified, but the same method may also be applied to the case where overlap occurs between the multi-slot repetition PUCCH and the PUCCH transmitted in a single slot.

In addition, the overlap between the PUCCH and PUSCH transmission is described. If the terminal transmits PUCCH in the first slot of the repeated transmission of $N_{PUCCH}^{repeat} > 1$, transmits the PUSCH in the second slot. In the case that PUCCH transmission is overlapped with PUSCH transmission in one or a plurality of slots, or that UCIs are multiplexed in PUSCH in overlapped slots, the terminal transmits PUCCH and does not transmit PUSCH in slots in which PUCCH and PUSCH overlap.

In the single slot transmission and multi-slot repetition of the PUCCH, the above-described slot for low-latency services such as URLLC may be replaced with a mini-slot and used. A mini-slot has a shorter length on the time axis than a slot, and one mini-slot may be constituted with fewer than 14 symbols. For example, 2 or 7 symbols may constitute one mini-slot. In the case that a mini-slot is configured through a higher layer or the like, units such as the HARQ-ACK feedback timing K1 value and the number of repetitive transmissions may be replaced by mini-slot units in the existing slot. Mini-slot configuration may be applied to all PUCCH transmissions or may be limited to PUCCH transmission for a specific service. For example, slot unit transmission may be applied to PUCCH for eMBB service, whereas mini-slot unit transmission may be applied to PUCCH for URLLC service.

Next, beam configuration to be applied to PUCCH transmission is described. If the terminal does not have a terminal-specific configuration for PUCCH resource configuration (dedicated PUCCH resource configuration), the PUCCH resource set is provided through the higher signaling, pucch-ResourceCommon, in this time, the beam configuration for PUCCH transmission follows the beam configuration used in PUSCH transmission scheduled through the random access response (RAR) UL grant. If the terminal has a terminal-specific configuration for PUCCH resource configuration (dedicated PUCCH resource configuration), the beam configuration for PUCCH transmission is provided through pucch-spatialRelationInfoId, which is the higher signaling illustrated in Table 29. If the terminal has been configured with one pucch-spatialRelationInfoId, beam configuration for PUCCH transmission of the terminal is provided through one pucch-spatialRelationInfoId. If the terminal is configured with a plurality of pucch-spatialRelationInfoIDs, the terminal is instructed to activate one of the plurality of pucch-spatialRelationInfoIDs through a MAC control element (CE). The terminal may receive up to eight pucch-spatialRelationInfoIDs through higher signaling, and may receive an indication that only one pucch-spatialRelationInfoID is activated among them.

In the case that the terminal is instructed to activate any pucch-spatialRelationInfoID through the MAC CE, the terminal applies pucch-spatialRelationInfoID activation through MAC CE from a slot that first appears after $3N_{slot}^{subframe,\mu}$ slot from a slot in which HARQ-ACK transmission for a PDSCH that transmits MAC CE including activation information for pucch-spatialRelationInfoID. In the above, $\mu$ is a neurology applied to PUCCH transmission, and $N_{slot}^{subframe,\mu}$ is the number of slots per subframe in a given neurology. The higher layer configuration for pucch-spatialRelationInfo may be as shown in Table 29 below. The pucch-spatialRelationInfo may be interchangeable with PUCCH beam information.

[Table 29]

```
    PUCCH-SpatialRelationInfo ::=              SEQUENCE {
        pucch-SpatialRelationInfoId
PUCCH-SpatialRelationInfoId,
        servingCellId                               ServCellIndex
OPTIONAL,    -- Need S
        referenceSignal                         CHOICE {
            ssb-Index                               SSB-Index,
            csi-RS-Index
NZP-CSI-RS-ResourceId,
            srs                                 SEQUENCE {
                resource
SRS-ResourceId,
                uplinkBWP                           BWP-Id
        }
        },
        pucch-PathlossReferenceRS-Id
PUCCH-PathlossReferenceRS-Id,
        p0-PUCCH-Id                             P0-PUCCH-Id,
        closedLoopIndex                         ENUMERATED { i0,
i1 }
        }

    PUCCH-SpatialRelationInfoId   ::=                     INTEGER
(1..maxNrofSpatialRelationInfos)
```

According to Table 29, one referenceSignal configuration may exist in a specific pucch-spatialRelationInfo configuration, and the referenceSignal is ssb-Index indicating a specific SS/PBCH, csi-RS-Index indicating a specific CSI-RS, or srs indicating a specific SRS. If the referenceSignal is configured as ssb-Index, the terminal may configure the beam used when receiving the SS/PBCH corresponding to the ssb-Index among SS/PBCHs in the same serving cell as a beam for PUCCH transmission, or if servingCellId is provided, the terminal may configure the beam used when receiving an SS/PBCH corresponding to an ssb-Index among SS/PBCHs in a cell indicated by servingCellId as a beam for pucch transmission. If the referenceSignal is configured as csi-RS-Index, the terminal may configure the beam used when receiving a CSI-RS corresponding to csi-RS-Index among CSI-RSs in the same serving cell as a beam for PUCCH transmission, or if servingCellId is provided, the terminal may configure the beam used when receiving a CSI-RS corresponding to csi-RS-Index among CSI-RSs in a cell indicated by servingCellId as a beam for pucch transmission. If the referenceSignal is configured to srs, the terminal may configure the transmission beam used when transmitting the SRS corresponding to the resource index provided as an higher signaling resource in the same serving cell and/or in the activated uplink BWP as a beam for PUCCH transmission, or if the servingCellID and/or uplinkBWP are/is provided, the terminal may configure the transmission beam used when transmitting the SRS corresponding to the resource index provided through the higher signaling resource in the cell indicated by the servingCellID and/or uplinkBWP and/or in the uplink BWP as a beam for PUCCH transmission.

One pucch-PathlossReferenceRS-Id configuration may exist in a specific pucch-spatialRelationInfo configuration. PUCCH-PathlossReferenceRS of Table 30 may be mapped with pucch-PathlossReferenceRS-Id of [Table 29], and up to 4 may be configured through pathlossReferenceRSs in the higher signaling PUCCH-PowerControl of Table 30. If the PUCCH-PathlossReferenceRS is connected to the SS/PBCH through the referenceSignal of Table 30, ssb-Index is configured, and if PUCCH-PathlossReferenceRS is connected to CSI-RS, csi-RS-Index is configured.

[Table 30]

```
    PUCCH-PowerControl ::=                    SEQUENCE {
        deltaF-PUCCH-f0                              INTEGER  (-16..15)
OPTIONAL, -- Need R
        deltaF-PUCCH-f1                              INTEGER  (-16..15)
OPTIONAL, -- Need R
        deltaF-PUCCH-f2                              INTEGER  (-16..15)
OPTIONAL, -- Need R
        deltaF-PUCCH-f3                              INTEGER  (-16..15)
OPTIONAL, -- Need R
        deltaF-PUCCH-f4                              INTEGER  (-16..15)
OPTIONAL, -- Need R
        p0-Set                                      SEQUENCE (SIZE
(1..maxNrofPUCCH-P0-PerSet)) OF P0-PUCCH                OPTIONAL, --
Need M
        pathlossReferenceRSs                        SEQUENCE (SIZE
(1..maxNrofPUCCH-PathlossReferenceRSs)) OF PUCCH-PathlossReferenceRS

OPTIONAL, -- Need M
        twoPUCCH-PC-AdjustmentStates                ENUMERATED {twoStates}
OPTIONAL, -- Need S
        ...,
    }

    P0-PUCCH ::=                                 SEQUENCE {
        p0-PUCCH-Id                                  P0-PUCCH-Id,
        p0-PUCCH-Value                              INTEGER (-16..15)
    }

    P0-PUCCH-Id ::=                             INTEGER (1..8)

    PUCCH-PathlossReferenceRS ::=                    SEQUENCE {
        pucch-PathlossReferenceRS-Id
PUCCH-PathlossReferenceRS-Id,
        referenceSignal                             CHOICE {
            ssb-Index                                   SSB-Index,
            csi-RS-Index
NZP-CSI-RS-ResourceId
        }
    }
```

During uplink transmission of the terminal, in the case that switching from a transmit OFF state to a transmit ON state, a transition time may be required to satisfy the transmit power requirement condition of the ON state. In addition, in the case that switching from the transmit ON state to the transmit OFF state, a transition time may be required to satisfy the transmit power requirement of the OFF state. Alternatively, a switching time may be required even when the transmit power change or transmit RB change or hopping occurs in the transmit ON state.

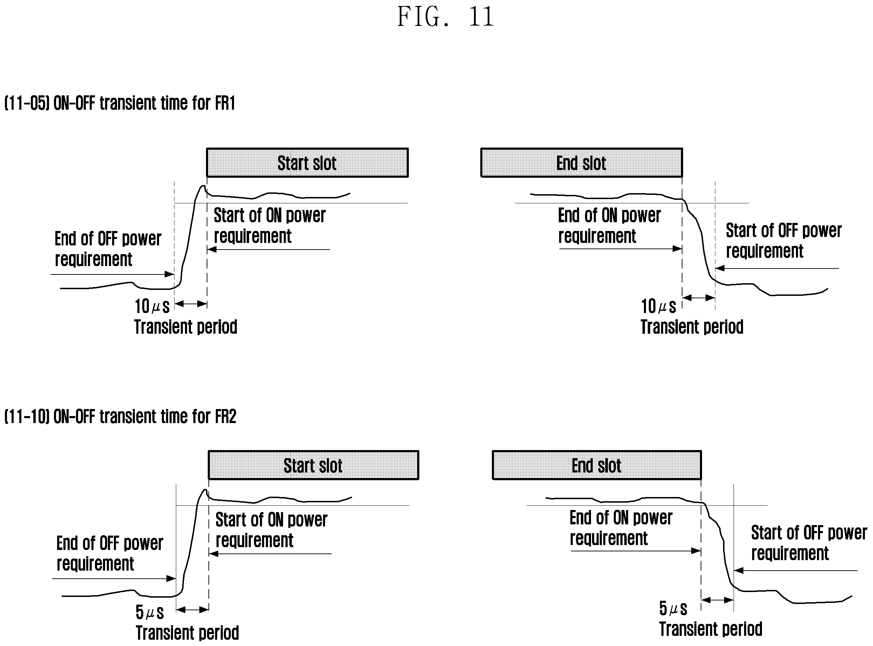

FIG. 11 is a view illustrates a switching time required for switching between a transmit OFF state and a transmit ON state.

With reference to FIG. 11, the switching time may be defined for frequency range 1 (FR1) and frequency range 2 (FR2), respectively (11-05, 11-10).

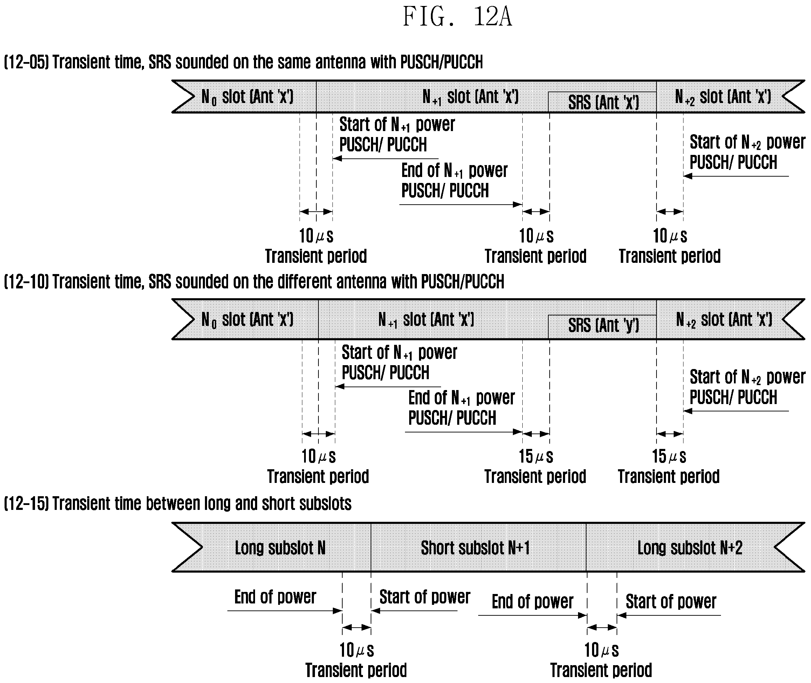

FIGS. 12a ad 12b are views illustrating a switching time required for transmission power change, transmission RB change, or hopping in frequency range 1 (FR1) in a transmission ON state.

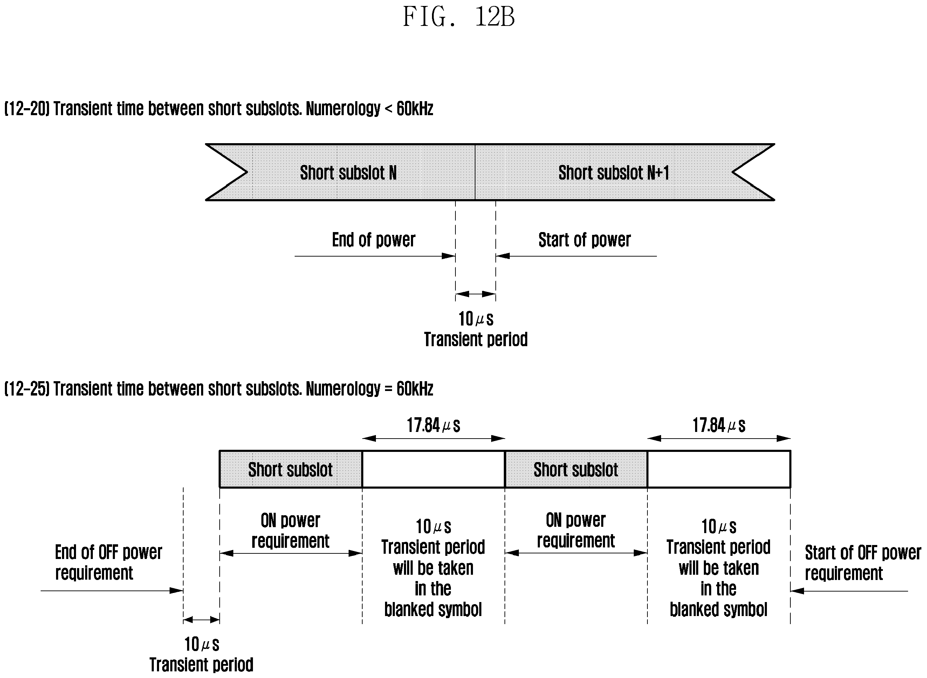

With reference to FIGS. 12a and 12b, the switching time for the case where a transmission channel is changed, a transmission power change, a transmission RB change, or hopping is accompanied may be defined as 12-05 and 12-10. Depending on whether SRS sounding is performed through the same antenna port as another channel (12-05) or through a different antenna port (12-10), the switching time between the SRS channel and other channels may be differently defined.

Meanwhile, in the case that transmission power change or transmission RB change or hopping is accompanied, different switching times may be defined according to the length of the transmission channel before and after the change/hopping (12-15, 12-20, 12-25).

In the case of transmission power change or transmission RB change or hopping between long subslot transmission and short subslot transmission, the transition time can be defined within the long subslot (12-15). In the case of transmission power change or transmission RB change or hopping between short subslot transmissions is involved, the transition times can be defined within short subslots (12-20, 12-25). In the case that the numerology is less than 60 kHz in FR1, blank symbol does not need to be configured between short subslots (12-20), whereas in the case that the numerology is 60 kHz in FR1, blank symbol between short subslots needs to be configured (12-25).

The long subslot may indicate large PUSCH transmission or long PUCCH transmission in which the number of transmission symbols is greater than 2, and the short subslot may indicate PUSCH transmission or short PUCCH transmission in which the number of transmission symbols is 2 or less.

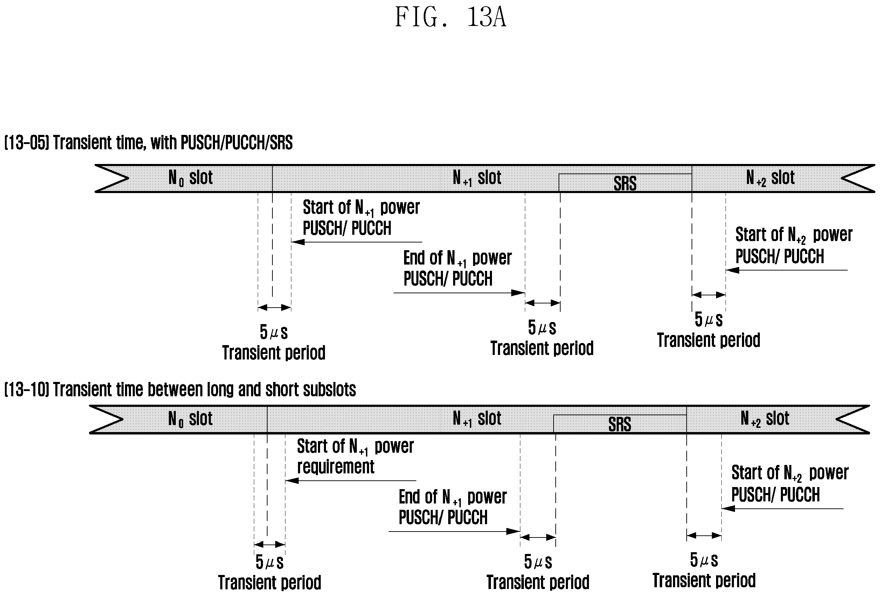

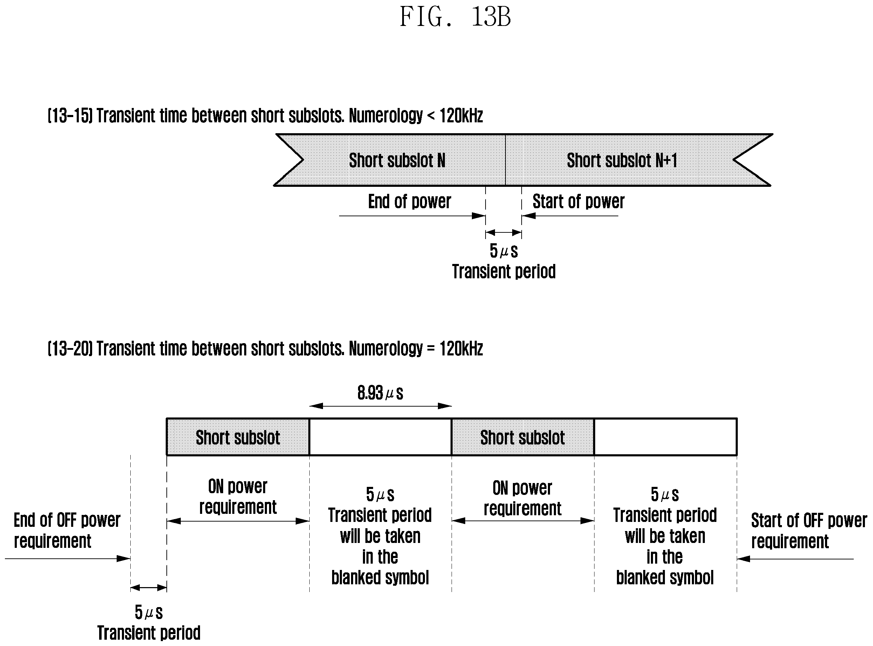

FIGS. 13a and 13b are views illustrating a switching time required for transmission power change, transmission RB change, or hopping in frequency range 2 (FR2) in a transmission ON state.

With reference to FIGS. 13a and 13b, a switching time for the case where a transmission channel is changed, a transmission power change or a transmission RB change or hopping is accompanied may be defined as follows (13-05).

Meanwhile, in the case that transmission power change or transmission RB change or hopping is accompanied, different switching times may be defined according to the length of the transmission channel before and after the change/hopping (13-10, 13-15, 13-20).

In the case that transmission power change or transmission RB change or hopping between long subslot transmission and short subslot transmission is involved, the switching time may be defined between the long subslot (13-10).

In the case that transmission power change or transmission RB change or hopping between short subslot transmissions is involved, the switching time may be defined between short subslots (13-15, 13-20), and in the case that the numerology is less than 120 kHz in FR2, blank symbols between short subslots do not need to be configured (13-15), whereas in the case that the numerology is 120 kHz in FR2, blank symbols between short subslots need to be configured (13-20).

The long subslot may indicate PUSCH transmission or long PUCCH transmission in which the number of transmission symbols is greater than 2, and the short subslot may indicate PUSCH transmission or short PUCCH transmission in which the number of transmission symbols is 2 or less.

Meanwhile, in an LTE system and an NR system, the terminal may perform a procedure of reporting the UE capability supported by the terminal to the corresponding base station while connected to the serving base station. In the description below, this may be referred to as UE capability (report). The base station may deliver a message enquiring a UE capability report (e.g., UE capability enquire message) to the terminal in the connected state. In the message, the base station may include a UE capability report request for each radio access technology (RAT) type. The UE capability report request for each RAT type may include frequency band information requesting the UE capability of the terminal.

At this time, the RAT type may include, for example, nr, eutra-nr, eutra, and the like. The base station may indicate at least one of nr, eutra-nr, and eutra, and make a request for reporting the UE capability of the UE therefor. The UE may indicate at least one of nr, eutra-nr, and eutra for the RAT type which can be supported by the terminal, and report the UE capability therefor to the base station.

For example, in the case that the RAT type included in the UE capability enquiry message indicates nr, the terminal supporting NR-based wireless communication may insert the RAT type indicating nr into a message reporting the UE capability (for example, UE capability information message) and report the UE capability.

In another example, in the case that the RAT type included in the UE capability enquiry message indicates eutra-nr, the terminal supporting (NG) E-UTRA NR dual connectivity (EN-DC) (covering E-UTRA connected to EPC or 5GC) or NR E-UTRA dual connectivity (NE-DC) may insert the RAT type indicating eutra-nr into a message reporting the UE capability (for example, UE capability information message) and report the UE capability.

In addition, the UE capability enquiry message may request a plurality of RAT types through one RRC message container. Also, the base station may include the UE capability enquiry message including a UE capability report request for each RAT type multiple times and transmit the message to the terminal. For example, the terminal that receives the RRC message including a plurality of UE capability enquiry messages may constitute the UE capability information corresponding to each UE capability report request and report (transmit) the message multiple times to the base station.

In a next-generation mobile communication system, a UE capability enquiry for multi-radio dual connectivity (MR-DC) including NR, LTE, and E-UTRA NR dual connectivity (EN-DC) can be made. The UE capability enquiry message is generally sent initially after the terminal establishes connection, but the UE capability can be requested under any conditions when the base station is required.

In the above step, the terminal receiving the UE capability report request from the base station may constitute the UE capability according to the RAT type and band information requested from the base station. In the NR system, a method for the terminal to constitute the UE capability may include the following methods.

Operation 1. If the terminal receives a list of LTE and/or NR bands as a UE capability report request from the base station, the terminal may constitute a band combination (BC) for EN-DC and NR standalone (SA). For example, the terminal may constitute a BC candidate list for EN-DC and NR SA based on the bands requesting the UE capability report through the list information (e.g., FreqBandList) included in the UE capability enquiry message received from the base station. In addition, the priorities of the bands may have priorities in the order described in FreqBandList.

Operation 2. In the case that the base station requests the UE capability report by setting the "eutra-nr-only" flag or "eutra" flag, the terminal may remove the BC for NR SA BCs from the BC candidate list constituted in Operation 1. This operation may be also performed only in the case that the LTE base station (eNB) requests "eutra" capability.

Operation 3. The terminal may remove fallback BCs from the BC candidate list constituted in the above operation. Here, the fallback BC may mean the BC in which a band corresponding to at least one secondary cell (SCell) is removed from any super set BC. The fallback BC may be omitted because super set BC can already cover fallback BC. Operation 3 also applies to multi-RAT dual connectivity (MR-DC). For example, this operation can also be applied to LTE bands. BCs remaining after this stage may be referred as a "final candidate BC list".

Operation 4. The terminal may select BCs to be reported by selecting BCs suitable for the requested RAT type from the "final candidate BC list". In Operation 4, the terminal may constitute a list including the BCs selected by the terminal (e.g., supportedBandCombinationList) in an order. For example, the terminal may constitute the BC and UE capability to be reported in accordance with the preset order of Rat-Type. (e.g., nr->eutra-nr->eutra).

In above Operations 1 to 4, the terminal may constitute featureSetCombination for each BC included in the constituted supportedBandCombinationList, and may constitute a list including each featureSetCombination (e.g., featureSetCombinations). At this time, the featureSetCombination may mean a set of feature sets for each band within the selected BC, and the feature set may mean a set of capabilities supported by the terminal in carriers within a specific band.

In addition, the terminal may compare each BC and feature set combination for each BC with respect to the supportedBandCombinationList. At this time, a specific BC, e.g., BC #X, includes BC to be compared, e.g., all the bands of BC #Y. In the case that the feature set combination of BC #X is constituted with a capability of the same or higher level than the feature set combination of BC #Y, BC #Y may be defined as a fallback BC of BC #X. After finding all fallback BCs in the band combination list according to the above-described comparison procedure, a new BC list from which all the fallback BCs are removed is constituted, and a list of "candidate feature set combinations" for each of these BCs may be constituted. The "candidate feature set combination" may include both the feature set combinations for NR and EUTRA-NR BC, and may be constituted based on the feature set combination of UE-NR-Capabilities and UE-MRDC-Capabilities containers.

Operation 5. In the case that the Rat Type requested from the base station is eutra-nr, featureSetCombinations may be included in both containers of UE-MRDC-Capabilities and UE-NR-Capabilities. However, the NR feature set may be included only in UE-NR-Capabilities.

However, the above-described operations are merely examples and are not limited thereto. Accordingly, according to an embodiment, some operations may be omitted or other operations may be added.

After the terminal capability is configured, the terminal may transmit a UE capability information message including UE capability to the base station. The base station then performs scheduling and transmission/reception management to the terminal based on the UE capability received from the terminal.

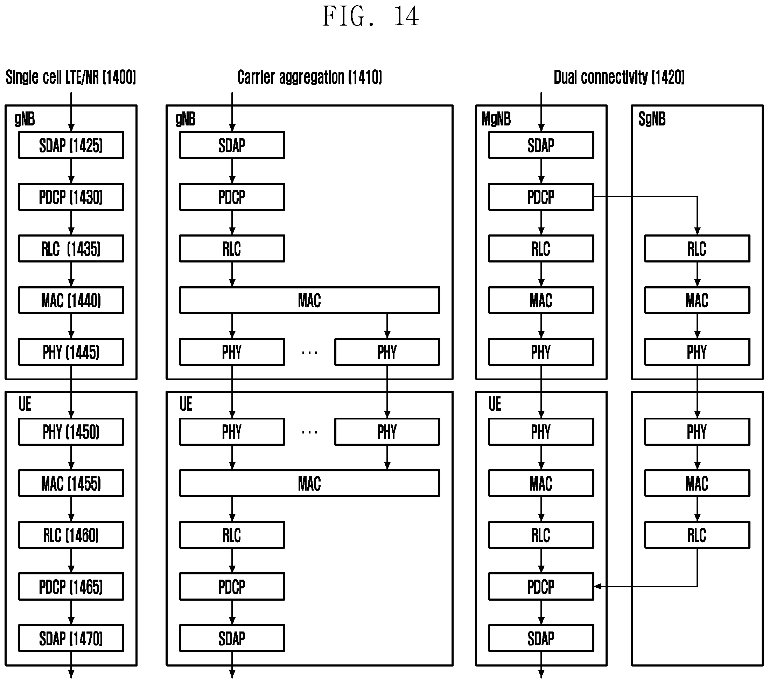

FIG. 14 is a view illustrating a structure of a base station and a terminal radio protocol when performing single cell, carrier aggregation, and dual connectivity according to an embodiment of the disclosure.

Referring to FIG. 14, a wireless protocol of a wireless communication system (for example, 5G or NR system) according to an embodiment of the disclosure includes an NR service data adaptation protocol (SDAP) 1425 or 1470, an NR packet data convergence protocol (PDCP) 1430 or1465, an NR radio link control (RLC) 1435 or 1460, and an NR medium access control (MAC) 1440 or 1455 in each of the UE and the NR gNB.

Main functions of the NR SDAP 1425 or 1470 may include some of the following functions.

- User data transmission function (transfer of user-plane data)
- Function of mapping QoS flow and a data bearer for uplink and downlink (mapping between a QoS flow and a DRB for both DL and UL)
- Function of marking a QoS flow ID for uplink and downlink (marking QoS flow ID in both DL and UL packets)
- Function of mapping reflective QoS flow to a data bearer for uplink SDAP PDUs (reflective QoS flow to DRB mapping for the UL SDAP PDUs)

With respect to the SDAP layer device, the UE may receive a configuration as to whether to use a header of the SDAP layer device or a function of the SDAP layer device for each PDCP layer device, each bearer, or each logical channel through an RRC message. If the SDAP header is configured, a 1-bit indicator of NAS reflective QoS of the SDAP header and a 1 bit-indicator of AS reflective QoS may indicate that the UE updates or reconfigures information on mapping of QoS flow and a data bearer in uplink and downlink. The SDAP header may include QoS flow ID information indicating the QoS. The QoS information may be used as data-processing-priority or scheduling information to support a seamless service.

Main functions of the NR PDCP 1430 or 1465 may include some of the following functions

- Header compression and decompression function (header compression and decompression: ROHC only)
- User data transmission function (transfer of user data)
- Sequential delivery function (in-sequence delivery of upper-layer PDUs)
- Non-sequential delivery function (out-of-sequence delivery of upper-layer PDUs)
- Reordering function (PDCP PDU reordering for reception)
- Duplicate detection function (duplicate detection of lower-layer SDUs)
- Retransmission function (retransmission of PDCP SDUs)
- Ciphering and deciphering function (Ciphering and deciphering)
- Timer-based SDU removal function (timer-based SDU discard in uplink)

The reordering function of the NR PDCP layer device is a function of sequentially reordering PDCP PDUs received from a lower layer on the basis of a PDCP sequence number (SN), and may include a function of sequentially transferring the reordered data to a higher layer, or may include a function of directly transmitting data regardless of the sequence, a function of recording PDCP PDUs lost due to the reordering, a function of reporting statuses of the lost PDCP PDUs to a transmitting side, and a function of making a request for retransmitting the lost PDCP PDUs.

Main functions of the NR RLC 1435 or 1460 may include some of the following functions.

- Data transmission function (transfer of upper-layer PDUs)
- Sequential delivery function (in-sequence delivery of upper-layer PDUs)
- Non-sequential delivery function (out-of-sequence delivery of upper-layer PDUs)
- ARQ function (error correction through ARQ)
- Concatenation, segmentation, and reassembly function (concatenation, segmentation and reassembly of RLC SDUs)
- Re-segmentation function (re-segmentation of RLC data PDUs)
- Reordering function (reordering of RLC data PDUs)
- Duplicate detection function (duplicate detection)
- Error detection function (protocol error detection)
- RLC SDU deletion function (RLC SDU discard)
- RLC reestablishment function (RLC reestablishment)

The sequential delivery function (in-sequence delivery) of the NR RLC layer device is a function of sequentially transmitting RLC SDUs received from a lower layer to the higher layer, and when one original RLC SDU is divided into a plurality of RLC SDUs and then received, the sequential delivery function (In-sequence delivery) of the NR RLC layer device may include a function of reassembling and transmitting the RLC SDUs, a function of reordering the received RLC PDUs on the basis of an RLC sequence number (SN) or a PDCP SN, a function of recording RLC PDUs lost due to the reordering, a function of reporting statuses of the lost RLC PDUs to a transmitting side, and a function of making a request for retransmitting the lost RLC PDUs. When there are lost RLC SDUs, it may include a function of sequentially transferring only RLC SDUs preceding the lost RLC SDUs to the higher layer or a function of, if a predetermined timer expires even though there are lost RLC SDUs, sequentially transferring all RLC SDUs received before the timer starts to the higher layer. Alternatively, the sequential delivery function (In-sequence delivery) of the NR RLC layer device may include may include a function of, if a predetermined timer expires even though there are lost RLC SDUs, sequentially transferring all RLC SDUs received up to now to the higher layer. Further, the NR RLC device may process the RLC PDUs sequentially in the order of reception thereof (according to an arrival order regardless of a serial number or a sequence number) and may transfer the RLC PDUs to the PDCP device regardless of the sequence thereof (out-of-sequence delivery). In the case of segments, the NR RLC device may receive segments that are stored in the buffer or are to be received in the future, reconfigure the segments to be one RLC PDU, process the RLC PDU, and then transmit the same to the PDCP device. The NR RLC layer device may not include a concatenation function, and the function may be performed by the NR MAC layer, or may be replaced with a multiplexing function of the NR MAC layer.

The non-sequential function (Out-of-sequence delivery) of the NR RLC layer device is a function of transferring RLC SDUs received from a lower layer directly to a higher layer regardless of the sequence of the RLC SDUs, and may include, when one original RLC SDU is divided into a plurality of RLC SDUs and then received, a function of reassembling and transmitting the RLC PDUs and a function of storing RLC SNs or PDCP SNs of the received RLC PDUs, reordering the RLC PDUs, and recording lost RLC PDUs.

The NR MAC 1440 or 1455 may be connected to a plurality of NR RLC layer devices configured in one UE and main functions of the NR MAC may include some of the following functions.

- Mapping function (Mapping between logical channels and transport channels)
- Multiplexing and demultiplexing function (multiplexing/demultiplexing of MAC SDUs)
- Scheduling information report function (scheduling information reporting)
- HARQ function (error correction through HARQ)
- Logical channel priority control function (priority handling between logical channels of one UE)
- UE priority control function (priority handling between UEs by means of dynamic scheduling)
- MBMS service identification function (MBMS service identification)
- Transport format selection function (transport format selection)
- Padding function (padding)

The NR PHY layer 1445 or 1450 perform an operation for channel-coding and modulating higher-layer data to generate an OFDM symbol and transmitting the OFDM symbol through a radio channel or demodulating and channel-decoding the OFDM symbol received through the radio channel and transmitting the demodulated and channel-decoded OFDM symbol to the higher layer.

The detailed structure of the radio protocol structure may vary according to a carrier (or cell) operation method. For example, in the case that a base station transmits data to a terminal based on a single carrier (or cell), the base station and the terminal use a protocol structure having a single structure for each layer, such as S00. On the other hand, in the case that the base station transmits data to the terminal based on carrier aggregation (CA) using a plurality of carriers in a single TRP, the base station and the terminal have a single structure up to RLC like S10, but use the protocol structure for multiplexing the PHY layer through the MAC layer. As another example, in the case that a base station transmits data to a terminal based on dual connectivity (DC) using a plurality of carriers in a plurality of TRP, the base station and the terminal have a single structure up to the RLC like S20, but use a protocol structure for multiplexing the PHY layer through the MAC layer.

With reference to the above-described PUCCH-related descriptions, in Rel-15 NR, PUCCH transmission is focused on transmission toward a single cell and/or a single transmission point and/or a single panel and/or a single beam and/or a single transmission direction. In the following description, for the convenience of description, a cell, a transmission point, a panel, a beam, and/or a transmission direction, etc. that can be distinguished through higher layer/L1 parameters such as TCI state or spatial relation information, or indicators such as cell ID, TRP ID, panel ID are described in a unified manner as a transmission reception point (TRP). Therefore, TRP may be appropriately replaced by one of the above terms.

In general, one PUCCH resource used for PUCCH transmission is one, and since only one PUCCH-spatial-RelationInfo can be activated for one PUCCH resource, the terminal may maintain the indicated transmission beam when transmitting the PUCCH. In the case that the PUCCH is repeatedly transmitted over several slots or several mini-slots, a transmission beam according to one indicated PUCCH-spatialRelationInfo needs to be maintained throughout the repeated transmission.

Meanwhile, in the case that PUCCH transmission for a plurality of TRPs is supported, the PUCCH may be repeatedly transmitted for each TRP. In this case, the terminal must support configuration for PUCCH transmission to a plurality of TRPs.

For example, a plurality of beam directions may be indicated for transmission to a plurality of TRPs for one PUCCH, or each of a plurality of PUCCHs including the same UCI may be transmitted to a different TRP, and different beam directions for these PUCCHs needs to be indicated. In the disclosure, by providing various methods of configuring PUCCH resources in consideration of the above-described case, transmission delay time of uplink control information is minimized and high reliability is achieved. A detailed PUCCH resource configuration method is described in detail in the following embodiments.

Hereinafter, embodiments of the disclosure will be described in detail together with the accompanying drawings. In addition, in describing the disclosure, in the case that it is determined that a detailed description of a related function or configuration may unnecessarily obscure the subject matter of the disclosure, a detailed description thereof will be omitted. In addition, terms to be described later are terms defined in consideration of functions in the disclosure and may vary according to the intention or custom of users or operators. Therefore, the definition should be made based on the contents throughout this specification.

Hereinafter, the base station is a subject that performs resource allocation of the terminal, and may be at least one of a gNode B, gNB, eNode B, Node B, a base station (BS), a radio access unit, a base station controller, or a node on a network. The terminal may include a user equipment (UE), a mobile station (MS), a cellular phone, a smart phone, a computer, or a multimedia system capable of performing a communication function. In addition, an embodiment of the disclosure will be described below using an NR or LTE/LTE-A system as an example, but an embodiment of the disclosure may be applied to other communication systems having a similar technical background or channel type. In addition, the embodiments of the disclosure may be applied to other communication systems through some modifications without significantly departing from the scope of the disclosure, as determined by a person having skilled technical knowledge.

The content of the disclosure is applicable to FDD and TDD systems.

Hereinafter, higher signaling (or higher layer signaling) is a signal transmission method that is transmitted from the base station to the terminal using a downlink data channel of the physical layer or from the terminal to the base station using an uplink data channel of the physical layer, which may be referred to as RRC signaling, PDCP signaling, or a medium access control element (MAC CE).

Hereinafter, in the disclosure, in determining whether to apply the cooperative communication, the terminal may use various methods such as the PDCCH(s) for allocating the PDSCH to which the cooperative communication is applied having a specific format, or the PDCCH(s) for allocating the PDSCH to which the cooperative communication is applied having a specific indicator indicating whether cooperative communication is applied, or the PDCCH(s) for allocating the PDSCH to which cooperative communication is applied being scrambled with a specific RNTI, or assuming the application of cooperative communication in a specific section indicated by an higher layer, etc. Hereinafter, for convenience of description, a case in which the terminal receives the PDSCH to which the cooperative communication is applied based on conditions similar to the above will be referred to as an NC-JT case.

Hereinafter, in the disclosure, determining the priority between A and B may be mentioned in various ways, such as selecting one having a higher priority according to a predetermined priority rule to perform an operation corresponding thereto, or omitting or dropping an operation having a lower priority.

Although the above examples are described through a plurality of embodiments, these are not independent and one or more embodiments may be applied simultaneously or in combination.

<First embodiment: DCI reception for NC-JT>

Unlike the conventional system, the 5G wireless communication system can support not only a service requiring a high transmission rate, but also a service having a very short transmission delay and a service requiring a high connection density. In a wireless communication network including a plurality of cells, TRPs, or beams, the coordinated transmission between each cell, TRP, and/or beam is one of the element technologies capable of satisfying various service requirements by increasing the strength of a signal received by the terminal or efficiently controlling interference between cells, TRPs, and/or beams.

Joint transmission (JT) is a representative transmission technology for the above described cooperative communication, and supports one terminal through different cells, TRPs and/or beams through the joint transmission technology to increase the strength of the signal received by the terminal. Meanwhile, since the characteristics of each cell, TRP, and/or the channel between the beam and the terminal may be greatly different, different precoding, MCS, resource allocation, etc. need to be applied to each cell, TRP, and/or the link between the beam and the terminal. In particular, in the case of non-coherent joint transmission (NC-JT) supporting non-coherent precoding between cells, TRPs and/or beams, it is important to configure individual downlink (DL) transmission information for each cell, TRP and/or beam.

Meanwhile, the configuring of individual DL transmission information for each cell, TRP, and/or beam is a major factor that increases the payload required for DL DCI transmission, which may adversely affect the DCI reception performance. Therefore, it is necessary to carefully design a tradeoff between the amount of DCI information and the PDCCH reception performance for JT support.

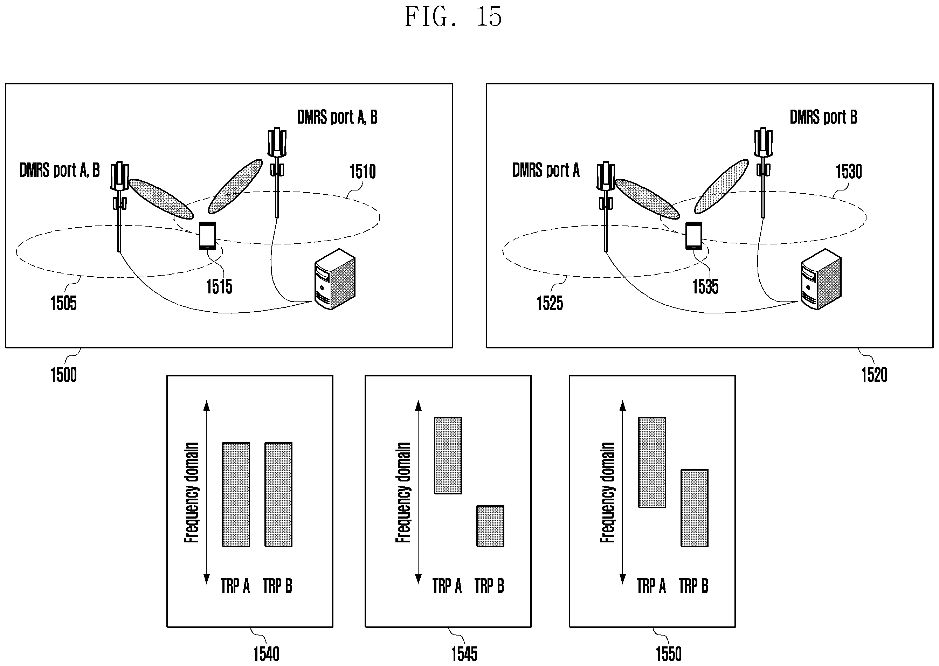

FIG. 15 is a view illustrating an example of an antenna port structure and resource allocation for cooperative communication in a wireless communication system according to an embodiment.

With reference to FIG. 15, examples of radio resource allocation for each TRP according to a joint transmission (JT) scheme and conditions are illustrated.

In FIG. 15, 1500 is an example of coherent joint transmission (C-JT) supporting coherent precoding between cells, TRPs, and/or beams.

In C-JT, TRP A 1505 and TRP B 1510 may transmit single data (PDSCH) to the terminal 1515, and a plurality of TRPs may perform joint precoding. This means that the same DMRS ports (e.g., DMRS ports A and B in both TRPs) are used for the same PDSCH transmission in TRP A 1505 and TRP B 1510. In this case, the terminal may receive one DCI information for receiving one PDSCH demodulated based on the DMRS transmitted through the DMRS ports A and B.

In FIG. 15, 1520 is an example of non-coherent joint transmission (NC-JT) supporting non-coherent precoding between each cell, TRP and/or beam. In the case of NC-JT, a PDSCH is transmitted to the terminal 1535 for each cell, TRP, and/or beam, and individual precoding may be applied to each PDSCH. Each cell, TRP, and/or beam may transmit a different PDSCH to improve throughput compared to single cell, TRP, and/or beam transmission, or each cell, TRP, and/or beam may repeatedly transmit the same PDSCH to improve reliability compared to single cell, TRP, and/or beam transmission.

Various radio resource allocations may be considered in the case that all the frequency and time resources used for PDSCH transmission by a plurality of TRPs are the same (1540), the case that the frequency and time resources used by a plurality of TRPs do not overlap at all (1545), and the case that some of the frequency and time resources used by a plurality of TRPs overlap (1550).

In each of the above-described cases, in the case that a plurality of TRPs repeatedly transmits the same PDSCH to improve reliability, if the receiving terminal does not know whether or not the corresponding PDSCH is repeatedly transmitted, the corresponding terminal cannot perform combining in the physical layer for the corresponding PDSCH, and thus there may be a limit to improving reliability. Therefore, the disclosure provides a repetitive transmission instruction and configuration method for improving NC-JT transmission reliability.

In order to simultaneously allocate a plurality of PDSCHs to one terminal for NC-JT support, DCIs of various types, structures, and relationships may be considered.

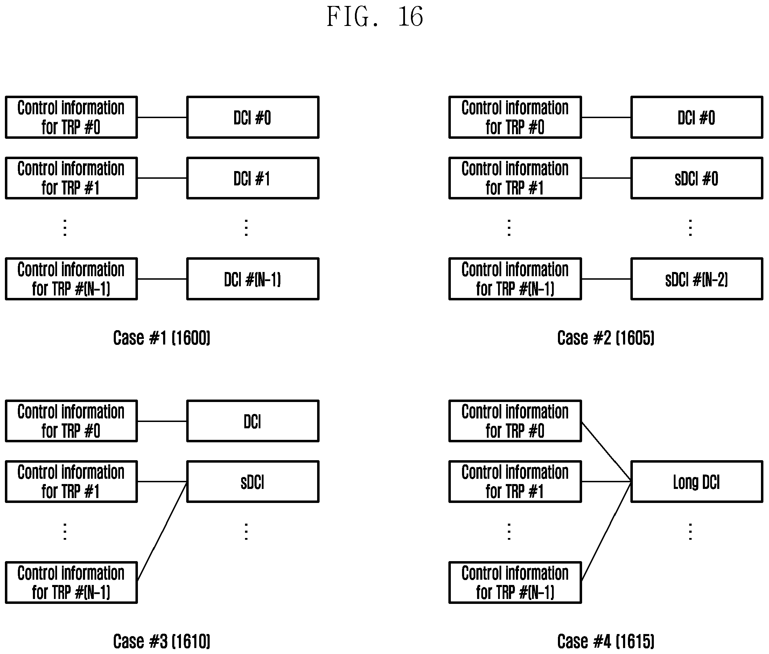

FIG. 16 is a view illustrating an example of downlink control information (DCI) structure for cooperative communication in a wireless communication system according to an embodiment of the disclosure.

With reference to FIG. 16, various examples of DCI for NC-JT support are illustrated.

With reference to FIG. 16, Case #1 (1600) is an example in which control information for PDSCHs transmitted in (N-1) additional TRPs is transmitted in the same form as control information for PDSCHs transmitted in a serving TRP (same DCI format), in a situation in which different (N-1) PDSCHs are transmitted in (N-1) additional TRPs (TRP #1 to TRP #(N-1)) in addition to serving TRP (TRP #0) used for single PDSCH transmission. That is, the terminal may acquire control information on PDSCHs transmitted in different TRPs (TRP #0 to TRP #(N-1)) through DCI (DCI #0 DCWN-1)) having the same DCI format and the same payload. Meanwhile, in this embodiment and an embodiment to be described later, the control information transmitted in the serving TRP may be classified into first DCI and the DCI transmitted in another TRP (cooperative TRP), which may be referred to as second DCI.

In the above-described case #1, the freedom degree for control (allocation) of each PDSCH can be completely guaranteed, but in the case that each DCI is transmitted in a different TRP, a coverage difference for each DCI may occur, and reception performance may deteriorate.

Case #2 (1605) is an example in which control information for PDSCH transmitted in (N-1) additional TRPs is transmitted in a different form (different DCI format or different DCI payload) from control information for PDSCH transmitted in serving TRP, in a situation in which different (N-1) PDSCHs are transmitted in (N-1) additional TRPs (TRP #1 to TRP #(N-1)) in addition to serving TRP (TRP #0) used for single PDSCH transmission.

For example, in the case of DCI #0, which is control information for the PDSCH transmitted from the serving TRP (TRP #0), all information elements of DCI format 1_0 to DCI format 1_1 are included, but the secondary DCI (hereinafter, sDCI)) (sDCI #0 to sDCI #(N-2)), which is control information for PDSCHs transmitted in cooperative TRP (TRP #1 to TRP #(N-1)) may include only some of the information elements of DCI format 1_0 to DCI format 1_1.

Therefore, in the case of sDCI including control information on PDSCHs transmitted in the cooperative TRP, the payload may be small compared to normal DCI (nDCI) including control information related to PDSCH transmitted in the serving TRP, or may include reserved bits as many as the number of bits less than nDCI.

In case #2 described above, the degree of freedom for controlling (allocation) of each PDSCH may be limited according to the contents of the information element included in the sDCI, or since the reception performance of sDCI is superior to that of nDCI, the probability of occurrence of a coverage difference for each DCI may be lowered.

Case #3 (1610) is an example in which control information for PDSCHs transmitted in (N-1) additional TRPs is transmitted in a different form (different DCI format or different DCI payload) from control information for PDSCHs transmitted in serving TRP, in a situation in which different (N-1) PDSCHs are transmitted in (N-1) additional TRPs (TRP #1 to TRP #(N-1)) other than serving TRP (TRP #0) used when transmitting a single PDSCH.

For example, in the case of DCI #0, which is control information for the PDSCH transmitted in the serving TRP (TRP #0), all information elements of DCI format 1_0 to DCI format 1_1 are included, and in the case of control information for PDSCHs transmitted in cooperative TRP (TRP #1 to TRP #(N-1)), only some of the information elements of DCI format 1_0 to DCI format 1_1 may be included in one 'secondary' DCI (sDCI).

For example, the sDCI may include at least one of HARQ-related information such as frequency domain resource assignment, time domain resource assignment, and MCS of cooperative TRPs. In addition, in the case of information not included in the sDCI such as a bandwidth part (BWP) indicator or a carrier indicator, DCI (DCI #0, normal DCI, nDCI) of serving TRP may be followed.

In case #3, the freedom degree for controlling (allocation) of each PDSCH may be limited according to the contents of the information element included in the sDCI. However, it is possible to adjust the reception performance of sDCI, and the complexity of DCI blind decoding of the terminal may be reduced compared to case #1 or case #2.

Case #4 (1615) is an example in which control information for PDSCHs transmitted in (N-1) additional TRPs is transmitted through a long DCI (lDCI) such as control information for PDSCHs transmitted in a serving TRP, in a situation in which different (N-1) PDSCHs are transmitted in (N-1) additional TRPs (TRP #1 to TRP #(N-1)) in addition to serving TRP (TRP #0) used for single PDSCH transmission. That is, the terminal may obtain control information on PDSCHs transmitted in different TRPs (TRP #0 to TRP #(N-1)) through a single DCI.

In case #4, the complexity of DCI blind decoding of the terminal may not increase, but the degree of freedom of PDSCH control (allocation) may be low, such as the number of cooperative TRPs being limited according to the long DCI payload limitation.

In the following descriptions and embodiments, sDCI may refer to various auxiliary DCIs such as secondary DCI, or normal DCI (DCI format 1_0 to 1_1 described above) including PDSCH control information transmitted in the cooperative TRP. In the case no particular limitation is specified, the description is similarly applicable to the various auxiliary DCIs. In addition, terms such as the first DCI and the second DCI may be used to classify the DCI according to the form or characteristic of the DCI or the TRP for transmitting the DCI. For example, DCI transmitted through serving TRP may be expressed as a first DCI, and DCI transmitted through cooperative TRP may be expressed as a second DCI.

In the following description and embodiments, case #1, case #2, and case #3 in which one or more DCI (PDCCH) is used for NC-JT support are classified into multiple PDCCH-based NC-JTs, and Case #4 in which a single DCI (PDCCH) is used for NC-JT support can be classified as a single PDCCH-based NC-JT.

In the embodiments of the disclosure, "cooperation TRP" may be replaced with various terms such as "cooperation panel" or "cooperation beam" when applied in practice.

In the embodiments of the disclosure, "the case where NC-JT is applied" may be interpreted in various ways according to the situation such as "the case where a terminal receives one or more PDSCHs at the same time in one BWP", "the case where a terminal receives a PDSCH based on two or more transmission configuration indicator (TCI) indications at the same time in one BWP", "the case where a PDSCH received by a terminal is associated with one or more DMRS port groups", etc., but it is used as an expression for convenience of description.

In the disclosure, the radio protocol structure for NC-JT may be used in various ways according to the TRP deployment scenario. For example, in the case that there is no or small backhaul delay between cooperative TRPs, it is possible to use a structure based on MAC layer multiplexing similar to 1410 of FIG. 14 (CA-like method). On the other hand, in the case that the backhaul delay between cooperative TRPs is so large that the backhaul delay cannot be ignored (e.g., the case that 2 ms or more is required for information exchange such as CSI, scheduling, HARQ-ACK, etc. between cooperative TRPs), similar to 1420 of FIG. 14, it is possible to secure characteristics robust to delay by using an independent structure for each TRP from the RLC layer (DC-like method).

<1-1 embodiment: Method for configuring a downlink control channel for Multi-PDCCH-based NC-JT operation>

In the multiple PDCCH-based NC-JT, when DCI is transmitted for the PDSCH schedule of each TRP, there may be a CORESET or search space that is classified for each TRP. The CORESET or search space for each TRP may be configured as at least one of the following cases.

- Higher layer index configuration for each CORESET: The CORESET configuration information configured by the higher layer may include an index value, and the TRP that transmits the PDCCH from the corresponding CORESET may be identified as the configured index value for each CORESET. That is, in the set of CORESETs having the same higher layer index value, it may be determined or considered that the same TRP transmits the PDCCH or that the PDCCH scheduling the PDSCH of the same TRP is transmitted.

The above-described index for each CORESET may be named as CORESETPoolIndex, and for CORESETs for which the same CORESETPoolIndex value is configured, the terminal may determine or consider that the PDCCH is transmitted from the same TRP. In the case of a CORESET in which the CORESETPoolIndex value is not configured, the terminal may determine or consider that the default value of CORESETPoolIndex is configured, and the default value may be 0.

- Multiple PDCCH-Config configurations: Multiple PDCCH-Contigs in one BWP may be configured, and each PDCCH-Config may include PDCCH configuration for each TRP. That is, at least one of a list of CORESETs for each TRP and/or a list of search spaces for each TRP may be configured in one PDCCH-Config, and the terminal may determine or consider that one or more CORESETs and one or more search spaces included in one PDCCH-Config correspond to a specific TRP.
- CORESET beam/beam group constitution: TRP corresponding to the corresponding CORESET may be classified through a beam or beam group configured for each CORESET. For example, in the case that the same TCI state is configured for a plurality of CORESETs, the terminal may determine or consider that the corresponding CORESETs are transmitted through the same TRP, or the terminal may determine or consider that a PDCCH scheduling a PDSCH of the same TRP is transmitted in the corresponding CORESET.
- Search space beam/beam group constitution: A beam or beam group may be configured for each search space, and TRP for each search space may be classified through this. For example, in the case that the same beam/beam group or TCI state is configured in multiple search spaces, in the search space, the terminal may determine or consider that the same TRP transmits a PDCCH, or that a PDCCH scheduling a PDSCH of the same TRP is transmitted in the search space.

By classifying the CORESET or search space for each TRP as described above, it is possible to classify PDSCH and HARQ-ACK information for each TRP, and through this, it is possible to generate an independent HARQ-ACK codebook for each TRP and use an independent PUCCH resource.

<Second embodiment: HARQ-ACK information delivery method for NC-JT transmission >

The second embodiment describes a method of delivering HARQ-ACK information for NC-JT transmission.

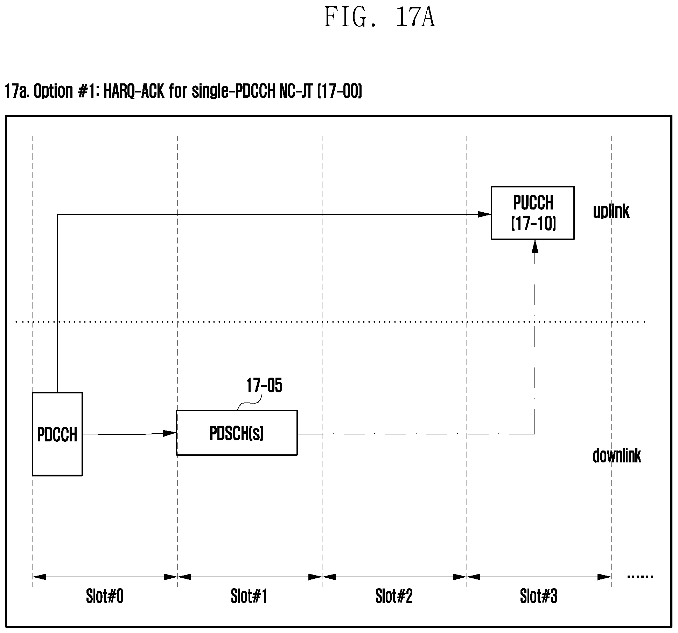

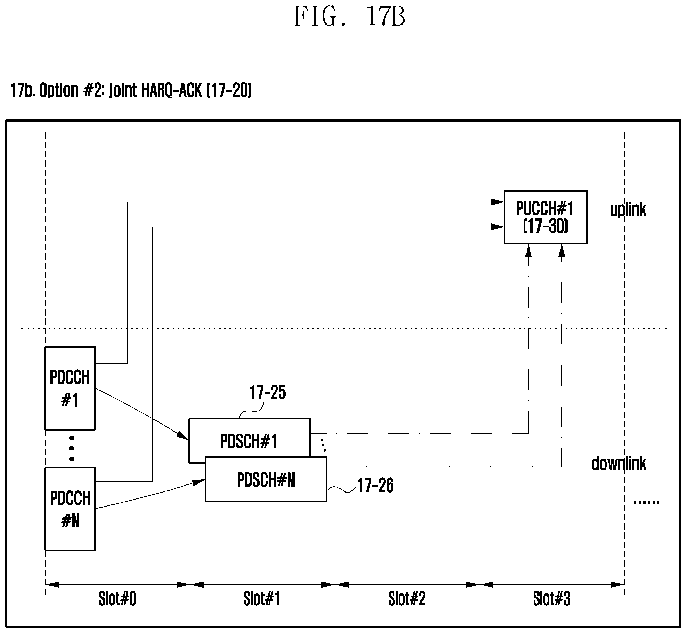

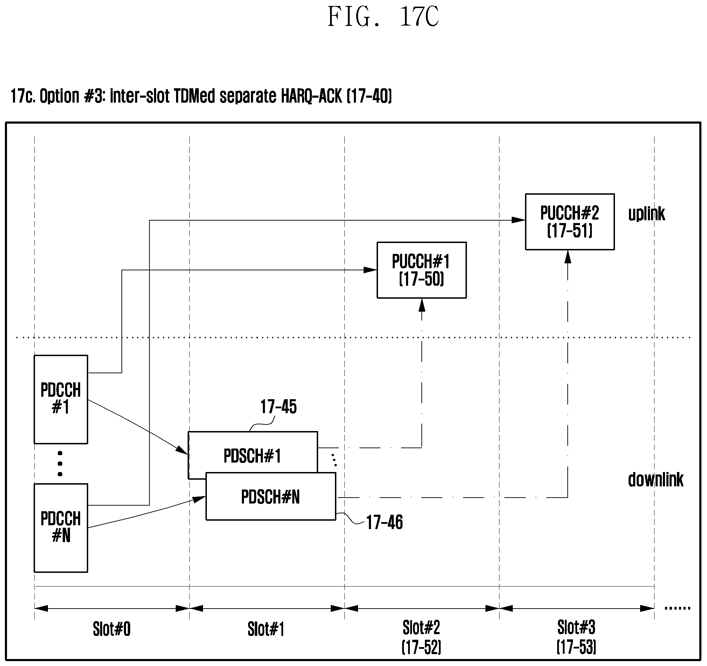

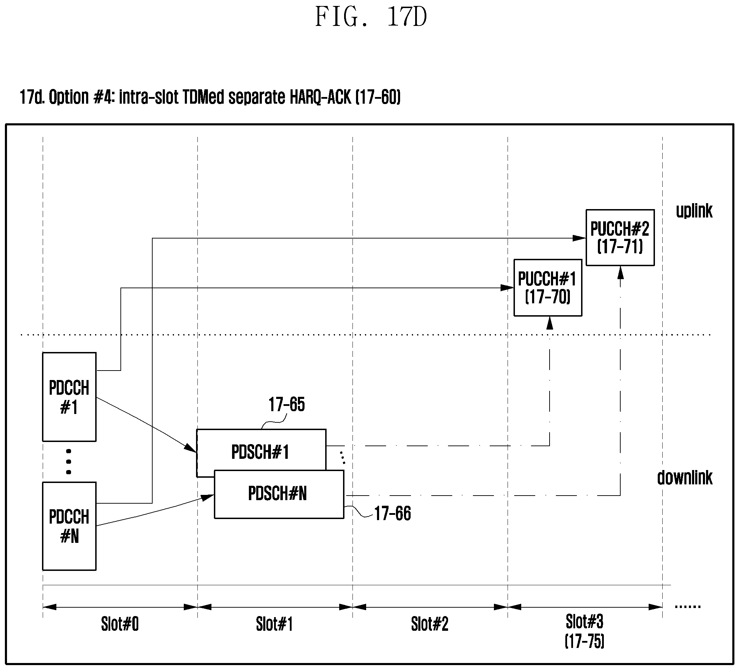

FIGS. 17a, 17b, 17c, and 17d are views illustrating a method of delivering HARQ-ACK information for NC-JT transmission according to various DCI configuration and PUCCH configuration.

First, FIG. 17a (Option #1: HARQ-ACK for single-PDCCH NC-JT) 17-00 illustrates an example in which HARQ-ACK information for one or more PDSCHs 17-05 scheduled by a TRP is transmitted through one PUCCH resource 17-10 in the case of single-PDCCH-based NC-JT. The PUCCH resource may be indicated through the PRI value and $K_1$ value in the DCI described above.

FIG. 17b (Option #2) to FIG. 17d (Option #4) 17-20, 17-40, 17-60 illustrate the case of multi-PDCCH-based NC-JT. In this case, each option may be classified according to the number of PUCCH resources to transmit HARQ-ACK information corresponding to the PDSCH of each TRP and the location of the PUCCH resource on the time axis.

FIG. 17b (Option #2: joint HARQ-ACK) 17-20 illustrates an example in which the terminal transmits HARQ-ACK information corresponding to the PDSCHs 17-25 and 17-26 of each TRP through one PUCCH resource 17-30. In this case, all HARQ-ACK information for each TRP may be generated based on a single HARQ-ACK codebook, or HARQ-ACK information for each TRP may be generated based on a separate HARQ-ACK codebook. In this case, HARQ-ACK information for each TRP is concatenated and may be transmitted in one PUCCH resource 17-30.

In the case that a separate HARQ-ACK codebook for each TRP is used, as defined in the first-1 embodiment, the TRP may be classified into at least one of a set of CORESETs having the same higher layer index, a set of CORESETs belonging to the same TCI state or beam or beam group, and a set of search spaces belonging to the same TCI state or beam or beam group.

FIG. 17c (Option #3: inter-slot time-division multiplexed (TDMed) separate HARQ-ACK) 17-40 illustrates an example in which the terminal transmits HARQ-ACK information corresponding to the PDSCH 17-45 and 17-46 of each TRP through PUCCH resources 17-50 and 17-51 of different slots 17-52 and 17-53.

The slot including the PUCCH resource for each TRP may be determined by the $K_1$ value described above. In the case that the $K_1$ value indicated by a plurality of PDCCHs indicates the same slot, the terminal considers that all corresponding PDCCHs are transmitted in the same TRP, and all HARQ-ACK information corresponding to them may be transmitted. In this case, HARQ-ACK information concatenated in one PUCCH resource located in the same slot may be transmitted to the TRP.

FIG. 17d (Option #4: intra-slot TDMed separate HARQ-ACK) 17-60 illustrates an example of transmitting HARQ-ACK information corresponding to the PDSCHs 17-65 and 17-66 of each TRP through different PUCH resources 17-70 and 17-71 in different symbols in the same slot 17-75.

The slot including the PUCCH resource for each TRP may be determined by the $K_1$ value described above, and in the case that the $K_1$ value indicated by the plurality of PDCCHs indicates the same slot, the terminal may perform PUCCH resource selection and transmission symbol determination through at least one of the following methods.

• PUCCH resource group configuration per TRP

A PUCCH resource group for HARQ-ACK transmission for each TRP may be configured. In the case that the TRP for each CORESET and/or search space is classified as in the embodiment 1-1, the PUCCH resource for HARQ-ACK transmission for each TRP may be selected within the PUCCH resource group for the corresponding TRP. Time division multiplexing (TDM) may be expected between PUCCH resources selected from different PUCCH resource groups, that is, it may be expected that the selected PUCCH resource does not overlap on a symbol basis (within the same slot). The terminal may generate an individual HARQ-ACK codebook for each TRP and then transmit the same in a PUCCH resource selected for each TRP.

• Different PRI indications for each TRP

As in embodiment 1-1, in the case that the TRP is classified per CORESET and/or search space, the PUCCH resource for each TRP may be selected according to the PRI. That is, the PUCCH resource selection process in Rel-15 described above may be independently performed for each TRP. In this case, the PRIs used to determine the PUCCH resource for each TRP have to be different. For example, the terminal may not expect that the PRI used to determine the PUCCH resource for each TRP is indicated with the same value. For example, the PDCCH for TRP 1 may include PRI=n, and the PDCCH for TRP 2 may include PRIs configured to PRI=m, respectively.

In addition, TDM may be expected between PUCCH resources indicated by the PRI for each TRP. That is, it may be expected that the selected PUCCH resources do not overlap on a symbol basis (within the same slot). As described above, an individual HARQ-ACK codebook for each TRP may be generated in the PUCCH resource selected for each TRP and then transmitted.

• Definition for $K_1$ Value in Subslot Units

The PUCCH resource selection process in Rel-15 described above is followed, but the $K_1$ value may be defined in units of subslots. For example, the terminal may generate a HARQ-ACK codebook for PDSCH/PDCCHs instructed to report HARQ-ACK in the same subslot, and then transmit the same through the PUCCH resource indicated by the PRI. The process of generating the HARQ-ACK codebook and selecting a PUCCH resource may be irrelevant to whether TRP is classified for CORESET and/or search space.

In the case that the terminal supports NC-JT reception, one of the options may be configured through a higher layer or may be implicitly selected according to a situation. For example, for a terminal supporting multi-PDCCH-based NC-JT, one of Option 2 (joint HARQ-ACK) and Option 3 or 4 (separate HARQ-ACK) may be selected through a higher layer. As another example, depending on whether single-PDCCH-based NC-JT or multi-PDCCH-based NC-JT is supported/configured, Option 1 for the former and Option 2 or 3 or 4 for the latter may be selected.

As another example, in the multi-PDCCH-based NC-JT, an option to be used may be determined according to the selection of a PUCCH resource. In the case that PUCCH resources of the same slot are selected in different TRPs, if the corresponding PUCCH resources are different and do not overlap in symbol units, HARQ-ACK may be transmitted according to Option 4, and if the corresponding PUCCH resources overlap on a symbol basis or the allocated symbols are the same, HARQ-ACK may be transmitted according to Option 2. In the case of selecting PUCCH resources of different slots in different TRPs, HARQ-ACK may be transmitted according to Option 3.

The configuration for the options may be dependent on the UE capability. For example, the base station may receive the UE capability according to the above-described procedure, and the option may be configured based on this. For example, Option 4 configuration is allowed only for a terminal having a capability supporting intra-slot TDMed separate HARQ-ACK, and a terminal not equipped with the corresponding capability may not expect configuration according to Option 4.

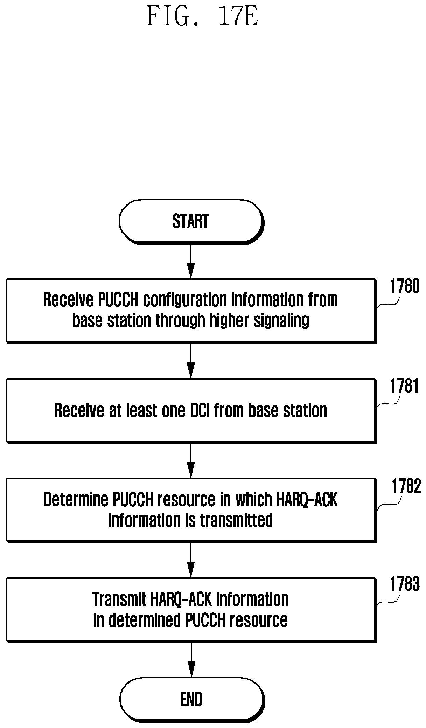

FIG. 17e is a flowchart illustrating an example of a method for a terminal to transmit HARQ-ACK information for NC-JT transmission to a base station.

With reference to FIG. 17e, (although not illustrated) the terminal may transmit the capability for the described options to the base station through UE capability report message (e.g., an UECapabilityInformation message), and the base station may explicitly configure which option is applied to the terminal, based on the capability information transmitted by the terminal, or a specific option may be implicitly applied.

The terminal may receive PUCCH configuration information from the base station through higher signaling, in step S1780. The PUCCH configuration information may include at least one information of Table 21, Table 22, Table 29, and Table 30, and at least one of PUCCH group configuration information, information for configuring a relationship between a PRI and a PUCCH resource as shown in Table 26, and information for configuring a candidate for a $K_1$ value as shown in Table 21 may be included.

Thereafter, the terminal may receive the DCI for scheduling downlink data from the base station on the PDCCH (this can be mixed with PDCCH reception) in step S1781.

Thereafter, in step S1782, at least one of HARQ-ACK payload to be transmitted according to the method described above, a PDSCH-to-HARQ feedback timing indicator included in the DCI, and a PRI is identified based on the applied option, and a PUCCH resource to transmit HARQ-ACK may be determined.

Thereafter, the terminal may transmit HARQ-ACK information in the determined PUCCH resource in step S1783.

Not all steps of the above-described method need to be performed, and specific steps may be omitted or the order may be changed.

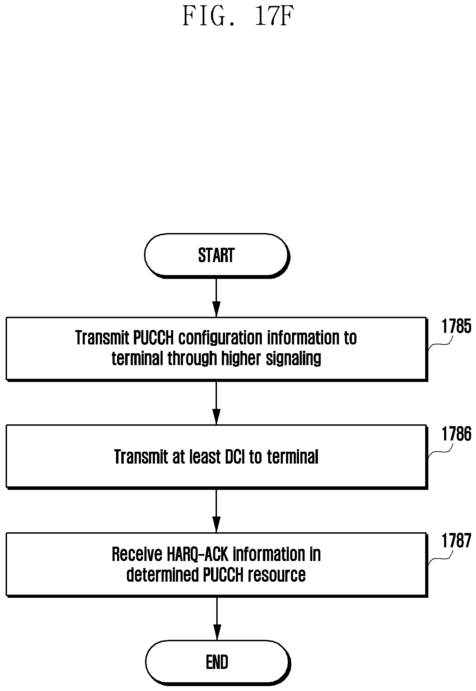

FIG. 17f is a flowchart illustrating an example of a method for a base station to receive HARQ-ACK information for NC-JT transmission from a terminal.

With reference to FIG. 17f, (although not illustrated) the base station may receive the UE capability report message (e.g., an UECapabilityInformation message) including capability information on whether the described option transmitted by the terminal is supported, and may explicitly configure which option is applied to the terminal based on the capability information transmitted by the terminal or implicitly apply a specific option.

The base station may transmit PUCCH configuration information to the terminal through higher signaling in step S1785. The PUCCH configuration information may include at least one information of Table 21, Table 22, Table 29, and Table 30, and at least one of PUCCH group configuration information, information for configuring a relationship between a PRI and a PUCCH resource in Table 26, and information for configuring a candidate for a K1 value in Table 21 may be included.

Thereafter, in step S1786, the base station transmits the DCI for scheduling downlink data to the terminal on the PDCCH (this may be mixed with PDCCH transmission), and the terminal may identify at least one of a HARQ-ACK payload to be transmitted according to the above-described method, a PDSCH-to-HARQ feedback timing indicator included in the DCI, and a PRI, based on an option applied to the terminal, and may determine a PUCCH resource to transmit HARQ-ACK.

Thereafter, the terminal transmits HARQ-ACK information from the determined PUCCH resource, and the base station may receive HARQ-ACK information from the PUCCH resource determined in the same way in step S1787.

Not all steps of the above-described method need to be performed, and specific steps may be omitted or the order may be changed.

<Third embodiment: Resource configuraiton for PUCCH transmission to a plurality ofTRPs>

For PUCCH transmission to a plurality of TRPs, PUCCH resources may be configured in at least one of the following methods. Meanwhile, transmission of PUCCH resources may mean transmission of PUCCH or transmission of UCI through PUCCH.

1) Repetitive PUCCH transmission through a single PUCCH resource: PUCCH is repeatedly transmitted according to a predetermined repetition transmission unit through a single PUCCH resource, and the PUCCH transmission beam and/or transmission power may be changed for each repetitive transmission or in some repetitive transmissions among all repetitive transmissions.

2) PUCCH transmission through a plurality of PUCCH resources: A plurality of different PUCCHs, including the same control information, is transmitted through different TRPs, and the plurality of PUCCHs may not overlap each other. In addition, different transmission beams and/or transmission powers may be applied to the plurality of PUCCHs.

Detailed embodiments of each of the above-described resource constitution methods are described below.

<3-1 embodiment: Resource configuration for repeatedly transmitting PUCCH to a plurality of TRPs on a single PUCCH resource >

In the case that a PUCCH is repeatedly transmitted to a plurality of TRPs through a single PUCCH resource, there may be the following differences from the case of repeatedly transmitting a PUCCH to a single TRP on a single PUCCH resource.

• Whether repetitive transmission of a short PUCCH is required:

In the case of repeatedly transmitting PUCCH on a single PUCCH resource with a single TRP, only a long PUCCH is used, and repetitive transmission of the short PUCCH is not supported. The reason is that repetitive transmission is for coverage enhancement, but the short PUCCH is not designed for coverage enhancement.

On the other hand, one purpose of performing repetitive PUCCH transmission to a plurality of TRPs may be overcome with blockage, and using short PUCCH may overcome blockage with less delay compared to using long PUCCH. Therefore, a short PUCCH may be used for repetitive PUCCH transmission to a plurality of TRPs.

• Whether scheduling that reflects transient time between repetitive transmissions is required:

In the case of performing repetitive short PUCCH transmission to a plurality of TRPs, a change in beam and transmission power may occur between repetitive transmissions. When changing the transmission power for the short PUCCH, a guard time or offset between short PUCCH transmissions may be required to satisfy the above-described transient time. Therefore, when performing repetitive short PUCCH transmission to a plurality of TRPs, repetitive transmission reflecting the offset may be required.

First, repetitive transmission of the short PUCCH may be performed in a sub-slot unit.

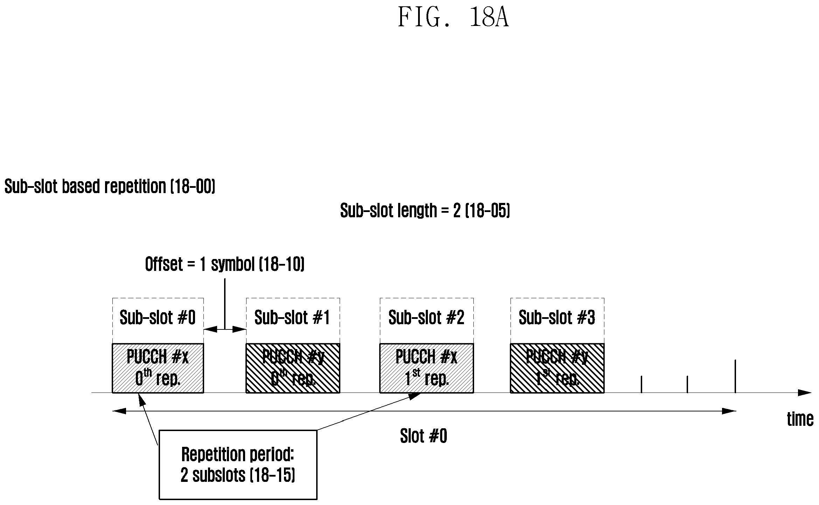

FIG. 18a is a view illustrating repetitive short PUCCH transmission in sub-slot units.

The length of the sub-slot may be equal to or longer than the length of short PUCCH repetitively transmitted, and the length of the sub-slot may vary depending on time.

FIG. 18a illustrates an example in which all sub-slots have the same length as 2 (18-05), but is not limited thereto. The offset between the short PUCCHs may be configured through PUCCH resource scheduling of the base station, such as configuring the start symbol location in the sub-slot of the short PUCCH and the length configuration of the short PUCCH. However, in the case in which the offset cannot be configured due to PUCCH resource scheduling, such as the case in which the length of the sub-slot is the same as the length of the short PUCCH, a method of configuring the offset between repetitive short PUCCH transmissions may be necessary. The offset may be configured in a sub-slot unit or a symbol unit.

FIG. 18a illustrates an example in which the offset is configured as 1 symbol (18-10). 1 symbol is only an example and is not limited thereto. The offset may be configured between repetitive transmissions of each short PUCCH. Alternatively, in the case in which the transmission power change does not occur during repetitive short PUCCH transmission, an offset is not required, and thus an offset may be configured only between repetitive transmissions in which transmission power change occurs.

The above-described 'between repetitive transmissions in which transmission power change occurs' may be replaced with an expression such as 'between repetitive transmissions in which beam change occurs' and 'between repetitive transmissions in which spatialRelationInfo is different'.

Although the above description has been described for the sake of convenience of technology for repetitive short PUCCH transmission, the above description may be similarly applied to the long PUCCH.

Meanwhile, in consideration of a case in which PUCCH is repeatedly transmitted by alternately using a plurality of PUCCH resources, repetitive PUCCH transmission may not occur for each adjacent sub-slot, but may be repeated for each sub-slot of a predetermined period. FIG. 18a illustrates an example in which the above-described repetitive transmission period is configured to 2 sub-slot (18-15), but the period of 2 sub-slots is only an example and is not limited thereto. A preset offset may be reflected in the repetitive transmission period (18-15).

Next, repetitive short PUCCH transmission may be performed in a slot or sub-slot.

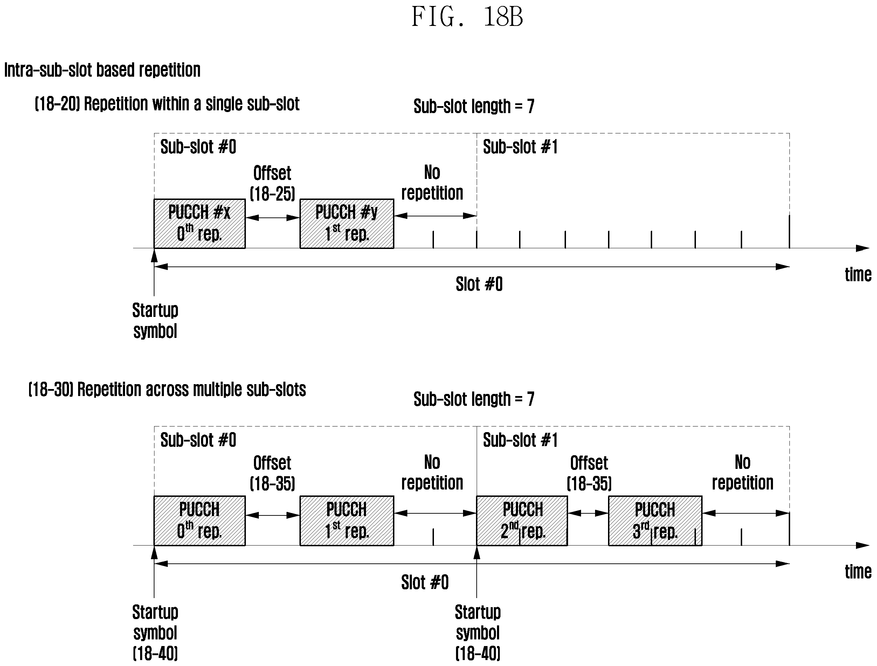

FIG. 18b is a view illustrating repetitive short PUCCH transmission in a slot or sub-slot.

The above-described repetitive short PUCCH transmission may be performed within one slot or sub-slot (18-20), or may be performed over a plurality of slots or sub-slots (18-30). In the case that the repetitive transmission is performed in one slot or sub-slot (18-20), an offset between repetitive transmissions may be configured (18-25). The offset may be configured in units of symbols. The offset may be configured between repetitive transmissions of each short PUCCH. Alternatively, in the case that the transmission power change does not occur during repetitive transmission of the short PUCCH, an offset is not required, and thus an offset may be configured only between repetitive transmissions in which transmission power change occurs.

The 'between repetitive transmissions in which transmission power change occurs' may be replaced with an expression such as 'between repetitive transmissions in which beam change occurs' and 'between repetitive transmissions in which spatialRelationInfo is different'.

Alternatively, depending on the length of the repeatedly transmitted PUCCH, the configuration and/or the presence or absence of an offset may vary. For example, an offset may be configured or applied only when transmitting a short PUCCH repeatedly, and an offset may not be applied when transmitting repeatedly a long PUCCH. This may be because whether a guard time between transmissions in which the transmission power change occurs is required is different depending on the length of the transmitted PUCCH.

In the case that repetitive transmission is performed over a plurality of slots or sub-slots (18-30), an offset between repetitive transmissions may be configured (18-35). The offset can be applied only between repetitive transmissions within one slot or sub-slot. In this case, an offset between repetitive transmissions between different slots or sub-slots may be given through configuring a start symbol of the short PUCCH (18-40). That is, the start symbol configuring of the short PUCCH may be applied to repetitive transmission of the first short PUCCH of every slot or sub-slot.

Alternatively, the offset may be applied between repetitive transmissions between different slots or sub-slots. In this case, the start symbol configured for the short PUCCH may be applied only to the first short PUCCH transmission among all the repetitive short PUCCH transmissions. The above-described offset may be configured between repetitive transmissions of each short PUCCH. Alternatively, in the case that the transmission power change does not occur during repetitive short PUCCH transmission, an offset is not required, and thus an offset may be configured only between repetitive transmissions in which transmission power change occurs.

The 'between repetitive transmissions in which transmission power change occurs' may be replaced with an expression such as 'between repetitive transmissions in which beam change occurs' and 'between repetitive transmissions in which spatialRelationInfo is different'. Alternatively, whether an offset is configured and/or applied may vary according to the length of the repeatedly transmitted PUCCH. For example, an offset may be configured or applied only when transmitting a short PUCCH repeatedly, and an offset may not be applied when transmitting a long PUCCH repeatedly. The reason may be that whether a guard time between transmissions in which the transmission power change occurs is required is different depending on the length of the transmitted PUCCH.

Although the above description has been described for the sake of convenience of technology for repetitive short PUCCH transmission, the above description may be similarly applied to the long PUCCH.

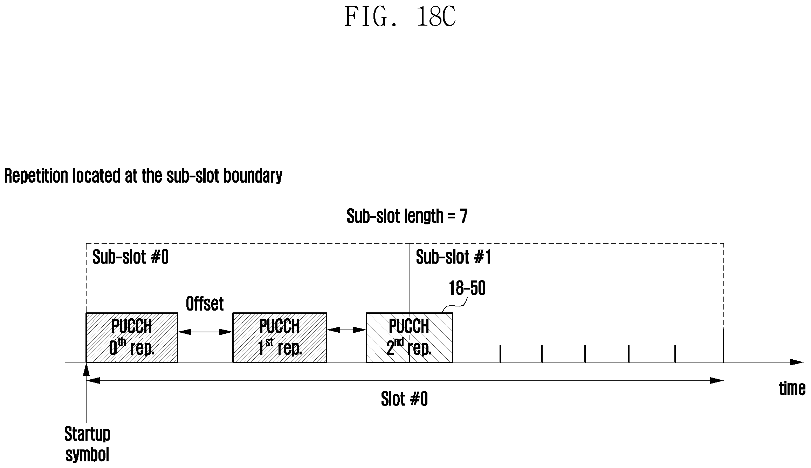

FIG. 18c is another view illustrating the repetitive PUCCH transmission in a slot or sub-slot in a wireless communication system according to an embodiment of the disclosure.

With reference to FIG. 18c, in the case that the repetitive PUCCH transmission is performed within a slot or sub-slot, some PUCCHs among all repetitive transmissions may span a boundary of a slot or sub-slot (18-50). As a treatment method for this case, at least one of the following methods may be included.

Method 1. A symbol crossing a slot or sub-slot boundary in the repetitive PUCCH transmission may be dropped. In this case, the configured number of repetitive transmissions and the actual number of repetitive transmissions are the same.

Method 2. A symbol over a slot or sub-slot boundary in the repetitive PUCCH transmission may be regarded as a new repetitive transmission. In this case, the actual number of the repetitive transmissions may be greater than the configured number of repetitive transmissions.

Method 3. The repetitive transmission over a slot or sub-slot boundary in the repetitive PUCCH transmission is dropped. In this case, the actual number of repetitive transmissions may be smaller than the configured number of repetitive transmissions.

Method 4. The repetitive PUCCH transmission, that is, the repetitive transmission over a slot or sub-slot boundary is shifted to the next slot or sub-slot. The shifted location may be the first symbol of the next slot or sub-slot, or a location configured as the PUCCH start symbol.

Method 5. It is scheduled so that the repetitive PUCCH transmission, that is, the repetitive transmission over a slot or sub-slot boundary is not occurred. In this case, the terminal may not expect repetitive transmission across the slot or sub-slot boundary.

In the above-described methods, one or more DL symbols exist in a slot or sub-slot, and the methods may be similarly applied even in the case that the repetitive PUCCH transmission overlaps the DL symbols.

According to Method 1 and Method 2 among the methods, the lengths of repetitive PUCCH transmissions may not be the same. Here, the case in which soft combining between PUCCHs having different lengths is not performed may be occurred. Therefore, at least one of the following constraint condition or PUCCH encoding may need to be changed.

- Constraint condition: The length should be the same between repetitive PUCCH transmissions for the same target TRP, and the length may be different between repetitive PUCCH transmissions for different target TRPs. The reason is that, in the case of repetitive transmissions for different target TRPs, soft combining of PUCCHs received from different TRPs may be difficult due to restrictions on backhaul capacity between TRPs. Therefore, it is not necessary to support soft combining between different TRPs. On the other hand, the reason may be that, in the case of repetitive transmission for the same target TRP, although soft combining is possible, unnecessary performance degradation may occur if soft combining is not supported.

- PUCCH encoding change: According to the length of UCI, PUCCH may be encoded by using Reed-Muller code in the case that the length of UCI is 11 bits or less, and PUCCH may be encoded by using Polar code in the case that the length of the length of UCI exceeds 11 bits. In the case of using the Polar code, if E is the total number of transmittable bits according to the amount of resources allocated to the PUCCH, different encoding methods may be applied according to E for each repetitive PUCCH transmission. Therefore, in the case of using the Polar code, it is assumed that the E values of all repetitive PUCCH transmissions are the same, and then encoded, and then adaptively transmitted according to the actual resource amount for each repetitive PUCCH transmission. For example, if the actual resource amount of the repetitive PUSCH transmission is smaller than the E value, a part of the encoded code according to the E value may be dropped (puncturing). Alternatively, if the actual resource amount of the repetitive PUCCH transmission is larger than the value E, a part of the encoded code may be repetition according to the actual resource amount. At least one of the following may be included as a criterion for determining the above-described E value.

  ■ Reference 1: PUCCH corresponding to a specific order among the repetitive PUCCH transmissions. For example, the first PUCCH.
  ■ Reference 2: PUCCH with the largest amount of resources among the repetitive PUCCH transmissions.
  ■ Reference 3: PUCCH with the least amount of resources among the repetitive PUCCH transmissions.
  ■ Reference 4: Average value for each resource amount by the repetitive PUCCH transmission.
  ■ Reference 5: PUCCH transmitted to a specific TRP among the repetitive PUCCH transmissions. For example, PUCCH corresponding to the first beam.

For the repetitive PUCCH transmission, the number of TRPs may be smaller than the number of repetitive transmissions. In this case, a mapping rule for which TRP each repetitive transmission is transmitted is required. As an example, a transmission pattern for each TRP may be periodically configured.

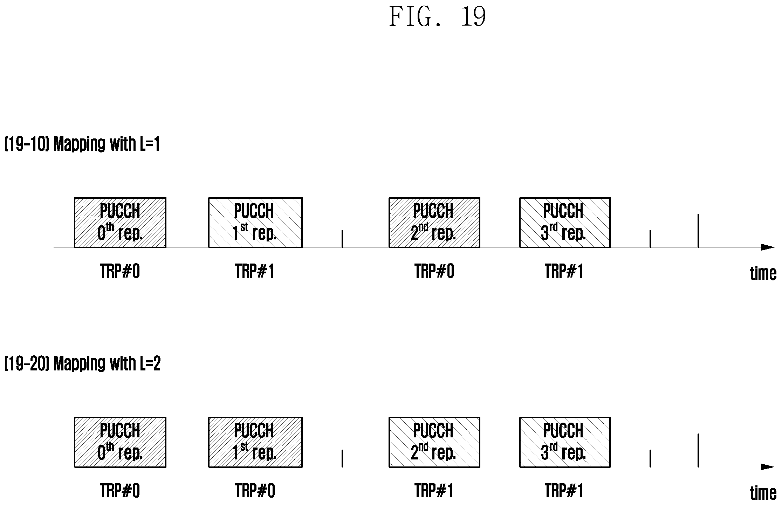

FIG. 19 is a view illustrating an example of a mapping rule between repetitive PUCCH transmission and TRP according to an embodiment of the disclosure.

With reference to FIG. 19, FIG. 19 illustrates a transmission pattern for each TRP in the case that the total number of repetitive transmissions is N and the number of receptions TRPs is K. Each TRP is allocated with L consecutive repeated transmissions in a round-robin manner. The L value may be configured to one of 1, 2, . . . , $\lfloor N/K \rfloor$, $\lfloor \frac{N}{K} + 1 \rfloor$ (19-10, 19-20). If the L value is small, TRP switching becomes more frequent, so there is an advantage in that the probability of early termination increases, but there is a disadvantage that more overhead for TRP switching is required. As another example, a transmission pattern for each TRP for all repetitive transmissions may be indicated. For example, in the case that two receiving TRPs are designated for 4 repetitive transmissions and they are named TRP #1 and TRP #2, the pattern for repetitive transmission may be indicated as {TRP #1, TRP #1, TRP #1, TRP #2}.

<3-2 embodiment: Resource configuration for PUCCH Transmission to a plurality of TRPs on a plurality of PUCCH Resources>

The UCI may be transmitted to different TRPs on each of the plurality of PUCCH resources by including the same UCI on a plurality of PUCCH resources. In this case, different beams may be configured for each of the plurality of PUCCH resources, and in the case that the repetitive transmission is configured for PUCCH resources, the entire repetitive transmission may be transmitted to the same TRP. The terminal should determine whether a specific UCI is transmitted on a plurality of PUCCH resources or is transmitted on a single PUCCH resource as in the prior art, and for this, at least one of the following methods may be used.

- Explicit PUCCH set configuration: PUCCH resources for transmitting the same UCI may be grouped into one PUCCH set. The PUCCH set may be explicitly configured, and each PUCCH set may have a different ID. The base station may indicate to the terminal that the UCI is transmitted on a plurality of PUCCH resources by indicating a PUCCH set ID for UCI transmission or a plurality of PUCCH resource IDs belonging to a PUCCH set. Alternatively, by indicating one PUCCH resource ID to the terminal, it may indicate that the UCI is transmitted on one PUCCH resource. Alternatively, a PUCCH set is also defined in a PUCCH resource indicator such as PM, and it is possible to determine whether to use a plurality of PUCCH resources, based on a PRI value. For example, a specific PRI value may indicate the PUCCH set, while another PRI value may be configured to indicate one PUCCH resource.
- Implicit PUCCH set configuration: In the case that the PUCCH resource group for each TRP is configured, a PUCCH resource is selected according to a specific rule for each group, and PUCCH resources selected for all groups may be gathered to constitute a PUCCH set. As an example of the rule, PUCCH resources having the same PUCCH resource ID within a group may be constituted as a PUCCH set. In this case, the terminal may determine whether to use a plurality of PUCCH resources according to whether there is one or a plurality of PUCCH resources corresponding to the PUCCH resource ID.

A constraint condition for the PUCCH set may be configured. For example, in the case that repetitive transmission for PUCCH resources in the PUCCH set is not configured, all PUCCH resources in the PUCCH set may be transmitted in the same slot or sub-slot, at this time, the overlap on the time axis between the PUCCH resources in the PUCCH set may not be allowed. As another example, a maximum value of the maximum number of PUCCH resources in the PUCCH set may be limited. As an example, the maximum value of the number of PUCCH resources may be 2.

<Fourth embodiment: UE Capability for transmission to a plurality of TRPs>

Independent UE capability may be required for each option related to PUCCH transmission to a plurality of TRPs described above. For example, some of the terminals may not support repetitive short PUCCH transmission. Accordingly, the terminal reports whether to support short PUCCH repetition transmission to the base station through the capability report, and the base station may configure short PUCCH repetition only to the terminal supporting short PUCCH repetition transmission after receiving the UE capability report.

Meanwhile, even if the terminal supports repetitive short PUCCH transmission, the minimum offset value between repetitions that can be supported for each terminal may be different. Accordingly, the terminal may report a minimum offset value between repetitions that can be supported during repetitive short PUCCH transmission to the base station through the capability report in a symbol, slot, sub-slot, or absolute time unit.

The base station may schedule the PUCCH with reference to the minimum supportable offset of the terminal after receiving the UE capability report. The minimum offset may be reported with regard to not only an offset between repetitive short PUCCH transmissions, but also an offset between short PUCCH-long PUCCH repetitive transmissions, and an offset between long PUCCH-long PUCCH repetitive transmissions.

Meanwhile, the minimum offset may not be an offset applied to all repetitive PUCCH transmissions. For reasons such as guaranteeing the above-described transition time, the minimum offset may be a value applied only between repetitive PUCCH transmissions accompanied by a beam/transmission power change. For the convenience of description, the above description is described only for the case of repetitive transmission of the same PUCCH of the embodiment 3-1, but it is similarly applicable to the case of transmissions of a plurality of PUCCH resources of the embodiment 3-2.

In addition, the maximum number of repetitive PUCCH transmissions in a slot or sub-slot may also be different for each terminal. Accordingly, the terminal may report the maximum number of repetitive PUCCH transmissions to the base station through the capability report. Meanwhile, the length of the sub-slot supported by the terminal may also differ for each terminal, and the length of the repeatedly transmitted sub-slot may be reported to the base station through the capability report. In addition, it is possible to report the combination of the above capabilities to the base station. For example, the maximum number of repetitive PUCCH transmissions in a slot for each length of a sub-slot may be reported to the base station through capability reporting. For the convenience of description, the above description is described only for the case of repetitive transmission of the same PUCCH of the embodiment 3-1, but it is similarly applicable to the transmissions of a plurality of PUCCH resources of the embodiment 3-2.

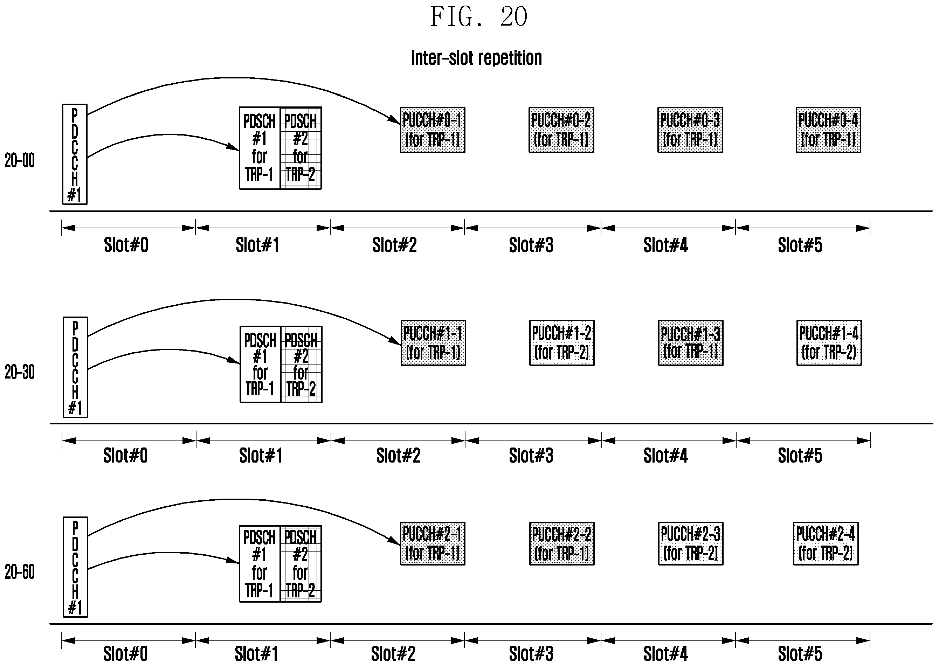

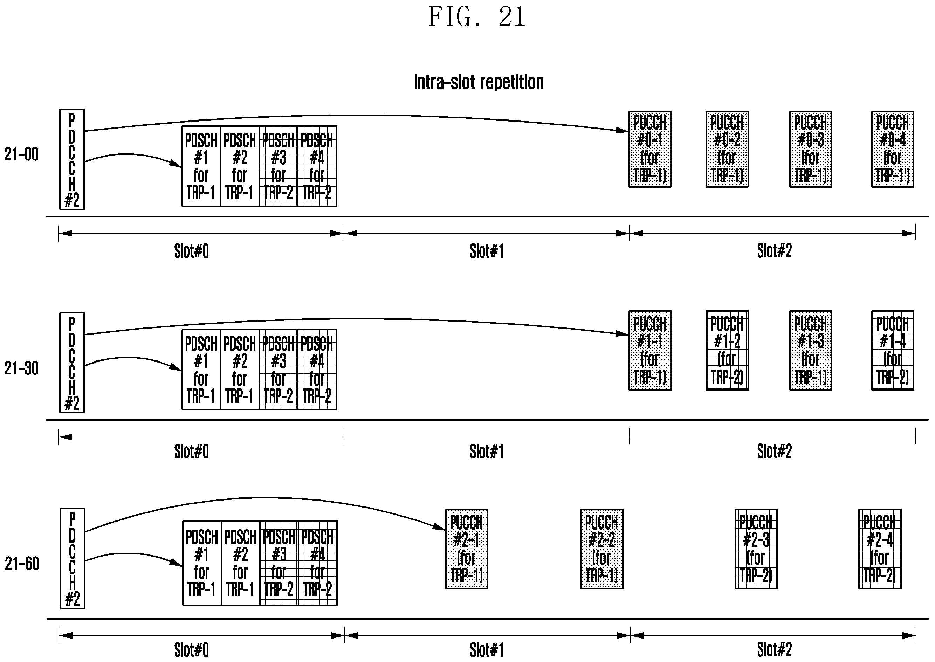

FIGS. 20 and 21 are views illustrating an example of application of a transmission power control (TPC) command according to a resource allocation method for repetitive PUCCH transmission scheduled in a PDCCH and a mapping rule between TRPs according to various embodiments of the disclosure. With reference to FIGS. 20 and 21, the terminal may increase or reduce the power for PUCCH transmission by identifying the resources configured for the PUCCH and TPC command information indicated by the PDCCH, described above.

As described above, in the disclosure, TRP may be expressed by being replaced with terms such as cell, transmission point, panel, node, TP, beam and/or transmission direction. In addition, as described above, the TRP may be classified according to an index configured in CORESET (e.g., CORESETPoolIndex). The terminal may determine or consider that the PDCCH is transmitted from the same TRP for CORESETs in which the same CORESETPoolIndex value is configured. In addition, different beam directions may be indicated for each PUCCH for PUCCH transmission to a plurality of TRPs.

FIG. 20 is a view illustrating a resource allocation method for repetitive transmission of an inter-slot-based PUCCH and an application method of power adjustment according to a mapping rule between TRPs according to an embodiment of the disclosure.

With reference to FIG. 20, the base station may allocate resources of PDSCH#1 and PDSCH#2 using DCI formats 1_0, 1_1, and 1_2 of PDCCH#1. The base station may indicate a field for allocating PDSCH resources transmitted by the base station using at least one of the DCI formats 1_0, 1_1, and 1_2. In addition, the base station may include information indicating a PUCCH resource for transmitting HARQ-ACK/NACK information indicating whether the terminal has successfully received the PDSCH (e.g., PUCCH resource indicator (PRI))) and information instructing to adjust the power of the PUCCH resource (e.g., a TPC command) in at least one of the DCI formats 1_0, 1_1, and 1_2, and may transmit it to the terminal. In this case, as illustrated in FIG. 20, a case in which one PUCCH resource is configured in one slot may be referred to as inter-slot repetition.

FIG. 21 is a view illustrating a resource allocation method for repetitive transmission of an intra-slot-based PUCCH and an application method of power adjustment according to a mapping rule between TRPs according to an embodiment of the disclosure.

With reference to FIG. 21, the base station may allocate resources of PDSCH#1, PDSCH#2, PDSCH#3, and PDSCH#4 using DCI formats 1_0, 1_1, and 1_2 of PDCCH#2. The base station may indicate a field for allocating PDSCH resources transmitted by the base station using at least one of the DCI formats 1_0, 1_1, and 1_2. In addition, the base station may include information indicating a PUCCH resource for transmitting HARQ-ACK/NACK information indicating whether the terminal has successfully received the PDSCH (e.g., PRI), and information instructing to adjust the power of the PUCCH resource (e.g., TPC command) in at least one of the DCI formats 1_0, 1_1, and 1_2 and may transmit it to the terminal. In this case, a case in which a plurality of PUCCH resources is configured in one slot as illustrated in FIG. 21 may be referred to as intra-slot repetition.

Here, one or a plurality of PUCCH resources may be configured in one slot using a higher layer parameter, and a period thereof may be configured.

Basically, in FIGS. 20 and 21, the HARQ ACK/NACK information transmitted by the terminal may be transmitted through the same encoding for each repetitive PUCCH resource (e.g., PUCCH#1-1 to #1-4, PUCCH#2-1 to #2-4) configured by the base station.

In addition, the basic uplink beamforming direction for PUCCH transmission of the terminal configured by the base station may be determined by various parameters and index values (e.g., PUCCH-PathlossReferenceRS, referenceSignal p0-PUCCH-Id, etc.) in each higher layer parameter PUCCH-SpatialRelationInfo. Various parameters and indexes (e.g., PUCCH-PathlossReferenceRS, reference Signal p0-PUCCH-Id, etc.) in PUCCH-SpatialRelationInfo may be configured as shown in Table 31 below. The higher layer parameter PUCCH-SpatialRelationInfo may be used to configure a spatial setting for PUCCH transmission and a parameter for PUCCH power control.

[Table 31]

```
PUCCH-SpatialRelationInfo ::=          SEQUENCE {
    pucch-SpatialRelationInfoId        PUCCH-SpatialRelationInfoId,
    servingCellId                      ServCellIndex    OPTIONAL,    -- Need
S
    referenceSignal                    CHOICE {
        ssb-Index                      SSB-Index,
        csi-RS-Index                   NZP-CSI-RS-ResourceId,
        srs                            PUCCH-SRS
    },
    pucch-PathlossReferenceRS-Id       PUCCH-PathlossReferenceRS-Id,
    p0-PUCCH-Id                        P0-PUCCH-Id,
    closedLoopIndex                    ENUMERATED { i0, i1 }
}
```

Hereinafter, a higher layer signaling method for repetitive PUCCH transmission according to an embodiment of the disclosure will be described in detail.

<Method A-1>

For configuring one or more repetitive PUCCHs (e.g., 20-00 in FIG. 20 or 21-00 in FIG. 21, PUCCH #0-1 to #0-4,), the base station may configure the various parameters and index values (e.g., PUCCH-SpatialRelationInfoID, PUCCH-PathlossReferenceRS-ID, reference Signal, p0-PUCCH-Id, closedLoopIndex, etc. in Table 31) to one set or individually, in one PUCCH-SpatialRelationInfo in the higher layer. As such, when each parameter is configured to one value instead of a plurality, the terminal may determine that information corresponding to the beamforming direction configured by the base station for PUCCH transmission is the same. The terminal may transmit PUCCH#0-1 to PUCCH#0-4 by applying the same beamforming direction based on the parameter and index in the configured PUCCH-SpatialRelationInfo.

As another example, in order to configure one or more repetitive PUCCHs (e.g., 21-00, PUCCH #0-1 to #0-4 in FIG. 21), the base station may configure the various parameters and index values (e.g., PUCCH-SpatialRelationInfoID, PUCCH-PathlossReferenceRS-ID, reference Signal, p0-PUCCH-Id, closedLoopIndex, etc. in Table 31) to one set or individually in one PUCCH-SpatialRelationInfo in the higher layer. In this way, the terminal is configured to one set instead of a plurality of sets for each parameter, and if repetitive PUCCH resources allocated to correspond to one or repetitive PDSCH resources are repeated within one slot or within one subslot, the one set of the various parameters and indexes in the configured one PUCCH-SpatialRelationInfo may be applied during the designated slot or subslot. In addition, if repetitive PUCCH resources allocated to correspond to one or repetitive PDSCH resource are repeated within one slot or within one subslot, the terminal may apply one set of the various parameters and indexes in the configured one PUCCH-SpatialRelationInfo during the designated slot or subslot. As another example, even if the repetitive PUCCH resources allocated to correspond to one or the repetitive PDSCH resources are repeated within a plurality of slots or within a plurality of subslots, the terminal may apply one set of the various parameters and indexes in the configured one PUCCH-SpatialRelationInfo during the designated slot or subslot.

On the other hand, for configuring PUCCH #1-1 to PUCCH #1-4 or PUCCH #2-1 to PUCCH #2-4 as in the example of 20-30 or 20-60 of FIG. 20, 21-30 or 21-60 of FIG. 21, the base station may configure the higher layer parameter or index value in a partially changed form, and configure two or more beamforming directions in PUCCH resources that are repeated as one set. As a method for this, a method according to RRC configuration and a method according to MAC CE message configuration may be possible. Hereinafter, a method for configuring two or more beamforming directions for repetitive PUCCH transmission and controlling transmission power of PUCCH is proposed. In addition, as described above, the configuration of two or more beamforming directions may mean that the terminal may transmit PUCCHs in different TRPs, respectively.

<Method A-2-1>

For a PUCCH operation that is repeated in one set with different beamforming directions, the base station may configure the parameter or index value constituted in the configured one higher layer parameter (e.g., PUCCH-Spatial-RelationInfo-r17) to one value. For example, as shown in Table 31, the base station may configure one parameter pucch-SpatialRelationInfoId in the higher layer parameter (e.g., PUCCH-SpatialRelationInfo-r17), and may configure closed-LoopIndex corresponding to each pucch-PathlossReferenceRS-Id and p0-PUCCH-Id to i0 or i1.

For example, the pucch-SpatialRelationInfoId configuration value may be configured to 1, the pucch-Pathloss-ReferenceRS-Id configuration value may be configured to 1, the P0-PUCCH-Id configuration value may be configured to 2, and the closedLoopIndex configuration value may be configured to i0. In addition, a pucch-SpatialRelationInfoId configuration value may be configured to 2, a pucch-PathlossReferenceRS-Id configuration value may be configured to 2, a P0-PUCCH-Id configuration value may be configured to 1, and a closedLoopIndex configuration value may be configured to i1. In this case, as in DCI format 2_2, the terminal may identify whether the closedLoopIndex configuration value is configured to i0 (0) or il (1), based on the 1-bit value (e.g., 0 or 1) of the closedLoopIndex field of the DCI in the PDCCH where the command to perform group common PUCCH-based power control is possible.

<Method A-2-2>

For a PUCCH operation that is repeated in one set with different beamforming directions, the base station may configure at least two parameters or index values constituted in the configured one higher layer parameter (e.g., PUCCH-SpatialRelationInfo-r17). The higher layer parameter PUCCH-SpatialRelationInfo-r17 may be used to configure spatial setting for PUCCH transmission and parameters for PUCCH power control.

For example, an higher layer parameter (e.g., PUCCH-SpatialRelationInfo-r17) may be configured as shown in Table 32 below.

[Table 32]

```
PUCCH-SpatialRelationInfo-r17 ::=      SEQUENCE {
    pucch-SpatialRelationInfoId1-v17        PUCCH-SpatialRelationInfoId-v17
    servingCellId                           ServCellIndex    OPTIONAL,    -- Need S
    referenceSignal                         CHOICE {
        ssb-Index                               SSB-Index,
        csi-RS-Index                            NZP-CSI-RS-ResourceId,
        srs                                     PUCCH-SRS
    },
    pucch-SpatialRelationInfoId2-v17        PUCCH-SpatialRelationInfoId-v17
    servingCellId                            ServCellIndex    OPTIONAL,    -- Need
S
    referenceSignal                         CHOICE {
        ssb-Index                               SSB-Index,
        csi-RS-Index                            NZP-CSI-RS-ResourceId,
        srs                                     PUCCH-SRS
    },
    pucch-PathlossReferenceRS-Id1-v17       PUCCH-PathlossReferenceRS-Id-v17
    p0-PUCCH-Id1                            P0-PUCCH-Id,
    closedLoopIndex1                       ENUMERATED { i0, i1 }
    pucch-PathlossReferenceRS-Id2-v17       PUCCH-PathlossReferenceRS-Id-v17
    p0-PUCCH-Id2                            P0-PUCCH-Id,
    closedLoopIndex2                       ENUMERATED { i0, i1 }
    ...
}
```

As shown in Table 32, two parameters pucch-SpatialRelationInfoId1 and pucch-SpatialRelationInfoId2 may be configured in the higher layer parameter PUCCH-SpatialRelationInfo-r17, respectively. For example, by comprising two pucch-SpatialRelationInfoId1 and pucch-SpatialRelationInfoId2, parameters and index values corresponding to each pucch-SpatialRelationInfoId1 (e.g., pucch-PathlossReferenceRS-Id1, p0-PUCCH-Id1, ClosedLoopIndex1, etc.) and parameters and index values corresponding to pucch-SpatialRelationInfoId2 (e.g., pucch-PathlossReferenceRS-Id2, p0-PUCCH-Id2, and ClosedLoopIndex2, etc.) may be configured.

In addition, by combining a parameter (e.g., nrofSlots) for determining the number of repetitive PUCCH transmissions and the above-described parameters, the terminal may determine information related to the beamforming direction according to the number of repetitive PUCCHs.

For example, in the case that a value of nrofSlots is configured to 2, the terminal may determine that pucch-SpatialRelationInfoId1 is configured for a resource for the first transmitted PUCCH, and pucch-SpatialRelationInfoId2 is configured for a resource for the second transmitted PUCCH. In other words, the terminal may transmit the first PUCCH based on the parameter and index value corresponding to pucch-SpatialRelationInfoId1, and transmit the second PUCCH based on the parameter and index value corresponding to pucch-SpatialRelationInfoId2.

For example, a mapping relationship between a PUCCH resource repeatedly transmitted and a beamforming direction may be indicated through a higher layer parameter (e.g., SpatialMapping). As an example, with reference to 20-30 of FIG. 20, in the case that the nrofSlots value is configured to 4 and SpatialMapping is configured to cyclicMapping, the terminal may determine that pucch-SpatialRelationInfoId1 is configured for resources for the first and third transmitted PUCCHs, and pucch-SpatialRelationInfoId2 is configured for resources for the second and fourth transmitted PUCCHs. As another example, with reference to 20-60 of FIG. 20, in the case that the nrofSlots value is configured to 4 and SpatialMapping is configured to sequentialMapping, the terminal may determine that pucch-SpatialRelationInfoId1 is configured for resources for the first and second transmitted PUCCHs, and pucch-SpatialRelationInfoId2 is configured for resources for the third and fourth transmitted PUCCHs.

According to an embodiment of the disclosure, the configuration shown in Table 33 may be considered for the PUCCH operation that is repeated in one set with different beamforming directions.

[Table 33]

```
PUCCH-Config ::=                          SEQUENCE {
...
spatialRelationInfoToAddModList          SEQUENCE (SIZE (1..maxNrofSpatialRelationInfos)) OF PUCCH-
SpatialRelationInfo

spatialRelationInfoToAddModList2-r17     SEQUENCE (SIZE (1..maxNrofSpatialRelationInfosDiff-r16)) OF
PUCCH-SpatialRelationInfo                                                           OPTIONAL, --
Need N

spatialRelationInfoToAddModListExt-r17   SEQUENCE (SIZE (1..maxNrofSpatialRelationInfos-r16)) OF
PUCCH-SpatialRelationInfoExt-r17                                                    OPTIONAL, -- Need N
...


SpatialMapping-r17                       ENUMERATED {cyclicMapping, sequenticalMapping},
Repetition-r17                           CHOICE {
     pucch-RepType                       ENUMERATED {intraSlot, interSlot},
}
```

As shown in Table 33, for the PUCCH operation that is repeated in one set with different beamforming directions, the base station may further configure using spatialRelationInfoToAddModListExt in addition to the basic configuration of the configured spatialRelationInfoToAddModList, or may further configure by replacing the basic configuration of spatialRelationInfoToAddModList with spatialRelationInfoToAddModList2.

In addition, when a plurality of spatialRelationInfo is configured (e.g., SpatialRelationInfoToAddMod-List and SpatialRelationInfoToAddModListExt), the mapping relationship between the transmitted PUCCH resource and the beamforming direction may be determined based on the SpatialMapping parameter of Table 33. For example, if the higher layer parameter SpatialMapping is configured to cyclicMapping, the terminal may determine that the information related to a plurality of beamforming directions configured in SpatialRelationInfoToAddMod-List and SpatialRelationInfoToAddModListExt is configured to be applied to PUCCH resources that are repeatedly transmitted by crossing each other (e.g., 20-30 in FIG. 20). For example, when the higher layer parameter SpatialMapping is configured to sequentialMapping, the terminal may determine that the information related to a plurality of beamforming directions configured in SpatialRelationInfoToAddModList and SpatialRelationInfoToAddModListExt is configured to be applied to PUCCH resources that are sequentially and repeatedly transmitted to each other (e.g., 20-60 in FIG. 20).

For example, with reference to 20-30 of FIG. 20, in the case that the nrofSlots value is configured to 4 and SpatialMapping is configured to cyclicMapping, the terminal may determine that SpatialRelationInfoToAddModList is configured for resources for the first and third transmitted PUCCHs, and SpatialRelationInfoToAddModListExt is configured for resources for the second and fourth transmitted PUCCHs.

For another example, with reference to 20-60 of FIG. 20, in the case that the nrofSlots value is configured to 4 and SpatialMapping is configured to sequentialMapping, the terminal may determine that SpatialRelationInfoToAddModList is configured for resources for the first and second transmitted PUCCHs, and SpatialRelationInfoToAddModListExt is configured for resources for the third and fourth transmitted PUCCHs.

Although the above description has been described with reference to FIG. 20, in the example of FIG. 21, only the nrofSlots value or the resource configuration for allocating the repetitive PUCCHs is different, and the method of mapping pucch-SpatialRelationInfoId1, pucch-SpatialRelationInfoId2 or SpatialRelationInfoToAddModList, SpatialRelationInfoToAddModListExt may be similarly applied.

<Method A-2-3>

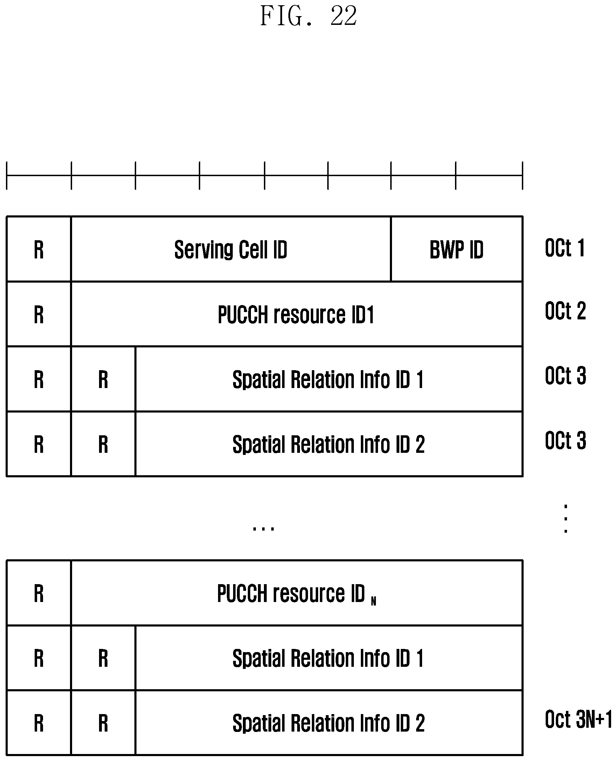

On the other hand, for the PUCCH operation repeated in one set with different beamforming directions, the base station may basically configure using MAC CE message in addition to the PUCCH-SpatialRelationInfo-r16 or PUCCH-SpatialRelationInfo-r17 configuration. For example, a method in which the MAC CE message of FIG. 22 is basically configured first in the higher layer (RRC) according to the above described methods A-1, A-2-1, and A-2-2 and is then additionally updated in the MAC layer is illustrated.

FIG. 22 is a view illustrating a format of an Enhanced PUCCH Spatial Relation Activation/Deactivation MAC CE message according to an embodiment of the disclosure.

Referring to FIG. 22, a Serving Cell ID may mean an ID of a serving cell to which the terminal is accessed, and a BWP ID may mean a frequency-side resource index corresponding to the BWP ID among the BWPs corresponding to the Serving Cell ID. In addition, a PUCCH resource ID may indicate a PUCCH resource corresponding to a specific PUCCH resource ID among the PUCCH resources configured in the BWP ID.

In order to perform the above-described operation, the base station may constitute MAC CE to map or reconfigure Spatial Relation Info ID 1 and Spatial Relation Info ID 2 indicating pucch-SpatialRelationInfoId configured in the RRC to one PUCCH resource ID and may transmit it to the terminal.

When the terminal receives the MAC CE message including Spatial Relation Info ID 1 and Spatial Relation Info ID 2 mapped to or corresponding to one PUCCH resource ID, Spatial Relation Info ID1 and Spatial Relation Info ID2 may be applied to PUCCH transmission alternately or sequentially according to the mapping method configured in RRC, that is, the cyclicMapping and sequentialMapping.

FIG. 22 is designed as a structure for additionally configuring and changing N number of PUCCH resource ID(s) at the same time, but if additional configuration and change of spatial relation info ID among PUCCH resource ID(s) is unnecessary, the Oct resource of the corresponding MAC CE may be omitted.

Table 34 below shows the power adjustment equation for PUCCH transmission.

[Table 34]

$$P_{\text{PUCCH},b,f,c}(i,q_u,q_d,l) = \min \left\{ \begin{array}{l} P_{\text{CMAX},f,c}(i), \\ P_{\text{O\_PUCCH},b,f,c}(q_u) + 10\log_{10}(2^\mu \cdot M^{\text{PUCCH}}_{\text{RB},b,f,c}(i)) + PL_{b,f,c}(q_d) + \Delta_{\text{F\_PUCCH}}(F) + \Delta_{\text{TF},b,f,c}(i) + g_{b,f,c}(i,l) \end{array} \right\} \quad [\text{dBm}]$$

For PUCCH transmission occasion $i$ on active UL BWP $b$ of carrier $f$ of primary cell $c$ and $\mu$ is a SCS configuration,

$P_{\text{CMAX},f,c}(i)$ the UE configured maximum output power defined in TS 38.101-1

$P_{\text{O\_PUCCH},b,f,c}(q_u)$ is a parameter composed of the sum of a component $P_{\text{O\_NOMINAL\_PUCCH}}$, provided by *pO-nominal*, or $P_{\text{O\_NOMINAL\_PUCCH}} = 0$ dBm if *pO-nominal* is not provided

$M^{\text{PUCCH}}_{\text{RB},b,f,c}(i)$ a bandwidth of the PUCCH resource assignment expressed in number of resource blocks

$PL_{b,f,c}(q_d)$ is a downlink pathloss estimate in dB calculated by the UE using RS resource index $q_d$

$\Delta_{\text{F\_PUCCH}}(F)$ The parameter $\Delta_{\text{F\_PUCCH}}(F)$ is a value of *deltaF-PUCCH-f0* for PUCCH format 0, *deltaF-PUCCH-f1* for PUCCH format 1, *deltaF-PUCCH-f2* for PUCCH format 2, *deltaF-PUCCH-f3* for PUCCH format 3, and *deltaF-PUCCH-f4* for PUCCH format 4, if provided; otherwise $\Delta_{\text{F\_PUCCH}}(F) = 0$.

$\Delta_{\text{TF},b,f,c}(i)$ is a PUCCH transmission power adjustment component according to the PUCCH format

$g_{b,f,c}(i,l)$ the PUCCH power control adjustment state

- $g_{b,f,c}(i,l) = g_{b,f,c}(i-i_0,l) + \sum_{m=0}^{C(C_i)-1} \delta_{\text{PUCCH},b,f,c}(m,l)$ is the current PUCCH power control adjustment state $l$ for active UL BWP $b$ of carrier $f$ of primary cell $c$ and PUCCH transmission occasion $i$, where

  - The $\delta_{\text{PUCCH},b,f,c}$ values are given in Table below

Table: Mapping of TPC Command Field in DCI format 1_0 or DCI format 1_1 or DCI format 2_2 with CRC scrambled by TPC-PUCCH-RNTI to accumulated $\delta_{\text{PUCCH},b,f,c}$ values

| TPC Command Field | Accumulated $\delta_{\text{PUCCH},b,f,c}$ [dB] |
|---|---|
| 0 | -1 |
| 1 | 0 |
| 2 | 1 |
| 3 | 3 |

$\delta_{\text{PUCCH},b,f,c}(i,l)$ is a TPC command value and is included in a DCI format 1_0 or DCI format 1_1

- $l \in \{0,1\}$ if the UE is provided *twoPUCCH-PC-AdjustmentStates* and *PUCCH-SpatialRelationInfo* and $l=0$ if the UE is not provided *twoPUCCH-PC-AdjustmentStates* or *PUCCH-SpatialRelationInfo*

- If the UE obtains a TPC command value from a DCI format 1_0 or a DCI format 1_1 and if the UE is provided *PUCCH-SpatialRelationInfo*, the UE obtains a mapping, by an index provided by *p0-PUCCH-Id*, between a set of *pucch-SpatialRelationInfoId* values and a set of values for *closedLoopIndex* that provide the $l$ value(s). If the UE receives an activation command indicating a value of *pucch-SpatialRelationInfoId*, the UE determines the value *closedLoopIndex* that provides the value of $l$ through the link to a corresponding *p0-PUCCH-Id* index

- If the UE obtains one TPC command from a DCI format 2_2 with CRC scrambled by a TPC-PUCCH-RNTI, the $l$ value is provided by the closed loop indicator field in DCI format 2_2

In Table 34, g(i) is a parameter for performing closed-loop power control, and may vary depending on whether the terminal performs accumulation-based power control or absolute value-based power control. Whether the terminal performs accumulation-based power control or absolute value-based power control may be transmitted to the terminal through higher layer signaling (dedicated RRC signaling). For example, when the accumulation-enabled parameter is configured to 'on', the terminal may perform accumulation-based power control, and when the accumulation-enabled parameter is configured to 'off', the terminal may perform absolute value-based power control. $P_{0PUCCH,f,c}$ means a value of $P_{0PUCCH}$ at the frequency f of the serving-cell c, is a parameter composed of $P_{0\_NOMINAL\_PUCCH}+P_{0\_UE\_PUCCH}$, and is a value notified by the base station to the terminal through higher layer signaling (RRC signaling). $q_u$ in $P_{0PUCCH}$ denotes an index of $P_{0PUCCH}$, and may have different indexes depending on a beam used for PUCCH transmission or a service type of the corresponding PUCCH (i.e., eMBB usage or URLLC usage).

PL, which is the path loss value calculated by the terminal, may be calculated through the received power of the downlink RS transmitted by the base station. Since there is no cell-specific reference signal (CRS) in the NR, the PL may be measured by the terminal through the RS resource indicated by the base station through $q_u$. For example, $q_u$ may be a resource index of a channel state information-reference signal (CSI-RS) or a resource index of a synchronization signal block (SSB) resource.

Hereinafter, a method in which the power adjustment command indicated by the TPC command of DCI described above is applied according to the repetitive PUCCH resource configuration will be described in detail.

<Method B-1>

A case in which the bit width of the field including the TPC command (a value indicating the degree of increase or reduction of power using a value of $\delta_{\text{PUCCH},b,f,c}$) information is maintained to 2 bits (TPC command for scheduled PUCCH) in DCI format 1_0, 1_1, or 1_2 as in a general method may be considered. In this way, in the case of determining to the same bit width, if one Spatialrelationinfo for configuring the beamforming direction of the repetitive PUCCH resource as in various embodiments described in method A-1/A-2-1/A-2-2/A-2-3 is configured, it is necessary to define a method for applying power adjustment for the PUCCH transmission.

For example, if the value of the TPC command field in the DCI received by the terminal is 00 in FIG. 20 or FIG. 21, the terminal may equally apply the power reduction to all repetitive PUCCH resources scheduled in the DCI. In this case, the reduction amount may be determined by configuring the value of Accumulated $\delta_{\text{PUCCH},b,f,c}$ in the equation for determining the PUCCH transmission power described in Table 34 above to -1 (dB). In addition, if the value of TPC command field in the DCI received by the terminal is 01, the terminal may apply to maintain the same power for all repetitive PUCCH resources scheduled in DCI. In this case, the reduction amount may be determined by configuring the value of Accumulated $\delta_{PUCCH,b,f,c}$ in the equation for determining the PUCCH transmission power to 0 (dB). In addition, if the value of the TPC command field in the DCI received by the terminal is 10 or 11, the terminal may apply the same power increase to all repetitive PUCCH resources scheduled in the DCI. In this case, the increase amount may be determined by configuring the value of Accumulated $\delta_{PUCCH,b,f,c}$ in the equation for determining the PUCCH transmission power to 1/3 (dB).

As another example, if the value of the TPC command field in the DCI received by the terminal is 00, the terminal may apply the power reduction recursively repeatedly to all PUCCH resources scheduled in the DCI. In this case, the reduction amount may be determined by configuring the value of Accumulated $\delta_{PUCCH,b,f,c}$ in the equation for determining the PUCCH transmission power to -1 (dB) to reflect the reduction or increase as many times as the number of repetitive transmissions. In addition, if the value of the TPC command field in the DCI received by the terminal is 10 or 11, the terminal may apply the power increase recursively repeatedly to all PUCCH resources scheduled in the DCI. In this case, the increase amount may be determined by configuring the value of Accumulated $\delta_{PUCCH,b,f,c}$ in the equation for determining the PUCCH transmission power to 1/3 (dB) to reflect the reduction or increase as many times as the number of repetitive transmission.

As another example, the DCI for the TPC command is 2 bits, and if one Spatialrelationinfo for configuring the beamforming direction to the repetitive PUCCH resource as in various embodiments of method A-1/A-2-1/A-2-2/A-2-3 is configured, a method of selectively performing power adjustment for the PUCCH transmission for a plurality of PUCCH resources may be required. In this case, if the value of the TPC command field in the DCI received by the terminal is 00, according to the total number of repetitive transmissions of the configured PUCCH resource, the power may be reduced or increased for at least a part of the total number. For example, if the total number of repetitions is 2, power adjustment may be applied only to the initial transmission or the last transmission. For example, if the total number of repetitions is 4, the power adjustment can be applied only to the initial 1 or 2 transmissions or 3 or 4 transmissions.

<Method B-2-1>

The bit width of the field including the TPC command (a value indicating the degree of increase/reduction in power using a value of $\delta_{PUCCH,b,f,c}$) information in DCI format 1_0, 1_1, or 1_2 may be assigned to 3 bits (TPC command for scheduled PUCCH). When one Spatialrelationinfo for configuring the beamforming direction to the repetitive PUCCH resource is configured as in various embodiments described in method A-1/A-2-1/A-2-2/A-2-3, a method of applying power adjustment for the PUCCH transmission may be required.

For example, in the case that the PUCCH transmission is repeated twice, if the first 1 bit (e.g., LSB or MSB) of the 3 bits is 0, it may be interpreted as information indicating to correspond to the first configured PUCCH resource, and if the first bit is 1, it may be interpreted as information indicating to correspond to the second configured PUCCH resource. The remaining 2 bits can be applied in the same manner as in the embodiment of method B-1.

As another example, in the case that the PUCCH transmission is repeated four times, if the first 1 bit (e.g., LSB or MSB) of the 3 bits is 0, it may be interpreted as information indicating to correspond to the first and second configured PUCCH resources, and if the first 1 bit is 1, it may be interpreted as information indicating to correspond to the third and fourth configured PUCCH resources. The remaining 2 bits may be applied in the same manner as in the embodiment of method B-1.

As another example, if the first bit (e.g., LSB or MSB) of the 3 bits is 0, it may be interpreted as information indicating that the first configured PUCCH resource corresponds to all PUCCH resources included in the allocated slot or subslot, and if the first bit is 1, it may be interpreted as information indicating to correspond to the PUCCH resource allocated after the slot or subslot. The remaining 2 bits may be applied in the same way as in the embodiment of method B-1.

<Method B-2-2>

The bit width of the field including the TPC command (a value indicating the degree of increase or reduction of power by using a value of $\delta_{PUCCH,b,f,c}$) information in DCI format 1_0, 1_1, or 1_2 may be assigned to 4 bits (TPC command for scheduled PUCCH). When one Spatialrelationinfo for configuring the beamforming direction is configured in the repetitive PUCCH resource as in various embodiments described in method A-1/A-2-1/A-2-2/A-2-3, a method of applying power adjustment for the PUCCH transmission may be required.

For example, the first 2 bits (e.g., 2 LSB or 2 MSB) among the 4 bits may be indicated to be mapped to the order of PUCCH resources repeatedly transmitted. For example, the terminal may determine that the first transmitted PUCCH resource is indicated if the 2 bits are 00, the second transmitted PUCCH resource is indicated if the 2 bits are 01, the third transmitted PUCCH resource is indicated if the 2 bits are 10, and the fourth transmitted PUCCH resource is indicated if the 2 bits are 11. In the case that the number of repetitions of PUCCH transmission is 8, the terminal may sequentially interpretate by associating two sets from the order in which PUCCH resources is first transmitted to one bit information. The remaining 2 bits may be applied in the same manner as in the embodiment of method B-1.

For another example, in the first 2 bits (e.g., 2 LSB or 2 MSB) of 4 bits, 00 may be interpreted as information indicating to correspond to all PUCCH resources included in a slot or subslot to which the first configured PUCCH resource is allocated, 01 may be interpretated as information indicating to correspond to a PUCCH resource allocated immediately after the slot or subslot, 10 may be interpretated as information indicating to correspond to a PUCCH resource allocated immediately after the slot or subslot indicated in 01, and 11 may be interpretated as information indicating to correspond to a PUCCH resource allocated immediately after the slot or subslot indicated in 10. The remaining 2 bits can be applied in the same way as in the embodiment of method B-1.

<Method B-2-3>

The same method as in the above described method B-1, B-2-1 or B-2-2 may be applied to the method of configuring the bit width of a field including TPC command (a value indicating the degree of increase or decrease of power by using a value of $\delta_{\text{PUCCH},b,f,c}$) information in DCI format 2_2.

In addition, when twoPUCCH-PC-AdjustmentStates or Closed loop indicator (1 bit) is configured to the terminal through RRC signaling, the terminal may identify 1 bit corresponding to the Closed loop indicator and determine the direction of beamforming by expanding the <Method A-2-1> described above.

For example, when twoPUCCH-PC-AdjustmentStates are configured to the terminal through RRC signaling, the terminal may identify whether closedLoopIndex is configured to i0 (0) or i1 (1), based on the 1-bit value (e.g., 0 or 1) of the Closed loop indicator field included in DCI (e.g., DCI format 2_2).

FIGS. 20 and 21 illustrate an inter-slot repetition scenario and an intra-slot repetition scenario.

In the following description, a method in which the power adjustment command indicated by the TPC command is applied according to the repetitive PUCCH resource configuration will be described in detail in consideration of both of the above scenarios. The configuration of two Spatialrelationinfo in Method B-3-1, Method B-3-2, and Method B-3-3 proposed below may mean that two or more beamforming directions for repetitive PUCCH transmission are configured to the terminal based on methods A-2-1, A-2-2, and A-2-3 described above and the like.

<Method B-3-1>

The bit width of the field including the TPC command (a value indicating the degree of increase or decrease of power by using a value of $\delta_{\text{PUCCH},b,f,c}$) information in DCI format 1_0, 1_1, or 1_2 may be assigned to 2 bits (TPC command for scheduled PUCCH). In the case that it is determined with the same bit width as in a general method, if two Spatialrelationinfo for configuring the beamforming direction to the repetitive PUCCH resource are configured as in various embodiments described in method A-1/A-2-1/A-2-2/A-2-3, a method for applying power adjustment for PUCCH transmission may be required.

For example, if the value of the TPC command field in the DCI received by the terminal is 00, the terminal may equally apply power reduction to all PUCCH resources with different spatialrelationinfo scheduled in the PDCCH while repeating. In this case, the reduction amount may be determined by configuring the value of accumulated $\delta_{\text{PUCCH},b,f,c}$ in the equation for determining the PUCCH transmission power described in Table 34 above to -1 (dB). In addition, if the value of the TPC command field in the DCI received by the terminal is 01, the terminal may apply to maintain the same power for all PUCCH resources with different spatialrelationinfo scheduled in the DCI while repeating. In this case, the reduction amount may be determined by configuring the value of Accumulated $\delta_{\text{PUCCH},b,f,c}$ in the equation for determining the PUCCH transmission power to 0 (dB). In addition, if the value of the TPC command field in the DCI received by the terminal is 10 or 11, the terminal may apply the same power increase to all PUCCH resources with different spatialrelationinfo scheduled in DCI while repeating. In this case, the increase amount may be determined by configuring the value of Accumulated $\delta_{\text{PUCCH},b,f,c}$ in the equation for determining the PUCCH transmission power to 1/3 (dB).

As another example, if the value of the TPC command field in the DCI received by the terminal is 00, the terminal may repeatedly recursively apply power reduction to all PUCCH resources with different spatialrelationinfo scheduled in DCI while repeating. In this case, the reduction amount may be configured by configuring the value of Accumulated $\delta_{\text{PUCCH},b,f,c}$ in the equation for determining the PUCCH transmission power may be configured to -1 (dB) to reflect the reduction or increase by the number of repetitive transmission. In addition, if the value of the TPC command field in the DCI received by the terminal is 10 or 11, the terminal may recursively repeatedly apply the power increase to all repetitive PUCCH resources scheduled in the DCI. In this case, the increase amount can be configured to reflect the reduction or increase by the number of times of repetitive transmission by configuring the value of Accumulated $\delta_{\text{PUCCH},b,f,c}$ in the equation for determining the PUCCH transmission power to 1/3 (dB).

<Method B-3-2>

The bit width of the field including the TPC command (a value indicating the degree of increase or reduction of power by using a value of $\delta_{PUCCH,b,f,c}$) information in DCI format 1_0, 1_1, or 1_2 may be assigned to 3 bits (TPC command for scheduled PUCCH). When two Spatialrelationinfo for configuring the beamforming direction in the PUCCH resource that is repeated as in the various embodiments described in Method A-1/A-2-1/A-2-2/A-2-3 are configured, a method of applying power adjustment for the PUCCH transmission may be required.

For example, if the first 1-bit field (e.g., LSB or MSB) of the 3 bits is 0, it may be interfered as information indicating to correspond to a first PUCCH resource allocated to be transmitted first (corresponding to both a case in which in a higher layer, the SpatialMapping scheme is configured to cyclicMapping and a case in which the SpatialMapping scheme is configured to sequentialMapping) or the PUCCH resource corresponding to SpatialrelationinfoId1 described in method A-2-1/A-2-2/A-2-3 above. If the first 1-bit field (e.g., LSB or MSB) of the 3 bits is 1, it is interpreted as information indicating to correspond to a second PUCCH resource allocated to be transmitted second (a case in which the SpatialMapping scheme is configured to cyclicMapping in the higher layer) or information indicating to correspond to the PUCCH resource corresponding to SpatialrelationinfoId2 described in method A-2-1/A-2-2/A-2-3 above. It may be understood that the PUCCH resources repeatedly transmitted from the third thereafter are applied in conjunction according to the above-described SpatialMapping configuration scheme. The remaining 2 bits of the TPC field may be equally applied as in the embodiment of Method B-1.

For another example, the closed loop indicator (1 bit) described in <Method A-2-1> is configured in the first 1-bit field (e.g., LSB or MSB) among the 3 bits, and the terminal identifies 1 bit corresponding to the closed loop indicator and determine the beamforming direction by expanding the <Method A-2-1> described above.

For example, when twoPUCCH-PC-AdjustmentStates is configured to the terminal through RRC signaling, the terminal may identify whether closedLoopIndex is configured with i0 (0) or i1(1) based on the 1-bit value (e.g., 0 or 1) of the closed loop indicator field included in DCI (e.g., DCI format 2_2) and determine the beamforming direction through the identification.

<Method B-3-3>

The bit width of the field including the TPC command (a value indicating the degree of increase or reduction of power by using a value of $\delta_{PUCCH,b,f,c}$) information in DCI format 1_0, 1_1, or 1_2 may be assigned to 4 bits (TPC command for scheduled PUCCH). When two Spatialrelationinfo for configuring the beamforming direction in the PUCCH resource that is repeated as in the various embodiments described in Method A-1/A-2-1/A-2-2/A-2-3 are configured, a method of applying power adjustment for the PUCCH transmission may be required.

For example, the first 1-bit field (e.g., LSB or MSB) among the 4 bits may include information for the first PUCCH resource allocated to be transmitted first (corresponding to both a case in which the SpatialMapping scheme is configured to cyclicMapping in a higher layer and a case in which the SpatialMapping scheme is configured to sequentialMapping) or for a PUCCH resource (e.g., PUCCH#1-1, PUCCH#1-3 PUCCH#2-1, PUCCH #2-2) corresponding to the SpatialrelationinfoId1 described in method A-2-1/A-2-2/A-2-3 above. In the case in which the first bit of the TPC field (e.g., LSB or MSB) received by the terminal is 0, the terminal determines that the TPC operation of the last two bits of the TPC field is not applied, and in the case in which if the first bit of the TPC field is 1, the terminal may determine that the TPC operation of the last two bits of the TPC field is applied. The second 1 bit in the TPC field consisting of 4 bits may include information for the second PUCCH resource allocated to be transmitted second (a case in which the SpatialMapping scheme is configured to cyclicMapping in the higher layer) or for a PUCCH resource (e.g., PUCCH#1-2, PUCCH#1-4, PUCCH#2-3, PUCCH#2-4) corresponding to Spatialrelationinfo-Id2 described in the above method A-2-1/A-2-2/A-2-3. In the case that the second 1 bit of the TPC field received by the terminal is 0, the terminal determines that the TPC operation of the last two bits field of the TPC field is not applied, and in the case that the second 1 bit of the TPC field received by the terminal is 1, the terminal determines that the TPC operation of the last two bits field of the TPC field is applied.

In the above description, it has been described that the first 2 bits of the 4 bits field are mapped to each PUCCH resource, but in various embodiments, at least one of 00 and 11 in the first 2 bits of the TPC field is mapped to PUCCH#1-1 to #1-4 resources of 20-30 of FIG. 20, 01 may be mapped to PUCCH#1-1, #1-3 resources, and 10 may be mapped to PUCCH#1-2, #1-4 resources. The last 2 bits of the TPC can be applied in the same way as in the embodiment of method B-1.

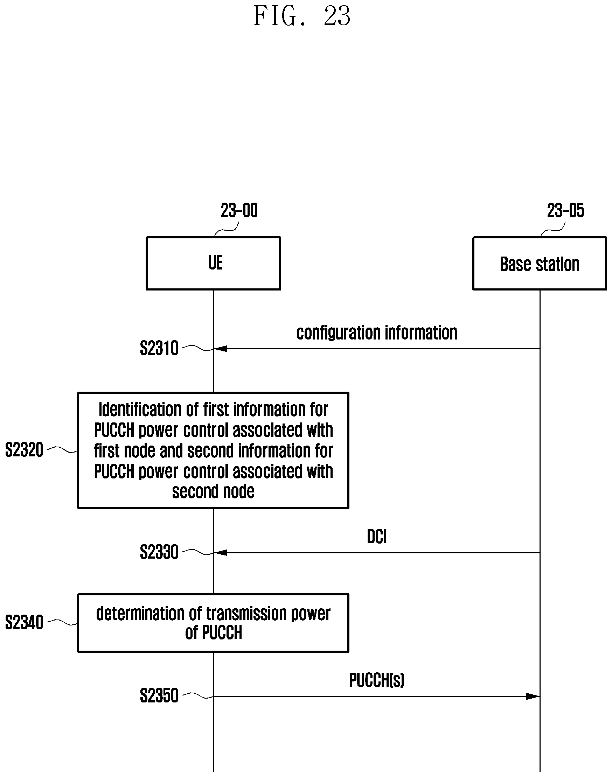

FIG. 23 illustrates an example of a signaling procedure between a terminal 23-00 and a base station 23-05 in a wireless communication system according to an embodiment of the disclosure. It is assumed that the terminal and base station in FIG. 23 can operate according to the above-described proposed method and/or embodiment (e.g., method A-1/A-2-1/A-2-2/A-2-3/ method B-1B-2-1B-2-2B-2-3B-3-1B-3-2B-3-3, etc.).

The base station may be a generic term for an object that transmits/receives data to and from a terminal. For example, the base station may be a concept including one or more TRPs (or cell, transmission point, panel, node, TP, beam and/or transmission direction). For example, the base station may be a concept including TRP-1(TRP#1) and TRP-2(TRP#2) described in FIG. 20 and FIG. 21. In addition, the TRP-1(TRP#1) may correspond to a first node, and the TRP-2(TRP#2) may correspond to a second node. The first and second nodes may be concepts included in the base station, and may be controlled by the base station.

The terminal may receive configuration information related to physical uplink control channel (PUCCH) power control (S2310). That is, the base station may transmit configuration information related to the PUCCH power control to the terminal. The configuration information may be transmitted through radio resource control (RRC) signaling.

For example, the configuration information may correspond to at least one of the above-described PUCCH-SpatialRelationInfo, PUCCH-SpatialRelationInfo-r16, PUCCH-SpatialRelationInfo-r17, spatialRelationInfoToAddModList, spatialRelationInfoToAddModListExt, and spatialRelationInfoToAddModList2.

For example, the configuration information may include first information associated with the first node and second information associated with the second node. For example, each of the first information and the second information may include an identifier (e.g., pucch-SpatialRelationInfoId) of each information and a closed loop index (closedloopindex). Also, the first closed-loop index included in the first information and the second closed-loop index included in the second information may be configured to different values.

The terminal may identify the first information for PUCCH power control associated with the first node and the second information for PUCCH power control associated with the second node on a basis of the configuration information (S2320).

For example, as shown in Table 32 above, the first information for PUCCH power control associated with the first node may include pucch-SpatialRelationInfoId1 and corresponding pucch-PathlossReferenceRS-Id1, p0-PUCCH-Id1, and ClosedLoopIndex1. In addition, the second information for PUCCH power control associated with the second node may include pucch-SpatialRelationInfoId2 and corresponding pucch-PathlossReferenceRS-Id2, p0-PUCCH-Id2 and ClosedLoopIndex2. The terminal may identify that two or more beamforming directions are configured based on the first information and the second information.

The terminal may receive downlink control information (DCI) (S2330). That is, the base station may transmit the DCI to the terminal. The DCI may include a first bit field corresponding to the first information and a second bit field corresponding to the second information, which are associated with a transmit power control (TPC) command.

The terminal may determine the transmission power of the PUCCH based on the first information, the second information, and the DCI (S2340).

For example, the transmission power of the PUCCH associated with the first node may be determined based on the first information and the DCI, and the transmission power of the PUCCH associated with the second node may be determined based on the second information and the DCI.

The terminal may transmit the PUCCH based on the determined transmission power (S2350). That is, the base station may receive the PUCCH to which the determined transmission power is applied from the terminal.

For example, the terminal may transmit the PUCCH in a first resource through the first node using the transmission power determined based on the first information and the DCI. In addition, the terminal may transmit the PUCCH in a second resource through the second node using the transmission power determined based on the second information and the DCI. In this case, the first resource and the second resource may be located in different slots or in non-overlapping time intervals in one slot.

For example, although not illustrated in FIG. 23, the terminal may receive information on the number of repetitive transmissions of the PUCCH. The terminal may repeatedly transmit the PUCCH in non-overlapping time resources by the number of repetitive transmissions. i) The transmission power determined based on the first information and the DCI and ii) the transmission power determined based on the second information and the DCI may be applied to the PUCCH resources that are repeatedly transmitted according to a cyclic mapping (cyclicmapping) scheme or a sequential mapping (sequenticalMapping) scheme. For example, according to the cyclic mapping scheme, the transmission power determined based on the first information and the DCI may be applied to the odd-numbered PUCCH transmission, and the transmission power determined based on the second information and the DCI may be applied to the even-numbered PUCCH transmission. Alternatively, according to the sequential mapping method, the transmission power determined based on the first information and the DCI may be applied to (the number of repetitive transmissions/2) PUCCHs transmitted first in the time axis, and the transmission power determined based on the second information and the DCI may be applied to the remaining PUCCHs.

Although not illustrated in FIG. 23, the terminal may receive activation information for activating the configuration information for the PUCCH resource through medium access control-control element (MAC-CE) signaling. That is, the base station may transmit the activation information to the terminal. Based on the activation information, the identifier (e.g., PUCCH resource ID) of the PUCCH resource and a plurality of configuration information identifiers (e.g., Spatial Relation Info ID 1 and Spatial Relation Info ID 2) corresponding to the PUCCH resource may be indicated.

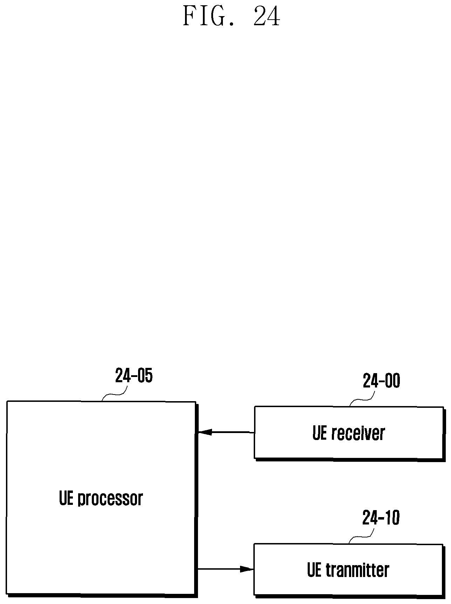

FIG. 24 is a view illustrating a structure of a terminal in a wireless communication system according to an embodiment of the disclosure.

With reference to FIG. 24, the terminal may include a transceiver 24-00, a memory 24-05, and a processor 24-10. The transceiver 24-00 and processor 24-10 of the terminal may operate according to the above-described communication method of the terminal. However, the components of the terminal are not limited to the above-described example. For example, the terminal may include more or fewer components than the above-described components. In addition, the transceiver 24-00, the memory 24-05, and the processor 24-10 may be implemented in the form of a single chip.

The transceiver 24-00 may transmit and receive signals to and from the base station. Here, the signal may include control information and data. To this end, the transceiver 24-00 may include an RF transmitter that up-converts and amplifies a frequency of a transmitted signal, an RF receiver that amplifies a received signal with low noise and down-converts a frequency, and the like. However, this is only an embodiment of the transceiver 24-00, and components of the transceiver 24-00 are not limited to the RF transmitter and the RF receiver.

In addition, the transceiver 24-00 may receive a signal through a wireless channel, output a signal to the processor 24-10, and transmit a signal output from the processor 24-10 through the wireless channel.

The memory 24-05 may store programs and data necessary for the operation of the terminal. In addition, the memory 24-05 may store control information or data included in signals transmitted and received by the terminal. The memory 24-05 may be composed of storage media such as ROM, RAM, hard disk, CD-ROM, and DVD, or a combination of storage media. Also, there may be a plurality of memories 24-05.

In addition, the processor 24-10 may control a series of processes so that the terminal can operate according to the above-described embodiment. For example, the processor 24-10 may control the components of the terminal to receive a DCI composed of two layers and simultaneously receive a plurality of PDSCHs. There may be a plurality of processors 24-10, and the processor 24-10 may perform a component control operation of the terminal by executing a program stored in the memory 24-05.

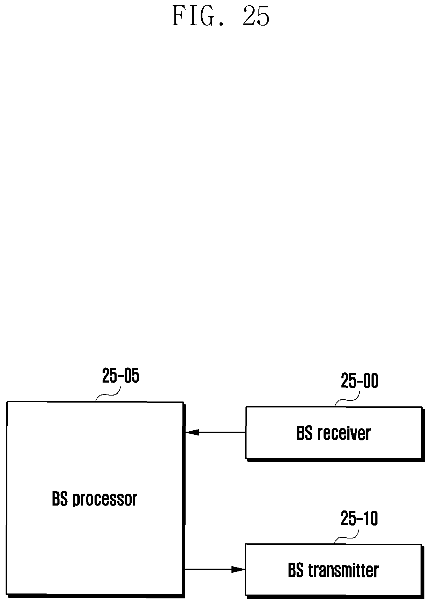

FIG. 25 is a view illustrating a structure of a base station in a wireless communication system according to an embodiment of the disclosure.

With reference to FIG. 25, the base station may include a transceiver 25-00, a memory 25-05, and a processor 25-10. The transceiver 25-00 and processor 25-10 of the base station may operate according to the above-described communication method of the base station. However, the components of the base station are not limited to the above-described example. For example, the base station may include more or fewer components than the above-described components. In addition, the transceiver 25-00, the memory 25-05, and the processor 25-10 may be implemented in the form of a single chip.

The transceiver 25-00 may transmit and receive signals to and from the terminal. Here, the signal may include control information and data. To this end, the transceiver 25-00 may include an RF transmitter that up-converts and amplifies a frequency of a transmitted signal, an RF receiver that amplifies a received signal with low noise and down-converts a frequency, and the like. However, this is only an embodiment of the transceiver 25-00, and components of the transceiver 25-00 are not limited to the RF transmitter and the RF receiver.

In addition, the transceiver 25-00 may receive a signal through a wireless channel, output a signal to the processor 25-10, and transmit a signal output from the processor 25-10 through the wireless channel.

The memory 25-05 may store programs and data required for operation of the base station. In addition, the memory 25-05 may store control information or data included in signals transmitted and received by the base station. The memory 25-05 may be formed of a storage medium such as ROM, RAM, hard disk, CD-ROM, and DVD, or a combination of storage media. Also, there may be a plurality of memories 25-05.

The processor 25-10 may control a series of processes so that the base station can operate according to the above-described embodiment. For example, the processor 25-10 may control each component of the base station to constitute and transmit DCIs of two layers including allocation information for a plurality of PDSCHs. There may be a plurality of processors 25-10, and the processors 25-10 may perform component control operations of the base station by executing a program stored in the memory 25-05.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings have been presented to easily explain the technical contents of the disclosure and help understanding of the disclosure, and are not intended to limit the scope of the disclosure. That is, it will be apparent to those skilled in the art that other modifications and changes may be made thereto on the basis of the technical idea of the disclosure. Further, the above respective embodiments may be employed in combination, as necessary. For example, one embodiment of the disclosure may be partially combined with other embodiments to operate a base station and a terminal. As an example, embodiment 1 and 2 of the disclosure may be combined with each other to operate a base station and a terminal. Further, although the above embodiments have been described on the basis of the FDD LTE system, other variants based on the technical idea of the embodiments may also be implemented in other communication systems such as TDD LTE, 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

Further, in methods of the disclosure, some or all of the contents of each embodiment may be combined without departing from the essential spirit and scope of the disclosure.

**Claims**

1. A method for a terminal to transmit an uplink channel in a wireless communication system, the method comprising:

   receiving configuration information related to a physical uplink control channel (PUCCH) power control through a radio resource control (RRC) signaling;
   identifying first information for a PUCCH power control associated with a first node, and second information for a PUCCH power control associated with a second node, based on the configuration information,;
   receiving downlink control information (DCI), which is associated with a transmit power control (TPC) command and includes a first bit field corresponding to the first information and a second bit field corresponding to the second information;
   determining transmission power of a PUCCH based on the first information, the second information, and the DCI; and
   transmitting the PUCCH based on the determined transmission power.

2. The method of claim 1, further comprising:

   receiving activation information for activating the configuration information for a PUCCH resource through medium access control-control element (MAC-CE) signaling,
   wherein an identifier of the PUCCH resource and a plurality of configuration information identifiers corresponding to the PUCCH resource are indicated based on the activation information.

3. The method of claim 1, wherein the configuration information includes the first information associated with the first node and the second information associated with the second node,

   each of the first information and the second information includes an identifier of each information and a closed loop index , and
   a first closed loop index included in the first information and a second closed loop index included in the second information are configured to different values.

4. The method of claim 1, wherein transmitting the PUCCH based on the determined transmission power includes:

transmitting the PUCCH in a first resource through the first node using a transmission power determined based on the first information and the DCI; and
transmitting the PUCCH in a second resource through the second node using a transmission power determined based on the second information and the DCI,
wherein the first resource and the second resource are located in different slots or non-overlapping time periods within one slot.

5. The method of claim 1, further comprising:

receiving information on a number of repetition transmissions of the PUCCH,
wherein the PUCCH is repeatedly transmitted in a non-overlapping time resource as many times as the number of repetition transmissions, and
a transmission power determined based on the first information and the DCI is applied to odd-numbered PUCCH transmission, and a transmission power determined based on the second information and the DCI is applied to even-numbered PUCCH transmission.

6. A method for a base station to receive an uplink channel in a wireless communication system, the method comprising:

transmitting configuration information related to a physical uplink control channel (PUCCH) power control through a radio resource control (RRC) signaling, wherein first information for a PUCCH power control associated with a first node and second information for a PUCCH power control associated with a second node are configured, based on the configuration information;
transmitting downlink control information (DCI), which is associated with a transmit power control (TPC) command and includes a first bit field corresponding to the first information and a second bit field corresponding to the second information; and
receiving a PUCCH to which transmission power determined based on the first information, the second information, and the DCI is applied.

7. The method of claim 6, further comprising:

transmitting activation information for activating the configuration information for a PUCCH resource through medium access control-control element (MAC-CE) signaling,
wherein an identifier of the PUCCH resource and a plurality of configuration information identifiers corresponding to the PUCCH resource are indicated based on the activation information.

8. The method of claim 6, wherein:

each of the first information and the second information includes an identifier of each information and a closed loop index , and
a first closed loop index included in the first information and a second closed loop index included in the second information are configured to different values.

9. The method of claim 6, wherein receiving the PUCCH includes:

receiving the PUCCH to which a transmission power determined based on the first information and the DCI is applied in a first resource through the first node; and
receiving the PUCCH to which a transmission power determined based on the second information and the DCI is applied in a second resource through the second node,
wherein the first resource and the second resource are located in different slots or non-overlapping time periods within one slot.

10. The method of claim 6, further comprising:

transmitting information on a number of repetition transmissions of the PUCCH,
wherein the PUCCH is repeatedly received in a non-overlapping time resource as many times as the number of repetition transmissions, and

a transmission power determined based on the first information and the DCI is applied to odd-numbered PUCCH reception, and a transmission power determined based on the second information and the DCI is applied to even-numbered PUCCH reception.

**11.** A terminal which transmits an uplink channel in a wireless communication system, the terminal comprising:

a transceiver to receive configuration information related to a physical uplink control channel (PUCCH) power control through a radio resource control (RRC) signaling; and
a processor configured to:

identify first information for the PUCCH power control associated with a first node, and second information for the PUCCH power control associated with a second node, based on the configuration information; and
control the transceiver to receive downlink control information (DCI), which is associated with a transmit power control (TPC) command and includes a first bit field corresponding to the first information and a second bit field corresponding to the second information;
determine transmission power of a PUCCH based on the first information, the second information, and the DCI; and
control the transceiver to transmit the PUCCH based on the determined transmission power; and
a memory coupled to the processor.

**12.** The terminal of claim 11, wherein the processor controls the transceiver to receive activation information for activating the configuration information for a PUCCH resource through medium access control-control element (MAC-CE) signaling,
wherein an identifier of the PUCCH resource and a plurality of configuration information identifiers corresponding to the PUCCH resource are indicated based on the activation information.

**13.** The terminal of claim 11, wherein the configuration information includes the first information associated with the first node and the second information associated with the second node,

each of the first information and the second information includes an identifier of each information and a closed loop index, and
a first closed loop index included in the first information and a second closed loop index included in the second information are configured to different values.

**14.** A base station which receives an uplink channel in a wireless communication system, the base station comprising:

a transceiver;
a processor; and
a memory coupled to the processor and to store instructions for operations executed by the processor,
wherein the processor controls the transceiver to:

transmit configuration information related to a physical uplink control channel (PUCCH) power control for configuring first information for the PUCCH power control associated with a first node and second information for the PUCCH power control associated with a second node, through a radio resource control (RRC) signaling;
transmit downlink control information (DCI), which is associated with a transmit power control (TPC) command and includes a first bit field corresponding to the first information and a second bit field corresponding to the second information; and
receive a PUCCH to which transmission power determined based on the first information, the second information, and the DCI is applied.

**15.** The base station of claim 14, wherein the processor controls the transceiver to transmit activation information for activating the configuration information for a PUCCH resource through medium access control-control element (MAC-CE) signaling,
wherein an identifier of the PUCCH resource and a plurality of configuration information identifiers corresponding to the PUCCH resource are indicated based on the activation information.

FIG. 1

One subframe (1-10)

$N_{symb}^{subframe,\mu}$ OFDM symbols

1 OFDM symbols (1-02)

1 subcarrier (1-03)

$K=N_{RB,x}^{max,\mu}N_{sc}^{RB}-1$

$N_{RB}^{\mu}N_{sc}^{RB}$ subcarriers

Resource block $N_{sc}^{RB}$ subcarriers (1-04)

Resource element (k,l) (1-01)

$K=0$

$\bar{l}=0$

$\bar{l}=14\cdot 2^{\mu}-1$

Frequency

Time

# FIG. 2

1 frame (2-00)

1 subframe (2-01)

| μ=0 (2-04) | 0 | 1 | 2 | 3 | 4 | 5 | 6 | 7 | 8 | 9 |

slot (2-02)

| μ=1 (2-05) | 0 | 1 | 2 | 3 | 4 | 5 | 6 | 7 | 8 | 9 | 10 | 11 | 12 | 13 | 14 | 15 | 16 | 17 | 18 | 19 |

slot (2-03)

EP 4 216 644 A1

# FIG. 3

FIG. 4

Duration
(4-04)

UE bandwidth part (4-10)

Frequency resource (4-03)

slot (4-20)

Frequency

Time

Control resource set #1 (4-01)

Control resource set #2 (4-02)

FIG. 5

1 symbol
(5-01)

DMRS
(5-05)

1 PRB (5-02)

CCE
(5-04)

REG
(5-03)

FIG. 6

| | |
|---|---|
| RA type 0 (6-00) | Bitmap |

6-15

| | | |
|---|---|---|
| RA type 1 (6-05) | Starting VRB | Length |

6-20      6-25

| | | |
|---|---|---|
| Both RA type 0 & 1 (6-10) | 1 bit for RA type indication | Max (payload for RA type 0, payload for RA type 1) |

6-30      6-35

FIG. 7

$$\mathrm{Slot}\left\lfloor n\cdot\frac{2^{\mu_{PDSCH}}}{2^{\mu_{PDCCH}}}\right\rfloor+K_0 \quad (7\text{-}10)$$

# FIG. 8

EP 4 216 644 A1

FIG. 9

# FIG. 10

Case 2-1]

PRI#2

PRI#1

PUCCH#1
(10-30)

PUCCH#2
(10-31)

PUCCH#1
(10-40)

PUCCH#2
(10-41)

Uplink

t

$K_1$ for PDSCH#1

$K_1$ for PDSCH#2

Downlink

PDCCH
(10-10)

PDCCH
(10-11)

PDSCH#1
(10-20)

PDSCH#2
(10-21)

Slot#n

Slot#n+1

t

Case 2-2]

Overlapped
symbol(s) within a slot

PUCCH#2
(10-60)

PUCCH#2
(10-61)

PUCCH#1
(10-50)

PUCCH#1
(10-51)

Slot#n-2

Slot#n

Slot#n+1

Uplink

t

One PUCCH having
higher-priority UCI
is transmitted.

Slot#n-1
(10-70)

EP 4 216 644 A1

# FIG. 11

## (11-05) ON-OFF transient time for FR1

**Start slot**

End of OFF power requirement

Start of ON power requirement

$10\,\mu s$
Transient period

**End slot**

End of ON power requirement

Start of OFF power requirement

$10\,\mu s$
Transient period

## (11-10) ON-OFF transient time for FR2

**Start slot**

End of OFF power requirement

Start of ON power requirement

$5\,\mu s$
Transient period

**End slot**

End of ON power requirement

Start of OFF power requirement

$5\,\mu s$
Transient period

# FIG. 12A

EP 4 216 644 A1

(12-05) Transient time, SRS sounded on the same antenna with PUSCH/PUCCH

| $N_0$ slot (Ant 'x') | $N_{+1}$ slot (Ant 'x') | SRS (Ant 'x') | $N_{+2}$ slot (Ant 'x') |

Start of $N_{+1}$ power
PUSCH/ PUCCH

End of $N_{+1}$ power
PUSCH/ PUCCH

Start of $N_{+2}$ power
PUSCH/ PUCCH

10μs
Transient period

10μs
Transient period

10μs
Transient period

(12-10) Transient time, SRS sounded on the different antenna with PUSCH/PUCCH

| $N_0$ slot (Ant 'x') | $N_{+1}$ slot (Ant 'x') | SRS (Ant 'y') | $N_{+2}$ slot (Ant 'x') |

Start of $N_{+1}$ power
PUSCH/ PUCCH

End of $N_{+1}$ power
PUSCH/ PUCCH

Start of $N_{+2}$ power
PUSCH/ PUCCH

10μs
Transient period

15μs
Transient period

15μs
Transient period

(12-15) Transient time between long and short subslots

| Long subslot N | Short subslot N+1 | Long subslot N+2 |

End of power     Start of power     End of power     Start of power

10μs
Transient period

10μs
Transient period

# FIG. 12B

(12-20) Transient time between short subslots. Numerology < 60kHz

| Short subslot N | Short subslot N+1 |

End of power          Start of power

10μs
Transient period

(12-25) Transient time between short subslots. Numerology = 60kHz

17.84μs                    17.84μs

| Short subslot | | Short subslot | |

End of OFF power
requirement

ON power
requirement

10μs
Transient period
will be taken
in the
blanked symbol

ON power
requirement

10μs
Transient period
will be taken
in the
blanked symbol

Start of OFF power
requirement

10μs
Transient period

# FIG. 13A

[13-05] Transient time, with PUSCH/PUCCH/SRS

| $N_0$ slot | $N_{+1}$ slot | SRS | $N_{+2}$ slot |

Start of $N_{+1}$ power
PUSCH/ PUCCH

Start of $N_{+2}$ power
PUSCH/ PUCCH

End of $N_{+1}$ power
PUSCH/ PUCCH

$5\mu s$
Transient period

$5\mu s$
Transient period

$5\mu s$
Transient period

[13-10] Transient time between long and short subslots

| $N_0$ slot | $N_{+1}$ slot | SRS | $N_{+2}$ slot |

Start of $N_{+1}$ power
requirement

Start of $N_{+2}$ power
PUSCH/ PUCCH

End of $N_{+1}$ power
PUSCH/ PUCCH

$5\mu s$
Transient period

$5\mu s$
Transient period

$5\mu s$
Transient period

# FIG. 13B

[13-15] Transient time between short subslots. Numerology < 120kHz

| Short subslot N | Short subslot N+1 |
|---|---|

End of power | Start of power

5μs
Transient period

[13-20] Transient time between short subslots. Numerology = 120kHz

8.93μs

| Short subslot | | Short subslot | |
|---|---|---|---|

End of OFF power requirement

ON power requirement

5μs
Transient period will be taken in the blanked symbol

ON power requirement

5μs
Transient period will be taken in the blanked symbol

Start of OFF power requirement

5μs
Transient period

EP 4 216 644 A1

## FIG. 14

Single cell LTE/NR (1400)     Carrier aggregation (1410)     Dual connectivity (1420)

**gNB**
- SDAP (1425)
- PDCP (1430)
- RLC (1435)
- MAC (1440)
- PHY (1445)

**UE**
- PHY (1450)
- MAC (1455)
- RLC (1460)
- PDCP (1465)
- SDAP (1470)

**gNB**
- SDAP
- PDCP
- RLC
- MAC
- PHY  ...  PHY

**UE**
- PHY  ...  PHY
- MAC
- RLC
- PDCP
- SDAP

**MgNB**
- SDAP
- PDCP
- RLC
- MAC
- PHY

**SgNB**
- RLC
- MAC
- PHY

**UE**
- PHY
- MAC
- RLC
- PDCP
- SDAP

**SgNB (UE)**
- PHY
- MAC
- RLC

EP 4 216 644 A1

FIG. 15

FIG. 16

EP 4 216 644 A1

# FIG. 17A

**17a. Option #1: HARQ-ACK for single-PDCCH NC-JT (17-00)**

FIG. 17B

17b. Option #2: joint HARQ-ACK (17-20)

EP 4 216 644 A1

## FIG. 17C

EP 4 216 644 A1

17c. Option #3: inter-slot TDMed separate HARQ-ACK (17-40)

PDCCH #1

PDCCH #N

17-45

PDSCH#1

PDSCH#N

17-46

PUCCH#1
(17-50)

PUCCH#2
(17-51)

uplink

downlink

Slot#0

Slot#1

Slot#2
(17-52)

Slot#3
(17-53)

# FIG. 17D

**17d. Option #4: intra-slot TDMed separate HARQ-ACK (17-60)**

EP 4 216 644 A1

# FIG. 17E

START

Receive PUCCH configuration information from base station through higher signaling — 1780

Receive at least one DCI from base station — 1781

Determine PUCCH resource in which HARQ-ACK information is transmitted — 1782

Transmit HARQ-ACK information in determined PUCCH resource — 1783

END

# FIG. 17F

```
        ┌─────────────┐
        │    START    │
        └──────┬──────┘
               │
               ▼
┌──────────────────────────────────┐  1785
│  Transmit PUCCH configuration    │
│  information to terminal through │
│  higher signaling                │
└──────────────┬───────────────────┘
               │
               ▼
┌──────────────────────────────────┐  1786
│   Transmit at least DCI to       │
│   terminal                       │
└──────────────┬───────────────────┘
               │
               ▼
┌──────────────────────────────────┐  1787
│   Receive HARQ-ACK information   │
│   in determined PUCCH resource   │
└──────────────┬───────────────────┘
               │
               ▼
        ┌─────────────┐
        │     END     │
        └─────────────┘
```

# FIG. 18A

Sub-slot based repetition (18-00)

Sub-slot length = 2 (18-05)

Offset = 1 symbol (18-10)

| Sub-slot #0 | Sub-slot #1 | Sub-slot #2 | Sub-slot #3 |
|---|---|---|---|
| PUCCH #x $0^{th}$ rep. | PUCCH #y $0^{th}$ rep. | PUCCH #x $1^{st}$ rep. | PUCCH #y $1^{st}$ rep. |

Slot #0

time

Repetition period: 2 subslots (18-15)

# FIG. 18B

Intra-sub-slot based repetition

(18-20) Repetition within a single sub-slot          Sub-slot length = 7

| Sub-slot #0 | | | Sub-slot #1 |
| Offset (18-25) | | No repetition | |

PUCCH #x 0th rep.          PUCCH #y 1st rep.

time

Slot #0

Startup symbol

(18-30) Repetition across multiple sub-slots          Sub-slot length = 7

| Sub-slot #0 | | | Sub-slot #1 | | |
| Offset (18-35) | No repetition | | Offset (18-35) | No repetition |

PUCCH 0th rep.     PUCCH 1st rep.          PUCCH 2nd rep.     PUCCH 3rd rep.

time

Slot #0

Startup symbol (18-40)          Startup symbol (18-40)

FIG. 18C

Repetition located at the sub-slot boundary

Sub-slot length = 7

Sub-slot #0          Sub-slot #1

                                          18-50

Offset

PUCCH        PUCCH        PUCCH
0th rep.     1st rep.     2nd rep.

Slot #0

time

Startup
symbol

EP 4 216 644 A1

# FIG. 19

[19-10] Mapping with L=1

| PUCCH 0th rep. | PUCCH 1st rep. | | PUCCH 2nd rep. | PUCCH 3rd rep. | | | → time |

TRP#0      TRP#1      TRP#0      TRP#1      time

[19-20] Mapping with L=2

| PUCCH 0th rep. | PUCCH 1st rep. | | PUCCH 2nd rep. | PUCCH 3rd rep. | | | → time |

TRP#0      TRP#0      TRP#1      TRP#1      time

EP 4 216 644 A1

# FIG. 20

Inter-slot repetition

# FIG. 21

## Intra-slot repetition

21-00

| PDCCH #2 | PDSCH #1 for TRP-1 | PDSCH #2 for TRP-1 | PDSCH #3 for TRP-2 | PDSCH #4 for TRP-2 | | PUCCH #0-1 (for TRP-1) | PUCCH #0-2 (for TRP-1) | PUCCH #0-3 (for TRP-1) | PUCCH #0-4 (for TRP-1') |

Slot#0 — Slot#1 — Slot#2

21-30

| PDCCH #2 | PDSCH #1 for TRP-1 | PDSCH #2 for TRP-1 | PDSCH #3 for TRP-2 | PDSCH #4 for TRP-2 | | PUCCH #1-1 (for TRP-1) | PUCCH #1-2 (for TRP-2) | PUCCH #1-3 (for TRP-1) | PUCCH #1-4 (for TRP-2) |

Slot#0 — Slot#1 — Slot#2

21-60

| PDCCH #2 | PDSCH #1 for TRP-1 | PDSCH #2 for TRP-1 | PDSCH #3 for TRP-2 | PDSCH #4 for TRP-2 | | PUCCH #2-1 (for TRP-1) | PUCCH #2-2 (for TRP-1) | PUCCH #2-3 (for TRP-2) | PUCCH #2-4 (for TRP-2) |

Slot#0 — Slot#1 — Slot#2

EP 4 216 644 A1

FIG. 22

| | | | |
|---|---|---|---|
| R | Serving Cell ID | BWP ID | OCt 1 |
| R | PUCCH resource ID1 | | OCt 2 |
| R | R | Spatial Relation Info ID 1 | OCt 3 |
| R | R | Spatial Relation Info ID 2 | OCt 3 |

...

| | | |
|---|---|---|
| R | PUCCH resource ID $_N$ | |
| R | R | Spatial Relation Info ID 1 |
| R | R | Spatial Relation Info ID 2 |

Oct 3N+1

# FIG. 23

23-00

UE

23-05

Base station

S2310 — configuration information

S2320 — Identification of first information for PUCCH power control associated with first node and second information for PUCCH power control associated with second node

S2330 — DCI

S2340 — determination of transmission power of PUCCH

S2350 — PUCCH(s)

FIG. 24

24-05

24-00

UE processor

UE receiver

24-10

UE tranmitter

# FIG. 25

25-05

25-00

**BS processor**

**BS receiver**

25-10

**BS transmitter**

## INTERNATIONAL SEARCH REPORT

| International application No. |
|---|
| **PCT/KR2021/014965** |

| A. | CLASSIFICATION OF SUBJECT MATTER |
|---|---|

**H04W 72/12**(2009.01)i; **H04L 5/00**(2006.01)i; **H04L 1/18**(2006.01)i; **H04B 7/06**(2006.01)i; **H04B 7/024**(2017.01)i

According to International Patent Classification (IPC) or to both national classification and IPC

| B. | FIELDS SEARCHED |
|---|---|

Minimum documentation searched (classification system followed by classification symbols)

H04W 72/12(2009.01); H04W 52/14(2009.01); H04W 52/36(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUCCH power control parameter, RRC, multi-TRP, TPC command, DCI, PUCCH tx power

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | NTT DOCOMO, INC. Discussion on MTRP for reliability. R1-2006719, 3GPP TSG-RAN WG1 Meeting #102-e. 07 August 2020. <br> See sections 2-2.3. | 1-15 |
| Y | VIVO. Discussion on enhancement on PDCCH, PUCCH, PUSCH in MTRP scenario. R1-2005364, 3GPP TSG-RAN WG1 Meeting #102-e. 08 August 2020. <br> See sections 4-4.4. | 1-15 |
| Y | QUALCOMM INCORPORATED. Enhancements on Multi-TRP for PDCCH, PUCCH and PUSCH. R1-2 006791, 3GPP TSG-RAN WG1 Meeting #102-e. 08 August 2020. <br> See sections 3-3.2; and figures 9-10. | 2-3,5,7-8,10,12-13,15 |
| A | US 2020-0053657 A1 (LENOVO (SINGAPORE) PTE. LTD) 13 February 2020 (2020-02-13) <br> See paragraphs [0132]-[0139]. | 1-15 |
| A | US 2019-0349964 A1 (ASUSTEK COMPUTER INC.) 14 November 2019 (2019-11-14) <br> See paragraphs [0308]-[0333]. | 1-15 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 January 2022** | **03 February 2022** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/014965**

| Patent document cited in search report | | | Publication date (day/month/year) | Patent family member(s) | | | Publication date (day/month/year) |
|---|---|---|---|---|---|---|---|
| US | 2020-0053657 | A1 | 13 February 2020 | CN | 112534888 | A | 19 March 2021 |
| | | | | CN | 112534889 | A | 19 March 2021 |
| | | | | CN | 112534892 | A | 19 March 2021 |
| | | | | EP | 3834504 | A1 | 16 June 2021 |
| | | | | EP | 3834505 | A1 | 16 June 2021 |
| | | | | EP | 3834509 | A2 | 16 June 2021 |
| | | | | US | 10660077 | B2 | 19 May 2020 |
| | | | | US | 1129148 | B2 | 21 September 2021 |
| | | | | US | 2020-0053710 | A1 | 13 February 2020 |
| | | | | US | 2020-0053724 | A1 | 13 February 2020 |
| | | | | WO | 2020-030974 | A2 | 13 February 2020 |
| | | | | WO | 2020-030974 | A3 | 22 May 2020 |
| | | | | WO | 2020-030978 | A1 | 13 February 2020 |
| | | | | WO | 2020-030982 | A1 | 13 February 2020 |
| US | 2019-0349964 | A1 | 14 November 2019 | CN | 110475360 | A | 19 November 2019 |
| | | | | EP | 3567967 | A1 | 13 November 2019 |
| | | | | EP | 3567967 | B1 | 24 February 2021 |
| | | | | US | 10952231 | B2 | 16 March 2021 |
| | | | | US | 2021-0160905 | A1 | 27 May 2021 |

Form PCT/ISA/210 (patent family annex) (July 2019)